(19) Europäisches Patentamt
European Patent Office
Office européen des brevets

(11) **EP 2 962 567 A1**

(12) **EUROPEAN PATENT APPLICATION**

(43) Date of publication:
**06.01.2016 Bulletin 2016/01**

(51) Int Cl.:
*A01N 63/00* [(2006.01)]  *A01N 63/02* [(2006.01)]
*A01P 3/00* [(2006.01)]  *A01P 7/04* [(2006.01)]
*A01N 25/00* [(2006.01)]

(21) Application number: **14175140.4**

(22) Date of filing: **01.07.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **BASF SE
67056 Ludwigshafen (DE)**

(72) Inventors:
• **Filajdic, Nenad
Raleigh, NC 27605 (US)**

• **Ranuva, Giridhar
Morrisville, NC 27560 (US)**
• **Reinot, Eda
Chapel Hill, NC 27517 (US)**
• **McFatrich, Charles
Chapel Hill, 27514 (US)**
• **Wilhelm, Ronald
65719 Hofheim (DE)**
• **Jabs, Thorsten
67454 Haßloch (DE)**

(54) **Ternary mixtures comprising biopesticides and at least two chemical insecticides**

(57) The present invention relates to mixtures comprising, as active components at least one bi-opesticide and a chemical fungicide and a chemical insecticide as defined herein and their use in crop protection especially as treatment of plant propagation materials.

**Description**

The present invention relates to mixtures comprising, as active components at least one biopesticide and at least two chemical insecticides as defined herein and their use in crop protection especially as treatment of plant propagation materials.

A pesticide is generally a chemical or biological agent (such as a virus, bacterium, antimicrobial or disinfectant) that through its effect deters, incapacitates, kills or otherwise discourages pests. Target pests can include insects, plant pathogens, weeds, mollusks, birds, mammals, fish, nematodes (roundworms), and microbes that destroy property, cause nuisance, spread disease or are vectors for disease. The term "pesticide" includes also plant growth regulators that alter the expected growth, flowering, or reproduction rate of plants; defoliants that cause leaves or other foliage to drop from a plant, usually to facilitate harvest; desiccants that promote drying of living tissues, such as unwanted plant tops; plant activators that activate plant physiology for defense of against certain pests; safeners that reduce unwanted herbicidal action of pesticides on crop plants; and plant growth promoters that affect plant physiology e.g. to increase plant growth, biomass, yield or any other quality parameter of the harvestable goods of a crop plant.

Biopesticides have been defined as a form of pesticides based on micro-organisms (bacteria, fungi, viruses, nematodes, etc.) or natural products (compounds, such as metabolites, proteins, or extracts from biological or other natural sources) (U.S. Environmental Protection Agency: http://www.epa.gov/pesticides/biopesticides/). Biopesticides fall into two major classes, microbial and biochemical pesticides:

(1) Microbial pesticides consist of bacteria, fungi or viruses (and often include the metabolites that bacteria and fungi produce). Entomopathogenic nematodes are also classified as microbial pesticides, even though they are multicellular.
(2) Biochemical pesticides are naturally occurring substances or or structurally-similar and functionally identical to a naturally-occurring substance and extracts from biological sources that control pests or provide other crop protection uses as defined below, but have non-toxic mode of actions (such as growth or developmental regulation, attractents, repellents or defence activators (e.g. induced resistance) and are relatively non-toxic to mammals.

Examples for biochemical pesticides include, but are not limited to semiochemicals (insect pheromones and kairomones), natural plant and insect regulators, naturally-occurring repellents and attractants, and proteins (e.g. enzymes).

Inoculants also known as microbial or soil inoculants are agricultural amendments that use beneficial endophytes (microbes) to promote plant health. The rhizobacteria commonly applied as inoculants include nitrogen-fixers and phosphate-solubilisers which enhance the availability of the macronutrients nitrogen and phosphorus to the host plant. Such bacteria are commonly referred to as plant growth promoting rhizobacteria (PGPR).

Biopesticides for use against crop diseases have already established themselves on a variety of crops. For example, biopesticides already play an important role in controlling downy mildew diseases. Their benefits include: a 0-Day Pre-Harvest Interval, the ability to use under moderate to severe disease pressure, and the ability to use in mixture or in a rotational program with other registered pesticides.

A major growth area for biopesticides is in the area of seed treatments and soil amendments. Biopesticidal seed treatments are e.g. used to control soil borne fungal pathogens that cause seed rots, damping-off, root rot and seedling blights. They can also be used to control internal seed borne fungal pathogens as well as fungal pathogens that are on the surface of the seed. Many biopesticidal products also show capacities to stimulate plant host defenses and other physiological processes that can make treated crops more resistant to a variety of biotic and abiotic stresses or can regulate plant growth. Many biopesticidal products also show capacities to stimulate plant health, plant growth and/or yield enhancing activity.

The term "plant health" is to be understood to denote a condition of the plant and/or its products which is determined by several indicators alone or in combination with each other such as yield (e. g. increased biomass and/or increased content of valuable ingredients), plant vigor (e. g. improved plant growth and/or greener leaves ("greening effect")), quality (e. g. improved content or composition of certain ingredients) and tolerance to abiotic and/or biotic stress.The above identified indicators for the health condition of a plant may be interdependent, or may result from each other.

However, biopesticides under certain conditions can also have disadvantages such as high specificity: which may require an exact identification of the pest/pathogen and the use of multiple products to be used, slow speed of action (thus making them unsuitable if a pest outbreak is an immediate threat to a crop), variable efficacy due to the influences of various biotic and abiotic factors (since biopesticides are usually living organisms, which bring about pest/pathogen control by multiplying within the target insect pest/pathogen) and resistance development.

Practical agricultural experience has shown that the repeated and exclusive application of an individual active component in the control of harmful fungi, insects or other pests leads in many cases to a rapid selection of those fungus strains or pest isolates which have developed natural or adapted resistance against the active component in question. Effective control of these fungi, insects or other pests with the active component in question is then no longer possible. Another typical problem arising in the field of pest control lies in the need to reduce the dosage rates of the active ingredient in order to reduce or avoid unfavorable environmental or toxicological effects whilst still allowing effective pest control.

It is an object of the present invention overcome the abovementioned disadvantages and to provide, with a view to effective resistance management and effective control of phytopathogenic harmful fungi, insects or other pests or to effective plant growth promotion, plant stress tolerance and/or seed germination, at application rates which are as low as possible, compositions which, at a reduced total amount of active compounds applied, have improved activity against the harmful fungi, insects or other pests or improved plant growth promoting, stress tolerance inducing and/or improved seeed germination activity (synergistic mixtures) and a broadened activity spectrum, in particular for certain indications.

This is particularly visible if application rates for the beforementioned mixtures of pesticides are used where the individual components show no or virtually no activity.

We have accordingly found that this object is achieved by the mixtures and compositions defined herein, as active components at least one nitrogen-fixing bacterium and at least one biopesticide and a chemical pesticide as defined herein.

Thus, the present invention relates to mixtures comprising, as active components,

1) at least one biopesticide I from groups IA) and IB) selected from:

IA) other microbial and biochemical pesticides selected from: *Bacillus amyloliquefaciens, B. amyloliquefaciens* ssp. *plantarum, B. firmus, B. pumilus, B. subtilis, B. simplex, B. megaterium, B. altitudinis, B. mojavensis, B. mycoides, B. solisalsi, Burkholderia* spp., *Coniothyrium minitans, Paecilomyces lilacinus, Paenibacillus alvei, Pasteuria nishizawa, Pasteuria usage, Penicillium bilaiae, Pseudomonas fluorescens, Pseudomonas putida;* abscisic acid, jasmonic acid, its salts and derivatives thereof, cis-jasmone, methyl jasmonate; harpin protein;
IB) Nitrogen-fixing bacteria selected from: *Bradyrhizobium japonicum, B. elkanii, Bradyrhizobium* spp., *Bradyrhizobium* sp. (Arachis), *Bradyrhizobium* sp. (Vigna), *B. liaoningense, B. lupine; Azospirillum brasilense, A. amazonense, A. lipoferum, A. irakense, A. halopraeferens; Delftia acidovorans, Glomus intraradices; Mesorhizobium* spp., *Mesorhizobium ciceri, M. huakii, M. loti; Rhizobium leguminosarum* bv. *phaseoli, R. leguminosarum* bv. *trifolii, R. leguminosarum* bv. *viciae, R. tropici, Sinorhizobium meliloti;*

and
2) at least one chemical insecticide II from groups J) to O) selected from:

J) GABA antagonist compounds selected from: fipronil, ethiprole, vaniliprole, pyrafluprole, pyriprole, 5-amino-1-(2,6-dichloro-4-methyl-phenyl)-4-sulfinamoyl-1H-pyrazole-3-carbothioic acid amide;
K) lepidopteran-specific ryanodine receptor inhibitors selected from: chlorantraniliprole and flubendiamide;
L) cross-spectrum ryanodine receptor inhibitor: cyantraniliprole;
M) pyrethroid sodium channel modulators selected from: tefluthrin, bifenthrin, cypermethrin, alpha-cypermethrin, cyfluthrin, beta-cyfluthrin, lambda-cyhalothrin, deltamethrin, esfenvalerate, etofenprox, fenvalerate, flucythrinate, permethrin;
N) systemically-active neonicotinoid compounds: clothianidin, imidacloprid, thiamethoxam, dinotefuran, acetamiprid, flupyradifurone, thiacloprid, triflumezopyrim, nitenpyram;
O) Acetylcholinesterase inhibitors, chloride channel activators and sulfoximines: sulfoxaflor, acephate, chlorpyrifos, thiodicarb, abamectin, spinosad.

and
3) at least one chemical insecticide III from the groups J') to O') selected from:

J') GABA antagonist compounds selected from: fipronil, ethiprole, vaniliprole, pyrafluprole, pyriprole, 5-amino-1-(2,6-dichloro-4-methyl-phenyl)-4-sulfinamoyl-1H-pyrazole-3-carbothioic acid amide;
K')lepidopteran-specific ryanodine receptor inhibitors selected from: chlorantraniliprole and flubendiamide;
L') cross-spectrum ryanodine receptor inhibitor: cyantraniliprole;
M') pyrethroid sodium channel modulators selected from: tefluthrin, bifenthrin, cypermethrin, alpha-cypermethrin, cyfluthrin, beta-cyfluthrin, lambda-cyhalothrin, deltamethrin, esfenvalerate, etofenprox, fenvalerate, flucythrinate, permethrin;
N')systemically-active neonicotinoid compounds: clothianidin, imidacloprid, thiamethoxam, dinotefuran, acetamiprid, flupyradifurone, thiacloprid, triflumezopyrim, nitenpyram;

O') Acetylcholinesterase inhibitors, chloride channel activators and sulfoximines: sulfoxaflor, acephate, chlorpyrifos, thiodicarb, abamectin, spinosad;

with the proviso that the chemical insecticide II and chemical insecticide III are not identical.

Herein, the other microbial and biochemical pesticides IA are considered biopesticides that do not belong to the nitrogen-fixing bacteria IB and have some kind of pesticidal activity. As regards the activity of the mixtures of the invention and compositions thereof, preference is given to the following embodiments defining the nitrogen-fixing bacteria IB and the other microbial and biochemical pesticides IB, the chemical insecticides II, the chemical insecticides III, their ratios and application rates, wherein the embodiments have independently of each other or more preferably in combination including also each combination of meanings for any subset of embodiments:

According to one embodiment, the mixtures comprise at least one biopesticide I and at least one chemical insecticide II and at least one chemical insecticide III in a synergistically effective amount. According to another embodiment, the mixtures comprise one biopoesticide I and one chemical insecticide II and one chemical insecticide III in a synergistically effective amount.

The invention also relates to a method for controlling phytopathogenic harmful fungi, insects, nematodes or other pests using mixtures of at least one biopesticide I and at least one chemical insecticide II and at least one chemical insecticide III and to the use of biopesticides I, chemical insecticides II and chemical insecticides III for preparing such mixtures, and to compositions comprising these mixtures and plant propagation materials, in particular seeds, comprising these mixtures respectively coated with such mixtures.

Moreover, we have found that simultaneous, that is joint or separate, application of at least one biopesticide I and at least one chemical insecticide II and at least one chemical insecticide III or successive application of at least one biopesticide I and at least one chemical insecticide II and at least one chemical insecticide III allows better control of harmful pests than is possible with the individual components alone (synergistic mixtures).

When applying at least one biopesticide I and at least one chemical insecticide II and at least one chemical insecticide III sequentially, the time between the applications may vary e. g. between 2 hours to 7 days. Also a broader range is possible ranging from 0.25 hour to 30 days, preferably from 0.5 hour to 14 days, particularly from 1 hour to 7 days or from 1.5 hours to 5 days, even more preferred from 2 hours to 1 day. Preferably, the biopesticide I is applied as last treatment.

Component 1) in the mixtures comprise biopesticides I which can be separated into the microbial pesticides which comprise bacterial and fungal microorganisms and biochemical pesticides selected from abscisic acid, jasmonic acid, its salts and derivatives thereof, cis-jasmone, methyl jasmonate; and harpin protein.

In case component 1) is a microbial pesticide, component 1) in the mixtures embraces not only the isolated, pure cultures of the biopesticide I as defined herein, but also its cell-free extract having pesticidal activity, preferably an alcohol- or ketone-based extract, its suspensions in a whole broth culture or as a metabolite-containing supernatant or a purified metabolite obtained from a whole broth culture of the microorganism or microorganism strain.

Jasmonic acid, its salts (jasmonates) or derivatives include without limitation potassium, sodium, lithium, ammonium, dimethylammonium, isopropylammonium, diolammonium and diethtriethanolammonium jasmonate; and also jasmonic acid methyl ester, jasmonic acid amide, jasmonic acid methylamide, jasmonic acid-L-amino acid (amide-linked) conjugates (e. g. conjugates with L-isoleucine, L-valine, L-leucine, or L-phenylalanine), 12-oxo-phytodienoic acid, coronatine, coronalon, coronafacoyl-L-serine, coronafacoyl-L-threonine, methyl esters of 1-oxo-indanoyl-isoleucine, methyl esters of 1-oxo-indanoyl-leucine, cis-jasmone, linoleic acid or derivatives thereof, and combinations of any of the above.

As used herein, "whole culture broth" refers to a liquid culture of a microorganism containing vegetative cells and/or spores suspended in the culture medium and optionally metabolites produced by the respective microorganism.

As used herein, "cell-free extract" refers to an extract of the vegetative cells, spores and/or the whole culture broth of a microorganism comprising cellular metabolites produced by the respective microorganism obtainable by cell disruption methods known in the art such as solvent-based (e. g. organic solvents such as alcohols sometimes in combination with suitable salts), temperature-based, application of shear forces, cell disruption with an ultrasonicator. The desired extract may be concentrated by conventional concentration techniques such as drying, evaporation, and centrifugation or alike. Certain washing steps using organic solvents and/or water-based media may also be applied to the crude extract preferably prior to use.

As used herein, the term "metabolite" refers to any component, compound, substance or byproduct (including but not limited to small molecule secondary metabolites, polyketides, fatty acid synthase products, non-ribosomal peptides, ribosomal peptides, proteins and enzymes) produced by a microorganism (such as fungi and bacteria, in particular the strains of the invention) that has any beneficial effect as described herein such as pesticidal activity or improvement of plant growth, water use efficiency of the plant, plant health, plant appearance, or the population of beneficial microorganisms in the soil around the plant activity herein.

According to a further embodiment, component 1) is selected from *Bacillus amyloliquefaciens, B. amyloliquefaciens* ssp. *plantarum, B. firmus, B. pumilus, B. subtilis, B. simplex, B. megaterium; Burkholderia* spp., *Coniothyrium minitans, Paecilomyces lilacinus, Paenibacillus alvei, Penicillium bilaiae, Pasteuria nishizawa;* cis-jasmone, methyl jasmonate and harpin protein.

According to a further embodiment, component 1) is selected from *Bacillus amyloliquefaciens* ssp. *plantarum, B. pumilus, B. subtilis* and *B. simplex.*

According to a further embodiment, component 1) is selected from *Bradyrhizobium japonicum, Bradyrhizobium elkanii* and *Azospirillum brasilense.*

According to a further embodiment, the mixtures comprise at least four active cmponents, wherein component 1) is selected from *Bradyrhizobium japonicum, Bradyrhizobium elkanii, Azospirillum brasilense; Bacillus amyloliquefaciens, B. amyloliquefaciens* ssp. *plantarum, B. firmus, B. pumilus, B. subtilis, B. simplex, B. megaterium; Burkholderia* spp., *Coniothyrium minitans, Paecilomyces lilacinus, Paenibacillus alvei, Penicillium bilaiae, Pasteuria nishizawa;* and wherein components 2) and 3) are as defined herein; and wherein component 4) is at least one biochemical pesticide selected from abscisic acid, harpin protein, cis-jasmone and methyl-jasmonate; more preferably cis-jasmone or methyl-jasmonate, in particular methyl jasmonate.

As used herein, "isolate" refers to a pure microbial culture separated from its natural origin, such an isolate obtained by culturing a single microbial colony. An isolate is a pure culture derived from a heterogeneous, wild population of microorganisms.

As used herein, "strain" refers to isolate or a group of isolates exhibiting phenotypic and/or genotypic traits belonging to the same lineage, distinct from those of other isolates or strains of the same species.

The biopesticides I, their preparation and their pesticidal activity e. g. against harmful fungi or insects are known (e-Pesticide Manual V 5.2 (ISBN 978 1 901396 85 0) (2008-2011); http:// www.epa.gov/opp00001/biopesticides/, see product lists therein; http://www.omri.org/omri-lists, see lists therein; Bio-Pesticides Database BPDB http://sitem.herts.ac.uk/aeru/bpdb/, see A to Z link therein). The biopesticides I may have fungicidal, bactericidal, viricidal, plant defense activator, insecticidal, acaricidal, molluscidal, pheromone, nematicidal, plant stress reducing, plant growth regulator, plant growth promoting and/or yield enhancing activity.

Many of these biopesticides have been deposited under deposition numbers mentioned herein (the prefices refer to the acronym of the respective culture collection), are referred to in literature, registered and/or are commercially available: *Azospirillum amazonense* SpY2 (DN: BR 11140; Proc. 9th Int. and 1st Latin American PGPR meeting, Quimara, Medellín, Colombia 2012, p. 60, ISBN 978-958-46-0908-3), *A. brasilense* AZ39 (also called Az 39; INTA Az-39; Eur. J. Soil Biol 45(1), 28-35, 2009), *A. brasilense* XOH (e. g. AZOS from Xtreme Gardening, USA or RTI Reforestation Technologies International; USA), A. *brasilense* BR 11002 (Proc. 9th Int. and 1st Latin American PGPR meeting, Quimara, Medellín, Colombia 2012, p. 60, ISBN 978-958-46-0908-3), A. *brasilense* Sp245 (BR 11005; e. g. in GELFIX Gramíneas from BASF Agricultural Specialties Ltd., Brazil), A. *brasilense* strains Ab-V5 and Ab-V6 (e. g. in AzoMax from Novozymes BioAg Produtos papra Agricultura Ltda., Quattro Barras, Brazil or SimbioseMaíz® from Simbiose-Agro, Cruz Alta, RS, Brazil; Plant Soil 331, 413-425, 2010), A. *lipoferum* BR 11646 (Sp31) (Proc. 9th Int. and 1st Latin American PGPR meeting, Quimara, Medellín, Colombia 2012, p. 60), *Bacillus altitudinis* 41 KF2b (DSM 21631; Int. J. Syst. Evol. Microbiol. 56(7), 1465-1473, 2006), *Bacillus amyloliquefaciens* strains AP-136 (NRRL B-50614 and B-50330), AP-188 (NRRL B-50615 and B-50331), AP-218 (NRRL B-50618), AP-219 (NRRL B-50619 and B-50332), and AP-295 (NRRL B-50620 and B-50333) all known from US 8,445,255; *B. amyloliquefaciens* IT-45 (CNCM I-3800) (e. g. Rhizocell C from ITHEC, France), *B. amyloliquefaciens* IN937a (J. Microbiol. Biotechnol. 17(2), 280-286, 2007; e. g. BioYield® from Gustafson LLC, TX, USA), *B. amyloliquefaciens* spp. *plantarum* D747 (US 20130236522 A1; FERM BP-8234; e. g. Double Nickel™ 55 WDG or Double Nickel™ LC from Certis LLC, USA), *B. amyloliquefaciens* spp. *plantarum* FZB24 isolated from plant pathogen-infested soil of a sugar beet field in Brandenburg, Germany (also called SB3615; DSM ID 96-2; J. Plant Dis. Prot. 105, 181-197, 1998; e. g. Taegro® from Novozyme Biologicals, Inc., USA), *B. amyloliquefaciens* ssp. *plantarum* FZB42 isolated from plant pathogen-infested soil of a sugar beet field in Brandenburg, Germany (J. Plant Dis. Prot. 105, 181-197, 1998; DSM 23117; e. g. RhizoVital® 42 from AbiTEP GmbH, Berlin, Germany), *B. amyloliquefaciens* ssp. *plantarum* GB03 (also called GBO3; ATCC SD-1397; Phytopathol. 86(11), S36, 1996; e. g. Kodiak® or BioYield® from Gustafson, Inc., USA; or Companion® from Growth Products, Ltd., White Plains, NY 10603, USA), *B. amyloliquefaciens* ssp. *plantarum* MBI600 also referred to as 1430 (NRRL B-50595; Int. J. Microbiol. Res. 3(2) (2011), 120-130; US 2012/0149571 A1; e. g. Integral®, Subtilex® NG from BASF Corp., USA), *B. amyloliquefaciens* spp. *plantarum* TJ1000 (also called 1 BE; CA 2471555 A1; ATCC BAA-390; e. g. QuickRoots™ from TJ Technologies, Watertown, SD, USA), *B. cereus* CNCM I-1562 (US 6,406,690), *B. chitinosporus* AQ746 isolated from roots in Saskatchewan, Canada (NRRL B-21618; US 5,733,544; AgraQuest now Bayer CropScience LP, USA), *B. firmus* CNCM I-1582 (WO 2009/126473, WO 2009/124707, US 6,406,690; e. g. Votivo® from Bayer CropScience LP, USA), *B. megaterium* strains H491 (NRRL B-50769), M018 (NRRL B-50770) and J142 (NRRL B-50771) all known from US 2014/0051571 A1 from Marrone Biolnnovations, Inc., USA; *B. mojavensis* AP-209 (NRRL B-50616; US 8,445,255), B. *mycoides* AQ726 (NRRL B-21664; US 5,906,818; from Bayer Crop Science, Germany), B. *mycoides* strain J (e.g. BmJ WG from Certis, USA against potato virus Y), *B. pumilus* GB34 (ATCC 700814; e. g. YieldShield® from Gustafson LLC, TX, USA), *B. pumilus* GHA 180 isolated from apple tree rhizosphere in Mexico (IDAC 260707-01; e. g. in PRO-MIX® BX from Premier Horticulture, 1, avenue Premier, Rivie're-du-Loup, Quebec, Canada G5R6C1), *B. pumilus* KFP9F (NRRL B-50754; WO 2014/029697; e. g. BAC-UP or FUSION-P from BASF Agricultural Specialities (Pty) Ltd., South Africa), *B. pumilus* INR-7 otherwise referred to as BU-F22 and BU-F33 (NRRL B-50185, NRRL B-50153; US 8,445,255), *B. pumilus* QST 2808 (NRRL B-30087; e. g. Sonata® or Ballad® Plus from AgraQuest Inc., USA), *B. solisalsiAP*-217 (NRRL B-50617; US 8,445,255), *B. subtilis* CX-9060 (Federal Register 77(7), 1633-1637; by Certis U.S.A., L.L.C.), *B. subtilis* FB17 also called UD 1022 or UD10-22 isolated from red beet roots in North America (ATCC PTA-11857; System. Appl. Microbiol. 27, 372-379, 2004; US 2010/0260735; WO 2011/109395); *B. subtilis* GB07 (Phytopathol. 86(11), S36, 1996; Epic® from Gustafson, Inc., USA), *B. subtilis* QST-713 isolated from a California peach orchard in 1995 (NRRL B-21661; e. g. Rhapsody®, Serenade® MAX or Serenade® ASO from AgraQuest Inc., USA); *Bradyrhizobium* sp. (e. g. Vault® from BASF Corp., USA), B. sp. (*Arachis*) CB1015 presumably originally collected in India (IITA 1006, USDA 3446; from Australian Inoculants Research Group; http://www.qaseeds.com.au/inoculant_applic.php). *B.* sp. (*Arachis*) strains deposited at SEMIA and known from FEMS Microbiol. Letters 303(2), 123-131,2010; Revista Brasileira de Ciencia do Solo 35(3), 739-742, 2011, ISSN 0100-0683: SEMIA 6144, SEMIA 6462 (BR 3267) and SEMIA 6464 (BR 3262); *B.* sp. (*Vigna*) PNL01 (Bisson and Mason, April 29, 2010, Project report, Worcester Polytechnic Institute, Worcester, MA, USA: http://www.wpi.edu/Pubs/E-project/Available/E-project-042810-163614/; e. g. Vault® Peanut Liquid from BASF Corp., USA), *B. elkanii* SEMIA 587 (Appl. Environ. Microbiol. 73(8), 2635, 2007; e. g. GELFIX 5 from BASF Agricultural Specialties Ltd., Brazil), *B. elkanii* SEMIA 5019 (=29W; Appl. Environ. Microbiol. 73(8), 2635, 2007; e. g. GELFIX 5 from BASF Agricultural Specialties Ltd., Brazil), *B. elkanii* USDA 76, *B. elkanii* USDA 94*B. elkanii* USDA 3254, *B. elkanii* U-1301 and U-1302 (e. g. Nitragin® Optimize from Novozymes Bio As S.A., Brazil, or Nlitrasec for soybean from LAGE y Cia, Brazil), *B. japonicum* (e. g. VAULT® from BASF Corp., USA), *B. japonicum* 532c isolated from Wisconsin field (Nitragin 61A152; Can. J. Plant. Sci. 70, 661-666, 1990; e. g. in Rhizoflo®, Histick®, Hicoat® Super from BASF Agricultural Specialties Ltd., Canada), *B. japonicum* E-109 variant of strain USDA 138 (INTA E109, SEMIA 5085; Eur. J. Soil Biol. 45, 28-35, 2009; Biol. Fertil. Soils 47, 81-89, 2011), *B. japonicum* G49 (MSDJ G49; C. R. Acad. Agric. Fr. 73, 163-171, 1987); *B. japonicum* strains deposited at SEMIA known from Appl. Environ. Microbiol. 73(8), 2635, 2007: SEMIA 566 isolated from North American inoculant in 1966 and used in Brazilian commercial inoculants from 1966 to 1978, SEMIA 586 originally isolated in Maryland, USA, in 1961 but received from Australia in 1966 and used in Brazilian inoculants in 1977 (CB 1809, USDA 136, Nitragin 61A136, RCR 3407), SEMIA 5079 a natural variant of SEMIA 566 used in commercial inoculants since 1992 (CPAC 15; e. g. GELFIX 5 or ADHERE 60 from BASF Agricultural Specialties Ltd., Brazil), *B. japonicum* SEMIA 5080 a natural variant of SEMIA 586 used in commercial inoculants since 1992 (CPAC 7; e. g. GELFIX 5 or ADHERE 60 from BASF Agricultural Specialties Ltd., Brazil); *B. japonicum* TA-11 (TA11 NOD[+]) (NRRL B-18466; US 5,021,076; Appl. Environ. Microbiol. 56, 2399-2403, 1990; e. g. VAULT® NP, from BASF Corp., USA), *B. japonicum* strains deposited at USDA known from US 7,262,151 and Appl. Environ. Microbiol. 60, 940-94, 1994: USDA 3 isolated from *Glycine max* in Virginia (USA) in 1914, USDA 31 (= Nitragin 61A164) od Serogroup 31 isolated from *Glycine max* in Wisconsin (USA) in 1941, USDA 76 isolated from plant passage of strain USDA 74 (Serogroup 76) which has been isolated from *G. max* in California (USA) in 1956, USDA 110 (= IITA 2121, SEMIA 5032, RCR 3427, ARS I-110 and Nitragin 61A89; Serogroup 110) isolated from *G. max* in Florida in 1959, USDA 121 isolated from *G. max* in Ohio (USA) in 1965 (Crop Science 26(5), 911-916, 1986); *B. japonicum* WB74 (e. g. Eco-Rhiz Soya from Plant Health Products (Pty) Ltd, South Africa; or Soybean inoculant from Stimuplant CC, South Africa), *B. lupini* LL13 isolated from *Lupinus iuteus* nodules from French soils (deposited at INRA, France; http://agriculture.gouv.fr/IMG/pdf/ch20060216.pdf), *B. lupini* strains from Australia and known from Palta J.A., Berger J.B. (eds), Proceed. 12th International Lupin Conference, 14-18 Sept. 2008, Fremantle, Western Australia, International Lupin Association, Canterbury, New Zealand, 47-50, http://www.lupins.org/pdf/conference/2008/Agronomy%20and%20Production/John%20 Howieson%20and%20G%20OHara.pdf; Appl. Environ. Microbiol. 71, 7041-7052, 2005; Australian J. Exp. Agricult. 36(1), 63-70, 1996: strains WU425 isolated in Esperance, Western Australia from a non-Australian legume *Ornithopus compressus,* WSM471 isolated *from Ornithopus pinnatus* in Oyster Harbour, Western Australia, and WSM4024 isolated from lupins in Australia by CRS during a 2005 survey; *Burkholderia sp.* A396 (NRRL B-50319; WO 2013/032693; Marrone Bio Innovations, Inc., USA), *Coniothyrium minitans* CON/M/91-08 (WO 1996/021358; DSM 9660; e. g. Contans® WG, Intercept® WG from Prophyta Biologischer Pflanzenschutz GmbH, Germany), *Delftia acidovorans* RAY209 (ATCC PTA-4249; WO 2003/57861; e. g. BioBoost® from Brett Young, Winnipeg, Canada), *Glomus intraradices* (e. g. Myc® 4000 from ITHEC, France), *Glomus intraradices* RTI-801 (e. g. MYKOS from Xtreme Gardening, USA or RTI Reforestation Technologies International; USA), harpin preferably alpha-beta protein (Science 257, 85-88, 1992; e. g. Messenger™ or HARP-N-Tek from Plant Health Care pic, U.K.), *Mesorhizobium ciceri* CC1192 collected in Israel from Cicer arietinum nodules (UPM 848, CECT 5549; Can. J. Microbiol. 48, 279-284, 2002; from Horticultural Research Station, Gosford, Australia), *M. huakuii* HN3015 isolated from *Astralagus sinicus* in a rice-growing field of Southern China (World J. Microbiol. Biotechn. 23(6), 845-851, 2007, ISSN 0959-3993), *M. loti* CC829 isolated from *L. ulginosus* nodules in USA (NZP 2012; commerical inoculant for *Lotus pedunculatus* and *L. ulginosus* in Australia), and *M. loti* SU343 isolated from host nodules in USA (commercial inoculant for *Lotus corniculatus* in Australia); *Paecilomyces lilacinus* 251 isolated from infected nematode eggs in the Philippines (AGAL 89/030550; WO1991/02051; Crop Protection 27, 352-361, 2008; e. g. BioAct®/MeloCon® from Prophyta, Germany), *P. lilacinus* DSM 15169 (e. g. Nemata® SC from Live Systems Technology S.A., Colombia), *P. lilacinus* BCP2 (NRRL 50756; Acta agriculturae Slovenica, 101 - 2, 263-275, 2013; e. g. PL Gold from BASF Agricultural Specialities (Pty) Ltd., South Africa), *Paenibacillus alvei* NAS6G6 (WO 2014/029697; NRRL B-50755; e.g. BAC-UP from BASF Agricultural Specialities (Pty) Ltd., South Africa in mixture with *Bacillus pumilus* KFP9F), *Pasteuria* sp. ATCC PTA-9643 (WO 2010/085795), *Pasteuria* sp. Ph3 isolated from turfgrass soil samples collected at the DeBary Golf Course in central Florida (ATCC SD-5832; WO 2012/064527; for control of *Hoplolaimus galeatus* nematode from Pasteuria Bioscience, Inc. now Syngenta Crop Protection, LLC, USA), *Pasteuria* sp. Pr3 isolated from soil samples collected in the southeastern United States (ATCC SD-5834; for control of *Rotylenchulus reniformis* nematode potentially of species *P. ramosa;* Naviva® ST from Syngenta Crop Protection, LLC, USA), *P. nishizawae* (WO 2010/80619), *P. nishizawae* Pn1 (Federal Register 76(22), 5808, February 2, 2011; ATCC SD-5833; e.g. Clariva™ PN from Syngenta Crop Protection, LLC, USA), *P. penetrans* (US 5,248,500; Del Monte Corp.), *P. ramosa* (WO 2010/080619), *P. thornea* (WO 2010/080619), *P. usgae* BL1 (ATCC SD-5835; J. Nematol. 42(2): 87-90, 2010; ibid. 43(2), 101-109, 2011; e. g. Econem™ for control of *Belonolaimus longicaudatus* from Pasteuria BioScience now Syngenta sold by Harell's LLC, Florida, USA for use on turf for management of *Belonolaimus longicaudatus), Penicillium bilaiae* (also called *P. bilaii)* strains ATCC 18309 (= ATCC 74319), ATCC 20851 and/or ATCC 22348 (= ATCC 74318) originally isolated from soil in southern Alberta (Fertilizer Res. 39, 97-103, 1994; Can. J. Plant Sci. 78(1), 91-102, 1998; US 5,026,417, WO 1995/017806; e. g. Jump Start®, Provide® from Novozymes Biologicals BioAg Group, Canada), *P. bilaiae* NRRL 50162 and NRRL 50169 (WO 2010/037228); *Pseudomonas fluorescens* (e.g. in Bio Cure-B from T. Stanes & Company Limited, India; or in Blight-End from Agri Naturals, Mumbai, India), *P. fluorescens* A506 (Phytopathol 97(2), 244-249, 2007; ATCC 31948; e. g. BlightBan® from NuFarm Americas, Inc., Morrisville, NC, USA), *P. fluorescens* CHA0 (Mol. Plant Microbe Interact. 5(1), 4-13, 1992), *P. fluorescens* CL 145A (J. Invertebr. Pathol. 113(1), 104-14, 2013; e. g. Zequanox® from Marrone BioInnovations, Davis, CA, USA), *P. fluorescens* NCIB 12089 (EP 0210734 A1; Victus® from Mauri Laboratories, 9 Moorebank Ave., Moorebank, NSW 2170, Australia), *P. fluorescens* Pf-5 isolated from root surface of cotton (ATCC BAA-477), *P. fluorescens* WCS374 isolated from potato rhizosphere (Biol. Control 85(10), 1301-1305, 1995; e.g. BioCoat® from S & G Seeds, The Netherlands, e.g. to suppress Fusarium wilt), *P. putida* ATCC 202153 of biotype B (Embrapa Trigo Accession No. 63/88 4 B; WO 2004/024865), *Rhizobium leguminosarum* bv. *phaseoli* (e. g. RHIZO-STICK from BASF Corp., USA), *R. leguminosarum bv. phaseoli* RG-B10 (USDA 9041; from Int. J. Syst. Bacteriol. 46(1), 240-244, 1996; Int. J. Syst. Evol. Microbiol. 50, 159-170, 2000; e. g. Nodulator® Dry Bean in Africa, HiStick NT Dry bean in US, and Nodulator® Dry Bean in Canada from BASF Corp., USA, or BASF Agricultural Specialties Ltd., Canada), *R. l.* bv. *trifolii* CB782 (Nodulaid® peat for Kenya white clover from BASF Agricultural Specialties Pty Ltd, Australia), *R. l.* bv. *trifolii* CC275e (Nodulaid® peat for NZ white clover from BASF Agricultural Specialties Pty Ltd, Australia), *R. l.* bv. *trifolii* CC283b (ICMP 4073b; Proc. New Zealand Grassland Assoc. 56, 101-105, 1994; Microbiol. 153, 3184-3195, 2007; Nodulaid® peat for Caucasian clover from BASF Agricultural Specialties Pty Ltd, Australia), *R. l.* bv. *trifolii* CC1099 (Inoculating Legumes: A Practical Guide, ed. Grain Research and Development Corporation, 2012, ISBN 978-1-921779-45-9; e. g. Nodulaid® peat for sainfoin from BASF Agricultural Specialties Pty Ltd, Australia), *R. l.* bv. *trifolii* RP113-7 (Appl. Environ. Microbiol. 44(5), 1096-1101, 1982; e. g. Dormal® from BASF Corp., USA), R. *l.* bv. *trifolii* TA1 (Appl. Environ. Microbiol. 49(1), 127-131, 1985; e. g. Nodulaid® peat for white clover from BASF Agricultural Specialties Pty Ltd, Australia), *R. l.* bv. *trifolii* strain WSM1325 isolated in 1993 from the Greek Island of Serifos (Stand. Genomic Sci. 2(3), 347-356, 2010; Inoculating Legumes: A Practical Guide, ed. Grain Research and Development Corporation, 2012, ISBN 978-1-921779-45-9; Nodulaid® peat for sub clover and Nodulator® granules for sub clover both from BASF Agricultural Specialties Pty Ltd, Australia, for a broad range of annual clovers of Mediterranean origin), *R. l.* bv. *trifolii* strain WSM2304 isolated from *Trifolium polymorphum* in Uruguay in 1998 (Stand. Genomic Sci. 2(1), 66-76, 2010), *R. l.* bv. *viciae* P1NP3Cst being a Streptomycin-resistant mutant of P1NP3C isolated from pea root nodules in Bretenière, France (also referred to as 1435; New Phytol. 176, 680-690, 2007; *ibid.* 179(1), 224-235, 2008; e. g. Nodulator® PL Peat Granule from BASF Corp., USA; or Nodulator® XL PL from BASF Agricultural Specialties Ltd., Canada), *R. l.* bv. *viciae* RG-P2 also called P2 isolated from pea root nodules in Sakatchewan, Canada (e. g RhizUP peat for peas and lentils in Canada from BASF Agricultural Specialties Ltd., Canada), *R. l.* bv. *viciae* SU303 (e. g. Nodulaid® Group E from BASF Agricultural Specialties Pty Ltd, Australia), *R. l.* bv. *viciae* WSM1455 (e. g. Nodulaid® Group F from BASF Agricultural Specialties Pty Ltd, Australia), *R. tropici CC511* (Agronomy, N.Z. 36, 4-35, 2006; e. g. Nodulaid® peat for common bean from BASF Agricultural Specialties Pty Ltd, Australia)*R. tropici* CIAT 899 isolated in Colombia (SEMIA 4077; Rev. Ciênc. Agron. 44(4) Fortaleza Oct./Dec. 2013; e. g. Nitrafix® FEIJÃO peat for beans from BASF Agricultural Specialties Ltd., Brazil in mixture with strain SEMIA 4080), *R. tropici* H12 isolated in Planaltina, DF, Cerrados, Brazil (SEMIA 4088; Appl. Microbiol. Biotechnol. 93(5), 2035-49, 2012; e. g. Nitrafix® FEIJÃO from BASF Agricultural Specialties Ltd., Brazil), *R. tropici* PRF 81 isolated in Paraná, Brazil (SEMIA 4080; Soil Biology & Biochemistry 39, 867-876, 2007; BMC Microbiol. 12, 84, 2012; Nitrafix® FEIJÃO peat for beans from BASF Agricultural Specialties Ltd., Brazil in mixture with strain SEMIA 4077), *Sinorhizobium meliloti* RCR2011 also called 2011 or SU47 (MSDJ0848; Mol. Gen. Genomics 272, 1-17, 2004; e. g. Dormal® Alfalfa & Luzerne from BASF Corp., USA; Nitragin® Gold from Novozymes Biologicals BioAg Group, Canada).

Strains can be obtained from culture collections and deposition centers (listed by their acronym = strain prefix here: http://www.wfcc.info/ccinfo/collection/by_acronym/) such as strains with prefices AGAL or NMI from: National Measurement Institute, 1/153 Bertie Street, Port Melbourne, Victoria, Australia 3207; ATCC: American Type Culture Collection, 10801 University Blvd., Manassas, VA 20110-2209, USA; BR: Embrapa Agrobiology Diazothrophic Microbial Culture Collection, P.O.Box 74.505, Seropedica, Rio de Janeiro, 23.851-970, Brazil; CABI or IMI: CABI Europe - International Mycological Institute, Bakeham Lane, Egham, Surrey, TW20 9TYNRRL, UK; CB: The CB Rhizobium Collection, School of Environment and Agriculture, University of Western Sydney, Hawkesbury, Locked Bag 1797, South Penrith Distribution Centre, NSW 1797, Australia; CBS: Centraalbureau voor Schimmelcultures, Fungal Biodiversity Centre, Uppsalaan 8, PO Box 85167, 3508 AD Utrecht, Netherlands; CC: Division of Plant Industry, CSIRO, Canberra, Australia; CNCM: Collection Nationale de Cultures de Microorganismes, Institute Pasteur, 25 rue du Docteur Roux, F-75724 PARIS Cedex 15; CPAC: Embrapa-Cerrados, CX.Postal 08223,Planaltina,DF,73301-970, Brazil; DSM: Leibniz-Institut DSMZ-Deutsche Sammlung von Mikroorganismen und Zellkulturen GmbH, Inhoffenstraße 7 B, 38124 Braunschweig, Germany; IDAC: International Depositary Authority of Canada Collection, Canada; ICMP: Interntional Collection of Micro-organisms from Plants, Landcare Research, Private Bag 92170, Auckland Mail Centre, Auckland 1142, New Zealand; IITA: IITA, PMB 5320, Ibadan, Nigeria; INTA: Agriculture Collection Laboratory of the Instituto de Microbiologia y Zoologia Agricola (IMYZA), Instituto Nacional de Tecnologi'a Agropecuaria (INTA), Castelar, Argentina; MSDJ: Laboratoire de Microbiologie des Sols, INRA, Dijon, France; MUCL: Mycothèque de l'Université catholique de Louvain, Croix du Sud 2, box L7.05.06, 1348 Louvain-la-Neuve, Belgium; NCIMB or NICB: The National Collections of Industrial and Marine Bacteria Ltd., Torry Research Station, P.O. Box 31, 135 Abbey Road, Aberdeen, AB9 8DG, Scotland; Nitragin: Nitragin strain collection, The Nitragin Company, Milwaukee, Wisconsin, USA, NRRL or ARSEF (collection of entomopathogenic fungi): ARS Culture Collection of the National Center for Agricultural Utilization Research, Agricultural Research Service, U.S. Department of Agriculture, 1815 North University Street, Peoria, Illinois 61604, USA; NZP: Department of Scientific and Industrial Research Culture Collection, Applied Biochemistry Division, Palmerston North, New Zealand; PPRI: ARC-Plant Protection Research Institute, Private Bag X134, Queenswood Pretoria, Gauteng, 0121, South Africa; SEMIA: FEPAGRO-Fundação Estadual de Pesquisa Agropecuária, Rua Gonçalves Dias, 570, Bairro Menino Deus, Porto Alegre/RS, Brazil; SRDI: SARDI, Adelaide, South Australia; USDA: U.S. Department of Agriculture, Agricultural Research Service, Soybean and Alfalfa Research Laboratory, BARC-West, 10300 Baltimore Boulevard, Building 011, Beltsville, MD 20705, USA (Beltsville Rhiz. Cult. Catalog: http://pdf.usaid.gov/_pdf_docs/PNAAW891.pdf); and WSM: Murdoch University, Perth, Western Australia. Further strains may be found at: http://gcm.wfcc.info/; http://www.landcaresearch.co.nz/resources/ collections/ icmp.

According to a further embodiment, component 1) in the mixtures comprises at least one biopesticides I strain from group IA) selected from *Bacillus altitudinis* 41 KF2b (IA.1), *B. amyloliquefaciens* AP-136 (IA.2), *B. amyloliquefaciens* AP-188 (IA.3), *B. amyloliquefaciens* AP-218 (IA.4), *B. amyloliquefaciens* AP-219 (IA.5), *B. amyloliquefaciens* AP-295 (IA.6), *B. amyloliquefaciens* ssp. *plantarum* D747 (IA.7), *B. amyloliquefaciens* ssp. *plantarum* FZB24 (IA.8), *B. amyloliquefaciens* ssp. *plantarum* FZB42 (IA.9), *B. amyloliquefaciens* ssp. *plantarum* GB03 (IA.10), *B. amyloliquefaciens* ssp. *plantarum* MBI600 (IA.11), *B. amyloliquefaciens* ssp. *plantarum* QST-713 (IA.12), *B. amyloliquefaciens* ssp. *plantarum* TJ1000 (IA.13), *B. firmus* CNCM I-1582 (IA.14), *B. megaterium* H491 (IA.15), *B. megaterium* J142 (IA.16), *B. megaterium* M018 (IA.17), *B. mojavensis* AP-209 (IA.18), *B. mojavensis* SR11 (IA.19), *B. mycoides* AQ726 (IA.20), *B. mycoides* J (IA.21), *B. pumilus* GB34 (IA.22), *B. pumilus* GHA 180 (IA.23), B. pumilus INR-7 (IA.24), *B. pumilus* KFP9F (IA.25), *B. pumilus* QST 2808 (IA.26), *B. simplex* ABU 288 (IA.27), *B. subtilis* CX-9060 (IA.28), *B. subtilis* FB17 (IA.29), *B. subtilis* GB07 (IA.30), *Burkholderia* sp. A396 (IA.31), *Coniothyrium minitans* CON/M/91-08 (IA.32), *Paecilomyces lilacinus* 251 (IA.33), *Paecilomyces lilacinus* BCP2 (IA.34), *Paenibacillus alvei* NAS6G6 (IA.35), *Paenibacillus polymyxa* PKB1 (IA.36), *Paenibacilllus popilliae* 14F-D80 (IA.37), *P. popilliae* KLN 3 (IA.38), *Pasteuria nishizawae* Pn1 (IA.39), *Pasteuria sp*, Ph3 (IA.40), *Pasteuria* sp. Pr3 (IA.41), *Pasteuria* sp. ATCC PTA-9643 (IA.42), *Pasteuria usgae* BL1 (IA.43), *Penicillium bilaiae* NRRL 50162 (IA.44), *P. bilaiae* NRRL 50169 (IA.45), *P. bilaiae* ATCC 18309 (IA.46), *P. bilaiae* ATCC 20851 (IA.47), *P. bilaiae* ATCC 22348 (IA.48), *Pseudomonas fluorescens* A506 (IA.49), *P. fluorescens* ATCC 13525 (IA.50), *P. fluorescens* CHA0 (IA.51), *P. fluorescens* CL 145A (IA.52), *P. fluorescens* NCIB 12089 (IA.53), *P. fluorescens* Pf-5 (IA.54), *P. fluorescens* WCS374 (IA.55), *P. fluorescens* (IA.56) and *P. putida* ATCC 202153 (IA.57).

According to a further embodiment, component 1) in the mixtures comprises at least one biopesticides I strain from group IA) selected from *Bacillus amyloliquefaciens* ssp. *plantarum* D747 (IA.7), *B. amyloliquefaciens* ssp. *plantarum* FZB24 (IA.8), *B. amyloliquefaciens* ssp. *plantarum* FZB42 (IA.9), *B. amyloliquefaciens* ssp. *plantarum* MBI600 (IA.11), B. *amyloliquefaciens* ssp. *plantarum* QST-713 (IA.12), *B. amyloliquefaciens* ssp. *plantarum* TJ1000 (IA.13), *B. firmus* CNCM I-1582 (IA.14), *B. pumilus* GHA 180 (IA.23), B. pumilus INR-7 (IA.24), *B. pumilus* QST 2808 (IA.26), *B. simplex* ABU 288 (IA.27), *B. subtilis* FB17 (IA.29), *Burkholderia* sp. A396 (IA.31), *Coniothyrium minitans* CON/M/91-08 (IA.32), *Paecilomyces lilacinus* 251 (IA.33), *Paenibacillus alvei* NAS6G6 (IA.35), *Pasteuria nishizawae* Pn1 (IA.39), *P. bilaiae* ATCC 18309 (IA.46), *P. bilaiae* ATCC 20851 (IA.47) and *P. bilaiae* ATCC 22348 (IA.48).

According to a further embodiment, component 1) in the mixtures comprises at least one biopesticide I from group IA) selected from abscisic acid (IA.58), harpin protein (IA.59), cis-jasmone (IA.60) and methyl-jasmonate (IA.61); more preferably selected from harpin protein, cis-jasmone and methyl-jasmonate; in particular methyl jasmonate.

According to a further embodiment, component 1) in the mixtures comprises at least one biopesticides I strain from group IB) selected from: *Azospirillum amazonense* SpY2 (IB.1), *A. brasilense* AZ39 (IB.2), *A. brasilense* Cd (IB.3), *A. brasilense* Sp 245 (IB.4), *A. brasilense* Ab-V5 (IB.5), *A. brasilense* Ab-V6 (IB.6), *Azospirillum brasilense* XOH (IB.7), *Azospirillum lipoferum* Sp31 (IB.8), *Bradyrhizobium elkanii* SEMIA 5019 (IB.9), *B. elkanii* SEMIA 587 (IB.10), *B. elkanii* U-1301 (IB.11), *B. elkanii* U-1302 (IB.12), *B. elkanii* USDA 3254 (IB.13), *B. elkanii* USDA 76 (IB.14), *B. elkanii* USDA 94 (IB.15), *B. japonicum* 532c (IB.16), *B. japonicum* E-109 (IB.17), *B. japonicum* G49 (IB.18), *B. japonicum* SEMIA 5079 (IB.19), *B. japonicum* SEMIA 5080 (IB.20), *B. japonicum* SEMIA 566 (IB.21), *B. japonicum* SEMIA 586 (IB.22), *B. japonicum* TA-11 (IB.23), *B. japonicum* USDA 110 (I-24), *B. japonicum* USDA 121 (IB.25), *B. japonicum* USDA 3 (IB.26), *B. japonicum* USDA 31 (IB.27), *B. japonicum* USDA 76 (IB.28), *Bradyrhizobium* sp. (Arachis) CB1015 (IB.29), *Bradyrhizobium* sp. (Arachis) SEMIA 6144 (IB.30), *Bradyrhizobium* sp. (Arachis) SEMIA 6462 (IB.31), *Bradyrhizobium* sp. (Arachis) SEMIA 6464 (IB.32), *Bradyrhizobium* sp. (Vigna) PNL1 (IB.33), *Mesorhizobium* sp. WSM1497 (IB.34), *Rhizobium leguminosarum* bv. *phaseoli* RG-B10 (IB.35), *R. leguminosarum* bv. *phaseoli* (IB.36), *R. leguminosarum* bv. *trifolii* 095 (IB.37), *R. leguminosarum* bv. *trifolii* CB782 (IB.38), *R. leguminosarum* bv. *trifolii* CC1099 (IB.39), *R. leguminosarum* bv. *trifolii* CC275e (IB.40), *R. leguminosarum bv. trifolii* CC283b (IB.41), *R. leguminosarum bv. trifolii* RP113-7 (IB.42), *R. leguminosarum* bv. *trifolii* TA1 (IB.43), *R. leguminosarum* bv. *trifolii* WSM1325 (IB.44), *R. leguminosarum* bv. *trifolii* WSM2304 (IB.45), *R. leguminosarum* bv. *viciae* P1NP3Cst (IB.46), *R. leguminosarum* bv. viciae RG-P2 (IB.47), *R. leguminosarum* bv. viciae SU303 (IB.48), *R. leguminosarum* bv. *viciae* WSM1455 (IB.49), *R. tropici CC511* (IB.50), *R. tropici* CIAT 899 (IB.51), *R. tropici* H12 (IB.52), *R. tropici* PRF 81 (IB.53), *Sinorhizobium meliloti* NRG185 (IB.54), S. *meliloti* RCR2011 (IB.55) and S. *meliloti* RRI128 (IB.56).

According to a further embodiment, component 1) in the mixtures comprises at least one biopesticides I strain from group IB) selected from *Azospirillum brasilense* Sp 245 (IB.4), A. *brasilenseAb-V5* (IB.5), A. *brasilense* Ab-V6 (IB.6), *Bradyrhizobium elkanii* SEMIA 5019 (IB.9), *B. elkanii* SEMIA 587 (IB.10), *B. japonicum* 532c (IB.16), *B. japonicum* E-109 (IB.17), *B. japonicum* SEMIA 5079 (IB.19) and *B. japonicum* SEMIA 5080 (IB.20).

According to a further embodiment, component 1) in the mixtures comprises a mixture of *Azospirillum brasilense* strains Ab-V5 Ab-V6 (IB.6).

According to a further embodiment, component 1) in the mixtures comprises a mixture of *Bradyrhizobium elkanii* strains SEMIA 5019 (IB.9) and SEMIA 587 (IB.10),

According to a further embodiment, component 1) in the mixtures comprises a mixture of *Bradyrhizobium japonicum* strains SEMIA 5079 (IB.19) and SEMIA 5080 (IB.20).

The term "mutant" refers a microorganism obtained by direct mutant selection but also includes microorganisms that have been further mutagenized or otherwise manipulated (e. g., via the introduction of a plasmid). Accordingly, embodiments include mutants, variants, and or derivatives of the respective microorganism, both naturally occurring and artificially induced mutants. For example, mutants may be induced by subjecting the microorganism to known mutagens, such as X-ray, UV radiation or N-methyl-nitrosoguanidine, using conventional methods. Subsequent to said treatments a screening for mutant strains showing the desired characteristics may be performed.

Mutant strains may be obtained by any methods known in the art such as direct mutant selection, chemical mutagenesis or genetic manipulation (e. g., via the introduction of a plasmid). For example, such mutants are obtainable by applying a known mutagen, such as X-ray, UV radiation or N-methyl-nitrosoguanidine. Subsequent to said treatments a screening for mutant strains showing the desired characteristics may be performed.

According to a further embodiment, component 1) in the mixtures is a microbial pesticide strain of group IA) or a mutant thereof having any pesticidal or other activity as defined herein. According to a further embodiment, the mutant of is obtained by direct mutant selection optionally after being subjected to mutagens.

According to a further embodiment, component 1) in the mixtures is a nitrogen fixing-bacterium strain of goup IB) as defined herein or a mutant thereof having nitrogen-fixing activity as defined herein. According to a further embodiment, the mutant of is obtained by direct mutant selection optionally after being subjected to mutagens.

The chemical insecticides II and the chemical insecticides III described by common names, their preparation and their activity against pests are known (cf.: http://www.alanwood.net/ pesticides/); these pesticides are often commercially available.

According to a further embodiment, component 2) in the mixtures comprises at least one chemical insecticide II from the groups J) to O) selected from:

J) GABA antagonist compound: fipronil (II.J.1);
K) lepidopteran-specific ryanodine receptor inhibitor: chlorantraniliprole (II.K.1);
L) cross-spectrum ryanodine receptor inhibitor: cyantraniliprole (II.L.1);
M) pyrethroid sodium channel modulators selected from: tefluthrin (II.M.1), bifenthrin (II.M.2), cypermethrin (II.M.3), alpha-cypermethrin (II.M.4);

N) systemically-active neonicotinoid compounds: clothianidin (II.N.1), imidacloprid (II.N.2), thiamethoxam (II.N.3), dinotefuran (II.N.4), acetamiprid (II.N.5), flupyradifurone (II.N.6), thiacloprid (II.N.7), triflumezopyrim (II.N.8);
O) Acetylcholinesterase inhibitors, chloride channel activators and sulfoximines: sulfoxaflor (II.O.1), acephate (II.O.2), chlorpyrifos (II.O.3), thiodicarb (II.O.4), abamectin (II.O.5), spinosad (II.O.6).

According to a further embodiment, component 2) comprises in the mixtures at least one chemical insecticide II from the groups J), K) and L) selected from:

J) GABA antagonist compound: fipronil (II.J.1);
K) lepidopteran-specific ryanodine receptor inhibitor: chlorantraniliprole (II.K.1);
L) cross-spectrum ryanodine receptor inhibitor: cyantraniliprole (II.L.1).

According to a further embodiment, component 3) comprises in the mixtures at least one chemical insecticide III from the groups J') to O') selected from:

J') GABA antagonist compound: fipronil (III.J.1);
K') lepidopteran-specific ryanodine receptor inhibitor: chlorantraniliprole (III.K.1);
L') cross-spectrum ryanodine receptor inhibitor: cyantraniliprole (III.L.1);
M') pyrethroid sodium channel modulators selected from: tefluthrin (III.M.1), bifenthrin (III.M.2), cypermethrin (III.M.3), alpha-cypermethrin (III.M.4);
N') systemically-active neonicotinoid compounds: clothianidin (III.N.1), imidacloprid (III.N.2), thiamethoxam (III.N.3), dinotefuran (III.N.4), acetamiprid (III.N.5), flupyradifurone (III.N.6), thiacloprid (III.N.7), triflumezopyrim (III.N.8);
O') Acetylcholinesterase inhibitors, chloride channel activators and sulfoximines: sulfoxaflor (III.O.1), acephate (III.O.2), chlorpyrifos (III.O.3), thiodicarb (III.O.4), abamectin (III.O.5), spinosad (III.O.6).

According to a further embodiment, component 3) in the mixtures comprises at least one chemical insecticide III from the groups L') and N') selected from:

L') cross-spectrum ryanodine receptor inhibitor: cyantraniliprole (III.L.1).
N') systemically-active neonicotinoid compounds: clothianidin (III.N.1), imidacloprid (III.N.2), thiamethoxam (III.N.3), dinotefuran (III.N.4), acetamiprid (III.N.5), flupyradifurone (III.N.6), thiacloprid (III.N.7), and triflumezopyrim (III.N.8).

According to a further embodiment, component 3) in the mixtures comprises at least one chemical insecticide III from the groups L') and N') selected from:

L) cross-spectrum ryanodine receptor inhibitor: cyantraniliprole (II.L.1);

N) systemically-active neonicotinoid compounds: clothianidin (III.N.1), imidacloprid (III.N.2), thiamethoxam (III.N.3), and triflumezopyrim (III.N.8).

According to a further embodiment, component 3) in the mixtures comprises at least one chemical insecticide III from the groups L') and N') selected from:

L') cross-spectrum ryanodine receptor inhibitor: cyantraniliprole (III.L.1); N')systemically-active neonicotinoid compounds: clothianidin (III.N.1), and thiamethoxam (III.N.3).

Thus, the present invention relates to mixtures comprising, as active components,

1) at least one biopesticide I selected from: *Bacillus amyloliquefaciens* ssp. *plantarum* D747, *B. amyloliquefaciens* ssp. *plantarum* FZB24, *B. amyloliquefaciens* ssp. *plantarum* FZB42, *B. amyloliquefaciens* ssp. *plantarum* MBI600, *B. amyloliquefaciens* ssp. *plantarum* QST-713, *B. amyloliquefaciens* ssp. *plantarum* TJ1000, *B. firmus* CNCM I-1582, *B. pumilus* GHA 180, B. pumilus INR-7, *B. pumilus* QST 2808, *B. simplex* ABU 288, *B. subtilis* FB17, *Burkholderia* sp. A396, *Coniothyrium minitans* CON/M/91-08, *Paecilomyces lilacinus* 251, *Paenibacillus alvei* NAS6G6, *Pasteuria nishizawae* Pn1, *P. bilaiae* ATCC 18309 , *P. bilaiae* ATCC 20851, *P. bilaiae* ATCC 22348; cis-jasmone, methyl jasmonate; harpin protein; *Azospirillum brasilense* Sp 245, *A. brasilense* Ab-V5, A. *brasilense* Ab-V6, *Bradyrhizobium elkanii* SEMIA 5019, *B. elkanii* SEMIA 587, *B. japonicum* 532c, *B. japonicum* E-109, *B. japonicum* SEMIA 5079, *B. japonicum* SEMIA 5080;
and

2) at least one chemical insecticide II from the groups J), K) and L), selected from:

> J) GABA antagonist compound: fipronil (II.J.1);
> K) lepidopteran-specific ryanodine receptor inhibitor: chlorantraniliprole (II.K.1);
> L) cross-spectrum ryanodine receptor inhibitor: cyantraniliprole (II.L.1).

and

3) at least one chemical insecticide III from the groups L') and N') selected from:

> L') cross-spectrum ryanodine receptor inhibitor: cyantraniliprole (III.L.1).
> N') systemically-active neonicotinoid compounds: clothianidin (III.N.1), imidacloprid (III.N.2), thiamethoxam (III.N.3), dinotefuran (III.N.4), acetamiprid (III.N.5), flupyradifurone (III.N.6), thiacloprid (III.N.7), and triflumezopyrim (III.N.8);

in a synergistically effective amount, with the proviso that the chemical insecticide II and chemical insecticide III are not identical.

The present invention relates further to mixtures comprising, as active components,

1) at least one biopesticide I selected from: *Bacillus amyloliquefaciens* ssp. *plantarum* D747, *B. amyloliquefaciens* ssp. *plantarum* FZB24, *B. amyloliquefaciens* ssp. *plantarum* FZB42, *B. amyloliquefaciens* ssp. *plantarum* MBI600, *B. amyloliquefaciens* ssp. *plantarum* QST-713, *B. amyloliquefaciens* ssp. *plantarum* TJ1000, *B. firmus* CNCM I-1582, *B. pumilus* GHA 180, B. pumilus INR-7, *B. pumilus* QST 2808, *B. simplex* ABU 288, *B. subtilis* FB17, *Burkholderia* sp. A396, *Coniothyrium minitans* CON/M/91-08, *Paecilomyces lilacinus* 251, *Paenibacillus alvei* NAS6G6, *Pasteuria nishizawae* Pn1, *P. bilaiae* ATCC 18309 , *P. bilaiae* ATCC 20851, *P. bilaiae* ATCC 22348; cis-jasmone, methyl jasmonate; harpin protein; *Azospirillum brasilense* Sp 245, *A. brasilense* Ab-V5, A. *brasilense* Ab-V6, *Bradyrhizobium elkanii* SEMIA 5019, *B. elkanii* SEMIA 587, *B. japonicum* 532c, *B. japonicum* E-109, *B. japonicum* SEMIA 5079, *B. japonicum* SEMIA 5080;

and

2) at least one chemical insecticide II from the groups J), K) and L), selected from:

> J) GABA antagonist compound: fipronil (II.J.1);
> K) lepidopteran-specific ryanodine receptor inhibitor: chlorantraniliprole (II.K.1);
> L) cross-spectrum ryanodine receptor inhibitor: cyantraniliprole (II.L.1).

and

3) at least one chemical insecticide III from the groups L') and N') selected from:

> L') cross-spectrum ryanodine receptor inhibitor: cyantraniliprole (III.L.1).
> N') systemically-active neonicotinoid compounds: clothianidin (III.N.1), thiamethoxam (III.N.3);

in a synergistically effective amount, with the proviso that the chemical insecticide II and chemical insecticide III are not identical.

The present invention furthermore relates to agrochemical compositions comprising a mixture of component 1), component 2) and component 3) as described above, and if desired at least one suitable auxiliary.

Table 1: Compositions comprising as active components: as component 1) one biopesticide I (in Column Co. 1) and as component 2) (in Column Co. 2) one chemical insecticide II.

| Mixt. | Co.1 | Co. 2 | Mixt. | Co.1 | Co. 2 | Mixt. | Co.1 | Co. 2 |
|---|---|---|---|---|---|---|---|---|
| 1 | (IA.1) | (II.J.1) | 18 | (IA.18) | (II.J.1) | 35 | (IA.35) | (II.J.1) |
| 2 | (IA.2) | (II.J.1) | 19 | (IA.19) | (II.J.1) | 36 | (IA.36) | (II.J.1) |
| 3 | (IA.3) | (II.J.1) | 20 | (IA.20) | (II.J.1) | 37 | (IA.37) | (II.J.1) |
| 4 | (IA.4) | (II.J.1) | 21 | (IA.21) | (II.J.1) | 38 | (IA.38) | (II.J.1) |
| 5 | (IA.5) | (II.J.1) | 22 | (IA.22) | (II.J.1) | 39 | (IA.39) | (II.J.1) |
| 6 | (IA.6) | (II.J.1) | 23 | (IA.23) | (II.J.1) | 40 | (IA.40) | (II.J.1) |
| 7 | (IA.7) | (II.J.1) | 24 | (IA.24) | (II.J.1) | 41 | (IA.41) | (II.J.1) |
| 8 | (IA.8) | (II.J.1) | 25 | (IA.25) | (II.J.1) | 42 | (IA.42) | (II.J.1) |
| 9 | (IA.9) | (II.J.1) | 26 | (IA.26) | (II.J.1) | 43 | (IA.43) | (II.J.1) |
| 10 | (IA.10) | (II.J.1) | 27 | (IA.27) | (II.J.1) | 44 | (IA.44) | (II.J.1) |
| 11 | (IA.11) | (II.J.1) | 28 | (IA.28) | (II.J.1) | 45 | (IA.45) | (II.J.1) |
| 12 | (IA.12) | (II.J.1) | 29 | (IA.29) | (II.J.1) | 46 | (IA.46) | (II.J.1) |
| 13 | (IA.13) | (II.J.1) | 30 | (IA.30) | (II.J.1) | 47 | (IA.47) | (II.J.1) |
| 14 | (IA.14) | (II.J.1) | 31 | (IA.31) | (II.J.1) | 48 | (IA.48) | (II.J.1) |
| 15 | (IA.15) | (II.J.1) | 32 | (IA.32) | (II.J.1) | 49 | (IA.49) | (II.J.1) |
| 16 | (IA.16) | (II.J.1) | 33 | (IA.33) | (II.J.1) | 50 | (IA.50) | (II.J.1) |
| 17 | (IA.17) | (II.J.1) | 34 | (IA.34) | (II.J.1) | 51 | (IA.51) | (II.J.1) |

| Mixt. | Co.1 | Co. 2 | Mixt. | Co.1 | Co. 2 | Mixt. | Co.1 | Co. 2 |
|---|---|---|---|---|---|---|---|---|
| 52 | (IA.52) | (II.J.1) | 91 | (IB.30) | (II.J.1) | 130 | (IA.13) | (II.K.1) |
| 53 | (IA.53) | (II.J.1) | 92 | (IB.31) | (II.J.1) | 131 | (IA.14) | (II.K.1) |
| 54 | (IA.54) | (II.J.1) | 93 | (IB.32) | (II.J.1) | 132 | (IA.15) | (II.K.1) |
| 55 | (IA.55) | (II.J.1) | 94 | (IB.33) | (II.J.1) | 133 | (IA.16) | (II.K.1) |
| 56 | (IA.56) | (II.J.1) | 95 | (IB.34) | (II.J.1) | 134 | (IA.17) | (II.K.1) |
| 57 | (IA.57) | (II.J.1) | 96 | (IB.35) | (II.J.1) | 135 | (IA.18) | (II.K.1) |
| 58 | (IA.58) | (II.J.1) | 97 | (IB.36) | (II.J.1) | 136 | (IA.19) | (II.K.1) |
| 59 | (IA.59) | (II.J.1) | 98 | (IB.37) | (II.J.1) | 137 | (IA.20) | (II.K.1) |
| 60 | (IA.60) | (II.J.1) | 99 | (IB.38) | (II.J.1) | 138 | (IA.21) | (II.K.1) |
| 61 | (IA.61) | (II.J.1) | 100 | (IB.39) | (II.J.1) | 139 | (IA.22) | (II.K.1) |
| 62 | (IB.1) | (II.J.1) | 101 | (IB.40) | (II.J.1) | 140 | (IA.23) | (II.K.1) |
| 63 | (IB.2) | (II.J.1) | 102 | (IB.41) | (II.J.1) | 141 | (IA.24) | (II.K.1) |
| 64 | (IB.3) | (II.J.1) | 103 | (IB.42) | (II.J.1) | 142 | (IA.25) | (II.K.1) |
| 65 | (IB.4) | (II.J.1) | 104 | (IB.43) | (II.J.1) | 143 | (IA.26) | (II.K.1) |
| 66 | (IB.5) | (II.J.1) | 105 | (IB.44) | (II.J.1) | 144 | (IA.27) | (II.K.1) |
| 67 | (IB.6) | (II.J.1) | 106 | (IB.45) | (II.J.1) | 145 | (IA.28) | (II.K.1) |
| 68 | (IB.7) | (II.J.1) | 107 | (IB.46) | (II.J.1) | 146 | (IA.29) | (II.K.1) |
| 69 | (IB.8) | (II.J.1) | 108 | (IB.47) | (II.J.1) | 147 | (IA.30) | (II.K.1) |
| 70 | (IB.9) | (II.J.1) | 109 | (IB.48) | (II.J.1) | 148 | (IA.31) | (II.K.1) |
| 71 | (IB.10) | (II.J.1) | 110 | (IB.49) | (II.J.1) | 149 | (IA.32) | (II.K.1) |
| 72 | (IB.11) | (II.J.1) | 111 | (IB.50) | (II.J.1) | 150 | (IA.33) | (II.K.1) |
| 73 | (IB.12) | (II.J.1) | 112 | (IB.51) | (II.J.1) | 151 | (IA.34) | (II.K.1) |
| 74 | (IB.13) | (II.J.1) | 113 | (IB.52) | (II.J.1) | 152 | (IA.35) | (II.K.1) |
| 75 | (IB.14) | (II.J.1) | 114 | (IB.53) | (II.J.1) | 153 | (IA.36) | (II.K.1) |
| 76 | (IB.15) | (II.J.1) | 115 | (IB.54) | (II.J.1) | 154 | (IA.37) | (II.K.1) |
| 77 | (IB.16) | (II.J.1) | 116 | (IB.55) | (II.J.1) | 155 | (IA.38) | (II.K.1) |
| 78 | (IB.17) | (II.J.1) | 117 | (IB.56) | (II.J.1) | 156 | (IA.39) | (II.K.1) |
| 79 | (IB.18) | (II.J.1) | 118 | (IA.1) | (II.K.1) | 157 | (IA.40) | (II.K.1) |
| 80 | (IB.19) | (II.J.1) | 119 | (IA.2) | (II.K.1) | 158 | (IA.41) | (II.K.1) |
| 81 | (IB.20) | (II.J.1) | 120 | (IA.3) | (II.K.1) | 159 | (IA.42) | (II.K.1) |
| 82 | (IB.21) | (II.J.1) | 121 | (IA.4) | (II.K.1) | 160 | (IA.43) | (II.K.1) |
| 83 | (IB.22) | (II.J.1) | 122 | (IA.5) | (II.K.1) | 161 | (IA.44) | (II.K.1) |
| 84 | (IB.23) | (II.J.1) | 123 | (IA.6) | (II.K.1) | 162 | (IA.45) | (II.K.1) |
| 85 | (IB.24) | (II.J.1) | 124 | (IA.7) | (II.K.1) | 163 | (IA.46) | (II.K.1) |
| 86 | (IB.25) | (II.J.1) | 125 | (IA.8) | (II.K.1) | 164 | (IA.47) | (II.K.1) |
| 87 | (IB.26) | (II.J.1) | 126 | (IA.9) | (II.K.1) | 165 | (IA.48) | (II.K.1) |
| 88 | (IB.27) | (II.J.1) | 127 | (IA.10) | (II.K.1) | 166 | (IA.49) | (II.K.1) |
| 89 | (IB.28) | (II.J.1) | 128 | (IA.11) | (II.K.1) | 167 | (IA.50) | (II.K.1) |
| 90 | (IB.29) | (II.J.1) | 129 | (IA.12) | (II.K.1) | 168 | (IA.51) | (II.K.1) |

| Mixt. | Co.1 | Co. 2 | Mixt. | Co.1 | Co. 2 | Mixt. | Co.1 | Co. 2 |
|---|---|---|---|---|---|---|---|---|
| 169 | (IA.52) | (II.K.1) | 208 | (IB.30) | (II.K.1) | 247 | (IA.13) | (II.K.1) |
| 170 | (IA.53) | (II.K.1) | 209 | (IB.31) | (II.K.1) | 248 | (IA.14) | (II.K.1) |
| 171 | (IA.54) | (II.K.1) | 210 | (IB.32) | (II.K.1) | 249 | (IA.15) | (II.K.1) |
| 172 | (IA.55) | (II.K.1) | 211 | (IB.33) | (II.K.1) | 250 | (IA.16) | (II.K.1) |
| 173 | (IA.56) | (II.K.1) | 212 | (IB.34) | (II.K.1) | 251 | (IA.17) | (II.K.1) |
| 174 | (IA.57) | (II.K.1) | 213 | (IB.35) | (II.K.1) | 252 | (IA.18) | (II.K.1) |
| 175 | (IA.58) | (II.K.1) | 214 | (IB.36) | (II.K.1) | 253 | (IA.19) | (II.K.1) |
| 176 | (IA.59) | (II.K.1) | 215 | (IB.37) | (II.K.1) | 254 | (IA.20) | (II.K.1) |
| 177 | (IA.60) | (II.K.1) | 216 | (IB.38) | (II.K.1) | 255 | (IA.21) | (II.K.1) |
| 178 | (IA.61) | (II.K.1) | 217 | (IB.39) | (II.K.1) | 256 | (IA.22) | (II.K.1) |
| 179 | (IB.1) | (II.K.1) | 218 | (IB.40) | (II.K.1) | 257 | (IA.23) | (II.K.1) |
| 180 | (IB.2) | (II.K.1) | 219 | (IB.41) | (II.K.1) | 258 | (IA.24) | (II.K.1) |
| 181 | (IB.3) | (II.K.1) | 220 | (IB.42) | (II.K.1) | 259 | (IA.25) | (II.K.1) |
| 182 | (IB.4) | (II.K.1) | 221 | (IB.43) | (II.K.1) | 260 | (IA.26) | (II.K.1) |
| 183 | (IB.5) | (II.K.1) | 222 | (IB.44) | (II.K.1) | 261 | (IA.27) | (II.K.1) |
| 184 | (IB.6) | (II.K.1) | 223 | (IB.45) | (II.K.1) | 262 | (IA.28) | (II.K.1) |
| 185 | (IB.7) | (II.K.1) | 224 | (IB.46) | (II.K.1) | 263 | (IA.29) | (II.K.1) |
| 186 | (IB.8) | (II.K.1) | 225 | (IB.47) | (II.K.1) | 264 | (IA.30) | (II.K.1) |
| 187 | (IB.9) | (II.K.1) | 226 | (IB.48) | (II.K.1) | 265 | (IA.31) | (II.K.1) |
| 188 | (IB.10) | (II.K.1) | 227 | (IB.49) | (II.K.1) | 266 | (IA.32) | (II.K.1) |
| 189 | (IB.11) | (II.K.1) | 228 | (IB.50) | (II.K.1) | 267 | (IA.33) | (II.K.1) |
| 190 | (IB.12) | (II.K.1) | 229 | (IB.51) | (II.K.1) | 268 | (IA.34) | (II.K.1) |
| 191 | (IB.13) | (II.K.1) | 230 | (IB.52) | (II.K.1) | 269 | (IA.35) | (II.K.1) |
| 192 | (IB.14) | (II.K.1) | 231 | (IB.53) | (II.K.1) | 270 | (IA.36) | (II.K.1) |
| 193 | (IB.15) | (II.K.1) | 232 | (IB.54) | (II.K.1) | 271 | (IA.37) | (II.K.1) |
| 194 | (IB.16) | (II.K.1) | 233 | (IB.55) | (II.K.1) | 272 | (IA.38) | (II.K.1) |
| 195 | (IB.17) | (II.K.1) | 234 | (IB.56) | (II.K.1) | 273 | (IA.39) | (II.K.1) |
| 196 | (IB.18) | (II.K.1) | 235 | (IA.1) | (II.K.1) | 274 | (IA.40) | (II.K.1) |
| 197 | (IB.19) | (II.K.1) | 236 | (IA.2) | (II.K.1) | 275 | (IA.41) | (II.K.1) |
| 198 | (IB.20) | (II.K.1) | 237 | (IA.3) | (II.K.1) | 276 | (IA.42) | (II.K.1) |
| 199 | (IB.21) | (II.K.1) | 238 | (IA.4) | (II.K.1) | 277 | (IA.43) | (II.K.1) |
| 200 | (IB.22) | (II.K.1) | 239 | (IA.5) | (II.K.1) | 278 | (IA.44) | (II.K.1) |
| 201 | (IB.23) | (II.K.1) | 240 | (IA.6) | (II.K.1) | 279 | (IA.45) | (II.K.1) |
| 202 | (IB.24) | (II.K.1) | 241 | (IA.7) | (II.K.1) | 280 | (IA.46) | (II.K.1) |
| 203 | (IB.25) | (II.K.1) | 242 | (IA.8) | (II.K.1) | 281 | (IA.47) | (II.K.1) |
| 204 | (IB.26) | (II.K.1) | 243 | (IA.9) | (II.K.1) | 282 | (IA.48) | (II.K.1) |
| 205 | (IB.27) | (II.K.1) | 244 | (IA.10) | (II.K.1) | 283 | (IA.49) | (II.K.1) |
| 206 | (IB.28) | (II.K.1) | 245 | (IA.11) | (II.K.1) | 284 | (IA.50) | (II.K.1) |
| 207 | (IB.29) | (II.K.1) | 246 | (IA.12) | (II.K.1) | 285 | (IA.51) | (II.K.1) |

| Mixt. | Co.1 | Co. 2 | Mixt. | Co.1 | Co. 2 | Mixt. | Co.1 | Co. 2 |
|---|---|---|---|---|---|---|---|---|
| 286 | (IA.52) | (II.K.1) | 325 | (IB.30) | (II.K.1) | 364 | (IA.13) | (II.L.1) |
| 287 | (IA.53) | (II.K.1) | 326 | (IB.31) | (II.K.1) | 365 | (IA.14) | (II.L.1) |
| 288 | (IA.54) | (II.K.1) | 327 | (IB.32) | (II.K.1) | 366 | (IA.15) | (II.L.1) |
| 289 | (IA.55) | (II.K.1) | 328 | (IB.33) | (II.K.1) | 367 | (IA.16) | (II.L.1) |
| 290 | (IA.56) | (II.K.1) | 329 | (IB.34) | (II.K.1) | 368 | (IA.17) | (II.L.1) |
| 291 | (IA.57) | (II.K.1) | 330 | (IB.35) | (II.K.1) | 369 | (IA.18) | (II.L.1) |
| 292 | (IA.58) | (II.K.1) | 331 | (IB.36) | (II.K.1) | 370 | (IA.19) | (II.L.1) |
| 293 | (IA.59) | (II.K.1) | 332 | (IB.37) | (II.K.1) | 371 | (IA.20) | (II.L.1) |
| 294 | (IA.60) | (II.K.1) | 333 | (IB.38) | (II.K.1) | 372 | (IA.21) | (II.L.1) |
| 295 | (IA.61) | (II.K.1) | 334 | (IB.39) | (II.K.1) | 373 | (IA.22) | (II.L.1) |
| 296 | (IB.1) | (II.K.1) | 335 | (IB.40) | (II.K.1) | 374 | (IA.23) | (II.L.1) |
| 297 | (IB.2) | (II.K.1) | 336 | (IB.41) | (II.K.1) | 375 | (IA.24) | (II.L.1) |
| 298 | (IB.3) | (II.K.1) | 337 | (IB.42) | (II.K.1) | 376 | (IA.25) | (II.L.1) |
| 299 | (IB.4) | (II.K.1) | 338 | (IB.43) | (II.K.1) | 377 | (IA.26) | (II.L.1) |
| 300 | (IB.5) | (II.K.1) | 339 | (IB.44) | (II.K.1) | 378 | (IA.27) | (II.L.1) |
| 301 | (IB.6) | (II.K.1) | 340 | (IB.45) | (II.K.1) | 379 | (IA.28) | (II.L.1) |
| 302 | (IB.7) | (II.K.1) | 341 | (IB.46) | (II.K.1) | 380 | (IA.29) | (II.L.1) |
| 303 | (IB.8) | (II.K.1) | 342 | (IB.47) | (II.K.1) | 381 | (IA.30) | (II.L.1) |
| 304 | (IB.9) | (II.K.1) | 343 | (IB.48) | (II.K.1) | 382 | (IA.31) | (II.L.1) |
| 305 | (IB.10) | (II.K.1) | 344 | (IB.49) | (II.K.1) | 383 | (IA.32) | (II.L.1) |
| 306 | (IB.11) | (II.K.1) | 345 | (IB.50) | (II.K.1) | 384 | (IA.33) | (II.L.1) |
| 307 | (IB.12) | (II.K.1) | 346 | (IB.51) | (II.K.1) | 385 | (IA.34) | (II.L.1) |
| 308 | (IB.13) | (II.K.1) | 347 | (IB.52) | (II.K.1) | 386 | (IA.35) | (II.L.1) |
| 309 | (IB.14) | (II.K.1) | 348 | (IB.53) | (II.K.1) | 387 | (IA.36) | (II.L.1) |
| 310 | (IB.15) | (II.K.1) | 349 | (IB.54) | (II.K.1) | 388 | (IA.37) | (II.L.1) |
| 311 | (IB.16) | (II.K.1) | 350 | (IB.55) | (II.K.1) | 389 | (IA.38) | (II.L.1) |
| 312 | (IB.17) | (II.K.1) | 351 | (IB.56) | (II.K.1) | 390 | (IA.39) | (II.L.1) |
| 313 | (IB.18) | (II.K.1) | 352 | (IA.1) | (II.L.1) | 391 | (IA.40) | (II.L.1) |
| 314 | (IB.19) | (II.K.1) | 353 | (IA.2) | (II.L.1) | 392 | (IA.41) | (II.L.1) |
| 315 | (IB.20) | (II.K.1) | 354 | (IA.3) | (II.L.1) | 393 | (IA.42) | (II.L.1) |
| 316 | (IB.21) | (II.K.1) | 355 | (IA.4) | (II.L.1) | 394 | (IA.43) | (II.L.1) |
| 317 | (IB.22) | (II.K.1) | 356 | (IA.5) | (II.L.1) | 395 | (IA.44) | (II.L.1) |
| 318 | (IB.23) | (II.K.1) | 357 | (IA.6) | (II.L.1) | 396 | (IA.45) | (II.L.1) |
| 319 | (IB.24) | (II.K.1) | 358 | (IA.7) | (II.L.1) | 397 | (IA.46) | (II.L.1) |
| 320 | (IB.25) | (II.K.1) | 359 | (IA.8) | (II.L.1) | 398 | (IA.47) | (II.L.1) |
| 321 | (IB.26) | (II.K.1) | 360 | (IA.9) | (II.L.1) | 399 | (IA.48) | (II.L.1) |
| 322 | (IB.27) | (II.K.1) | 361 | (IA.10) | (II.L.1) | 400 | (IA.49) | (II.L.1) |
| 323 | (IB.28) | (II.K.1) | 362 | (IA.11) | (II.L.1) | 401 | (IA.50) | (II.L.1) |
| 324 | (IB.29) | (II.K.1) | 363 | (IA.12) | (II.L.1) | 402 | (IA.51) | (II.L.1) |

| Mixt. | Co.1 | Co. 2 | Mixt. | Co.1 | Co. 2 | Mixt. | Co.1 | Co. 2 |
|---|---|---|---|---|---|---|---|---|
| 403 | (IA.52) | (II.L.1) | 442 | (IB.30) | (II.L.1) | 481 | (IA.13) | (II.M.1) |
| 404 | (IA.53) | (II.L.1) | 443 | (IB.31) | (II.L.1) | 482 | (IA.14) | (II.M.1) |
| 405 | (IA.54) | (II.L.1) | 444 | (IB.32) | (II.L.1) | 483 | (IA.15) | (II.M.1) |
| 406 | (IA.55) | (II.L.1) | 445 | (IB.33) | (II.L.1) | 484 | (IA.16) | (II.M.1) |
| 407 | (IA.56) | (II.L.1) | 446 | (IB.34) | (II.L.1) | 485 | (IA.17) | (II.M.1) |
| 408 | (IA.57) | (II.L.1) | 447 | (IB.35) | (II.L.1) | 486 | (IA.18) | (II.M.1) |
| 409 | (IA.58) | (II.L.1) | 448 | (IB.36) | (II.L.1) | 487 | (IA.19) | (II.M.1) |
| 410 | (IA.59) | (II.L.1) | 449 | (IB.37) | (II.L.1) | 488 | (IA.20) | (II.M.1) |
| 411 | (IA.60) | (II.L.1) | 450 | (IB.38) | (II.L.1) | 489 | (IA.21) | (II.M.1) |
| 412 | (IA.61) | (II.L.1) | 451 | (IB.39) | (II.L.1) | 490 | (IA.22) | (II.M.1) |
| 413 | (IB.1) | (II.L.1) | 452 | (IB.40) | (II.L.1) | 491 | (IA.23) | (II.M.1) |
| 414 | (IB.2) | (II.L.1) | 453 | (IB.41) | (II.L.1) | 492 | (IA.24) | (II.M.1) |
| 415 | (IB.3) | (II.L.1) | 454 | (IB.42) | (II.L.1) | 493 | (IA.25) | (II.M.1) |
| 416 | (IB.4) | (II.L.1) | 455 | (IB.43) | (II.L.1) | 494 | (IA.26) | (II.M.1) |
| 417 | (IB.5) | (II.L.1) | 456 | (IB.44) | (II.L.1) | 495 | (IA.27) | (II.M.1) |
| 418 | (IB.6) | (II.L.1) | 457 | (IB.45) | (II.L.1) | 496 | (IA.28) | (II.M.1) |
| 419 | (IB.7) | (II.L.1) | 458 | (IB.46) | (II.L.1) | 497 | (IA.29) | (II.M.1) |
| 420 | (IB.8) | (II.L.1) | 459 | (IB.47) | (II.L.1) | 498 | (IA.30) | (II.M.1) |
| 421 | (IB.9) | (II.L.1) | 460 | (IB.48) | (II.L.1) | 499 | (IA.31) | (II.M.1) |
| 422 | (IB.10) | (II.L.1) | 461 | (IB.49) | (II.L.1) | 500 | (IA.32) | (II.M.1) |
| 423 | (IB.11) | (II.L.1) | 462 | (IB.50) | (II.L.1) | 501 | (IA.33) | (II.M.1) |
| 424 | (IB.12) | (II.L.1) | 463 | (IB.51) | (II.L.1) | 502 | (IA.34) | (II.M.1) |
| 425 | (IB.13) | (II.L.1) | 464 | (IB.52) | (II.L.1) | 503 | (IA.35) | (II.M.1) |
| 426 | (IB.14) | (II.L.1) | 465 | (IB.53) | (II.L.1) | 504 | (IA.36) | (II.M.1) |
| 427 | (IB.15) | (II.L.1) | 466 | (IB.54) | (II.L.1) | 505 | (IA.37) | (II.M.1) |
| 428 | (IB.16) | (II.L.1) | 467 | (IB.55) | (II.L.1) | 506 | (IA.38) | (II.M.1) |
| 429 | (IB.17) | (II.L.1) | 468 | (IB.56) | (II.L.1) | 507 | (IA.39) | (II.M.1) |
| 430 | (IB.18) | (II.L.1) | 469 | (IA.1) | (II.M.1) | 508 | (IA.40) | (II.M.1) |
| 431 | (IB.19) | (II.L.1) | 470 | (IA.2) | (II.M.1) | 509 | (IA.41) | (II.M.1) |
| 432 | (IB.20) | (II.L.1) | 471 | (IA.3) | (II.M.1) | 510 | (IA.42) | (II.M.1) |
| 433 | (IB.21) | (II.L.1) | 472 | (IA.4) | (II.M.1) | 511 | (IA.43) | (II.M.1) |
| 434 | (IB.22) | (II.L.1) | 473 | (IA.5) | (II.M.1) | 512 | (IA.44) | (II.M.1) |
| 435 | (IB.23) | (II.L.1) | 474 | (IA.6) | (II.M.1) | 513 | (IA.45) | (II.M.1) |
| 436 | (IB.24) | (II.L.1) | 475 | (IA.7) | (II.M.1) | 514 | (IA.46) | (II.M.1) |
| 437 | (IB.25) | (II.L.1) | 476 | (IA.8) | (II.M.1) | 515 | (IA.47) | (II.M.1) |
| 438 | (IB.26) | (II.L.1) | 477 | (IA.9) | (II.M.1) | 516 | (IA.48) | (II.M.1) |
| 439 | (IB.27) | (II.L.1) | 478 | (IA.10) | (II.M.1) | 517 | (IA.49) | (II.M.1) |
| 440 | (IB.28) | (II.L.1) | 479 | (IA.11) | (II.M.1) | 518 | (IA.50) | (II.M.1) |
| 441 | (IB.29) | (II.L.1) | 480 | (IA.12) | (II.M.1) | 519 | (IA.51) | (II.M.1) |

| Mixt. | Co.1 | Co. 2 | Mixt. | Co.1 | Co. 2 | Mixt. | Co.1 | Co. 2 |
|---|---|---|---|---|---|---|---|---|
| 520 | (IA.52) | (II.M.1) | 559 | (IB.30) | (II.M.1) | 598 | (IA.13) | (II.M.2) |
| 521 | (IA.53) | (II.M.1) | 560 | (IB.31) | (II.M.1) | 599 | (IA.14) | (II.M.2) |
| 522 | (IA.54) | (II.M.1) | 561 | (IB.32) | (II.M.1) | 600 | (IA.15) | (II.M.2) |
| 523 | (IA.55) | (II.M.1) | 562 | (IB.33) | (II.M.1) | 601 | (IA.16) | (II.M.2) |
| 524 | (IA.56) | (II.M.1) | 563 | (IB.34) | (II.M.1) | 602 | (IA.17) | (II.M.2) |
| 525 | (IA.57) | (II.M.1) | 564 | (IB.35) | (II.M.1) | 603 | (IA.18) | (II.M.2) |
| 526 | (IA.58) | (II.M.1) | 565 | (IB.36) | (II.M.1) | 604 | (IA.19) | (II.M.2) |
| 527 | (IA.59) | (II.M.1) | 566 | (IB.37) | (II.M.1) | 605 | (IA.20) | (II.M.2) |
| 528 | (IA.60) | (II.M.1) | 567 | (IB.38) | (II.M.1) | 606 | (IA.21) | (II.M.2) |
| 529 | (IA.61) | (II.M.1) | 568 | (IB.39) | (II.M.1) | 607 | (IA.22) | (II.M.2) |
| 530 | (IB.1) | (II.M.1) | 569 | (IB.40) | (II.M.1) | 608 | (IA.23) | (II.M.2) |
| 531 | (IB.2) | (II.M.1) | 570 | (IB.41) | (II.M.1) | 609 | (IA.24) | (II.M.2) |
| 532 | (IB.3) | (II.M.1) | 571 | (IB.42) | (II.M.1) | 610 | (IA.25) | (II.M.2) |
| 533 | (IB.4) | (II.M.1) | 572 | (IB.43) | (II.M.1) | 611 | (IA.26) | (II.M.2) |
| 534 | (IB.5) | (II.M.1) | 573 | (IB.44) | (II.M.1) | 612 | (IA.27) | (II.M.2) |
| 535 | (IB.6) | (II.M.1) | 574 | (IB.45) | (II.M.1) | 613 | (IA.28) | (II.M.2) |
| 536 | (IB.7) | (II.M.1) | 575 | (IB.46) | (II.M.1) | 614 | (IA.29) | (II.M.2) |
| 537 | (IB.8) | (II.M.1) | 576 | (IB.47) | (II.M.1) | 615 | (IA.30) | (II.M.2) |
| 538 | (IB.9) | (II.M.1) | 577 | (IB.48) | (II.M.1) | 616 | (IA.31) | (II.M.2) |
| 539 | (IB.10) | (II.M.1) | 578 | (IB.49) | (II.M.1) | 617 | (IA.32) | (II.M.2) |
| 540 | (IB.11) | (II.M.1) | 579 | (IB.50) | (II.M.1) | 618 | (IA.33) | (II.M.2) |
| 541 | (IB.12) | (II.M.1) | 580 | (IB.51) | (II.M.1) | 619 | (IA.34) | (II.M.2) |
| 542 | (IB.13) | (II.M.1) | 581 | (IB.52) | (II.M.1) | 620 | (IA.35) | (II.M.2) |
| 543 | (IB.14) | (II.M.1) | 582 | (IB.53) | (II.M.1) | 621 | (IA.36) | (II.M.2) |
| 544 | (IB.15) | (II.M.1) | 583 | (IB.54) | (II.M.1) | 622 | (IA.37) | (II.M.2) |
| 545 | (IB.16) | (II.M.1) | 584 | (IB.55) | (II.M.1) | 623 | (IA.38) | (II.M.2) |
| 546 | (IB.17) | (II.M.1) | 585 | (IB.56) | (II.M.1) | 624 | (IA.39) | (II.M.2) |
| 547 | (IB.18) | (II.M.1) | 586 | (IA.1) | (II.M.2) | 625 | (IA.40) | (II.M.2) |
| 548 | (IB.19) | (II.M.1) | 587 | (IA.2) | (II.M.2) | 626 | (IA.41) | (II.M.2) |
| 549 | (IB.20) | (II.M.1) | 588 | (IA.3) | (II.M.2) | 627 | (IA.42) | (II.M.2) |
| 550 | (IB.21) | (II.M.1) | 589 | (IA.4) | (II.M.2) | 628 | (IA.43) | (II.M.2) |
| 551 | (IB.22) | (II.M.1) | 590 | (IA.5) | (II.M.2) | 629 | (IA.44) | (II.M.2) |
| 552 | (IB.23) | (II.M.1) | 591 | (IA.6) | (II.M.2) | 630 | (IA.45) | (II.M.2) |
| 553 | (IB.24) | (II.M.1) | 592 | (IA.7) | (II.M.2) | 631 | (IA.46) | (II.M.2) |
| 554 | (IB.25) | (II.M.1) | 593 | (IA.8) | (II.M.2) | 632 | (IA.47) | (II.M.2) |
| 555 | (IB.26) | (II.M.1) | 594 | (IA.9) | (II.M.2) | 633 | (IA.48) | (II.M.2) |
| 556 | (IB.27) | (II.M.1) | 595 | (IA.10) | (II.M.2) | 634 | (IA.49) | (II.M.2) |
| 557 | (IB.28) | (II.M.1) | 596 | (IA.11) | (II.M.2) | 635 | (IA.50) | (II.M.2) |
| 558 | (IB.29) | (II.M.1) | 597 | (IA.12) | (II.M.2) | 636 | (IA.51) | (II.M.2) |

| Mixt. | Co.1 | Co. 2 | Mixt. | Co.1 | Co. 2 | Mixt. | Co.1 | Co. 2 |
|---|---|---|---|---|---|---|---|---|
| 637 | (IA.52) | (II.M.2) | 676 | (IB.30) | (II.M.2) | 715 | (IA.13) | (II.M.3) |
| 638 | (IA.53) | (II.M.2) | 677 | (IB.31) | (II.M.2) | 716 | (IA.14) | (II.M.3) |
| 639 | (IA.54) | (II.M.2) | 678 | (IB.32) | (II.M.2) | 717 | (IA.15) | (II.M.3) |
| 640 | (IA.55) | (II.M.2) | 679 | (IB.33) | (II.M.2) | 718 | (IA.16) | (II.M.3) |
| 641 | (IA.56) | (II.M.2) | 680 | (IB.34) | (II.M.2) | 719 | (IA.17) | (II.M.3) |
| 642 | (IA.57) | (II.M.2) | 681 | (IB.35) | (II.M.2) | 720 | (IA.18) | (II.M.3) |
| 643 | (IA.58) | (II.M.2) | 682 | (IB.36) | (II.M.2) | 721 | (IA.19) | (II.M.3) |
| 644 | (IA.59) | (II.M.2) | 683 | (IB.37) | (II.M.2) | 722 | (IA.20) | (II.M.3) |
| 645 | (IA.60) | (II.M.2) | 684 | (IB.38) | (II.M.2) | 723 | (IA.21) | (II.M.3) |
| 646 | (IA.61) | (II.M.2) | 685 | (IB.39) | (II.M.2) | 724 | (IA.22) | (II.M.3) |
| 647 | (IB.1) | (II.M.2) | 686 | (IB.40) | (II.M.2) | 725 | (IA.23) | (II.M.3) |
| 648 | (IB.2) | (II.M.2) | 687 | (IB.41) | (II.M.2) | 726 | (IA.24) | (II.M.3) |
| 649 | (IB.3) | (II.M.2) | 688 | (IB.42) | (II.M.2) | 727 | (IA.25) | (II.M.3) |
| 650 | (IB.4) | (II.M.2) | 689 | (IB.43) | (II.M.2) | 728 | (IA.26) | (II.M.3) |
| 651 | (IB.5) | (II.M.2) | 690 | (IB.44) | (II.M.2) | 729 | (IA.27) | (II.M.3) |
| 652 | (IB.6) | (II.M.2) | 691 | (IB.45) | (II.M.2) | 730 | (IA.28) | (II.M.3) |
| 653 | (IB.7) | (II.M.2) | 692 | (IB.46) | (II.M.2) | 731 | (IA.29) | (II.M.3) |
| 654 | (IB.8) | (II.M.2) | 693 | (IB.47) | (II.M.2) | 732 | (IA.30) | (II.M.3) |
| 655 | (IB.9) | (II.M.2) | 694 | (IB.48) | (II.M.2) | 733 | (IA.31) | (II.M.3) |
| 656 | (IB.10) | (II.M.2) | 695 | (IB.49) | (II.M.2) | 734 | (IA.32) | (II.M.3) |
| 657 | (IB.11) | (II.M.2) | 696 | (IB.50) | (II.M.2) | 735 | (IA.33) | (II.M.3) |
| 658 | (IB.12) | (II.M.2) | 697 | (IB.51) | (II.M.2) | 736 | (IA.34) | (II.M.3) |
| 659 | (IB.13) | (II.M.2) | 698 | (IB.52) | (II.M.2) | 737 | (IA.35) | (II.M.3) |
| 660 | (IB.14) | (II.M.2) | 699 | (IB.53) | (II.M.2) | 738 | (IA.36) | (II.M.3) |
| 661 | (IB.15) | (II.M.2) | 700 | (IB.54) | (II.M.2) | 739 | (IA.37) | (II.M.3) |
| 662 | (IB.16) | (II.M.2) | 701 | (IB.55) | (II.M.2) | 740 | (IA.38) | (II.M.3) |
| 663 | (IB.17) | (II.M.2) | 702 | (IB.56) | (II.M.2) | 741 | (IA.39) | (II.M.3) |
| 664 | (IB.18) | (II.M.2) | 703 | (IA.1) | (II.M.3) | 742 | (IA.40) | (II.M.3) |
| 665 | (IB.19) | (II.M.2) | 704 | (IA.2) | (II.M.3) | 743 | (IA.41) | (II.M.3) |
| 666 | (IB.20) | (II.M.2) | 705 | (IA.3) | (II.M.3) | 744 | (IA.42) | (II.M.3) |
| 667 | (IB.21) | (II.M.2) | 706 | (IA.4) | (II.M.3) | 745 | (IA.43) | (II.M.3) |
| 668 | (IB.22) | (II.M.2) | 707 | (IA.5) | (II.M.3) | 746 | (IA.44) | (II.M.3) |
| 669 | (IB.23) | (II.M.2) | 708 | (IA.6) | (II.M.3) | 747 | (IA.45) | (II.M.3) |
| 670 | (IB.24) | (II.M.2) | 709 | (IA.7) | (II.M.3) | 748 | (IA.46) | (II.M.3) |
| 671 | (IB.25) | (II.M.2) | 710 | (IA.8) | (II.M.3) | 749 | (IA.47) | (II.M.3) |
| 672 | (IB.26) | (II.M.2) | 711 | (IA.9) | (II.M.3) | 750 | (IA.48) | (II.M.3) |
| 673 | (IB.27) | (II.M.2) | 712 | (IA.10) | (II.M.3) | 751 | (IA.49) | (II.M.3) |
| 674 | (IB.28) | (II.M.2) | 713 | (IA.11) | (II.M.3) | 752 | (IA.50) | (II.M.3) |
| 675 | (IB.29) | (II.M.2) | 714 | (IA.12) | (II.M.3) | 753 | (IA.51) | (II.M.3) |

| Mixt. | Co.1 | Co. 2 | Mixt. | Co.1 | Co. 2 | Mixt. | Co.1 | Co. 2 |
|---|---|---|---|---|---|---|---|---|
| 754 | (IA.52) | (II.M.3) | 793 | (IB.30) | (II.M.3) | 832 | (IA.13) | (II.M.4) |
| 755 | (IA.53) | (II.M.3) | 794 | (IB.31) | (II.M.3) | 833 | (IA.14) | (II.M.4) |
| 756 | (IA.54) | (II.M.3) | 795 | (IB.32) | (II.M.3) | 834 | (IA.15) | (II.M.4) |
| 757 | (IA.55) | (II.M.3) | 796 | (IB.33) | (II.M.3) | 835 | (IA.16) | (II.M.4) |
| 758 | (IA.56) | (II.M.3) | 797 | (IB.34) | (II.M.3) | 836 | (IA.17) | (II.M.4) |
| 759 | (IA.57) | (II.M.3) | 798 | (IB.35) | (II.M.3) | 837 | (IA.18) | (II.M.4) |
| 760 | (IA.58) | (II.M.3) | 799 | (IB.36) | (II.M.3) | 838 | (IA.19) | (II.M.4) |
| 761 | (IA.59) | (II.M.3) | 800 | (IB.37) | (II.M.3) | 839 | (IA.20) | (II.M.4) |
| 762 | (IA.60) | (II.M.3) | 801 | (IB.38) | (II.M.3) | 840 | (IA.21) | (II.M.4) |
| 763 | (IA.61) | (II.M.3) | 802 | (IB.39) | (II.M.3) | 841 | (IA.22) | (II.M.4) |
| 764 | (IB.1) | (II.M.3) | 803 | (IB.40) | (II.M.3) | 842 | (IA.23) | (II.M.4) |
| 765 | (IB.2) | (II.M.3) | 804 | (IB.41) | (II.M.3) | 843 | (IA.24) | (II.M.4) |
| 766 | (IB.3) | (II.M.3) | 805 | (IB.42) | (II.M.3) | 844 | (IA.25) | (II.M.4) |
| 767 | (IB.4) | (II.M.3) | 806 | (IB.43) | (II.M.3) | 845 | (IA.26) | (II.M.4) |
| 768 | (IB.5) | (II.M.3) | 807 | (IB.44) | (II.M.3) | 846 | (IA.27) | (II.M.4) |
| 769 | (IB.6) | (II.M.3) | 808 | (IB.45) | (II.M.3) | 847 | (IA.28) | (II.M.4) |
| 770 | (IB.7) | (II.M.3) | 809 | (IB.46) | (II.M.3) | 848 | (IA.29) | (II.M.4) |
| 771 | (IB.8) | (II.M.3) | 810 | (IB.47) | (II.M.3) | 849 | (IA.30) | (II.M.4) |
| 772 | (IB.9) | (II.M.3) | 811 | (IB.48) | (II.M.3) | 850 | (IA.31) | (II.M.4) |
| 773 | (IB.10) | (II.M.3) | 812 | (IB.49) | (II.M.3) | 851 | (IA.32) | (II.M.4) |
| 774 | (IB.11) | (II.M.3) | 813 | (IB.50) | (II.M.3) | 852 | (IA.33) | (II.M.4) |
| 775 | (IB.12) | (II.M.3) | 814 | (IB.51) | (II.M.3) | 853 | (IA.34) | (II.M.4) |
| 776 | (IB.13) | (II.M.3) | 815 | (IB.52) | (II.M.3) | 854 | (IA.35) | (II.M.4) |
| 777 | (IB.14) | (II.M.3) | 816 | (IB.53) | (II.M.3) | 855 | (IA.36) | (II.M.4) |
| 778 | (IB.15) | (II.M.3) | 817 | (IB.54) | (II.M.3) | 856 | (IA.37) | (II.M.4) |
| 779 | (IB.16) | (II.M.3) | 818 | (IB.55) | (II.M.3) | 857 | (IA.38) | (II.M.4) |
| 780 | (IB.17) | (II.M.3) | 819 | (IB.56) | (II.M.3) | 858 | (IA.39) | (II.M.4) |
| 781 | (IB.18) | (II.M.3) | 820 | (IA.1) | (II.M.4) | 859 | (IA.40) | (II.M.4) |
| 782 | (IB.19) | (II.M.3) | 821 | (IA.2) | (II.M.4) | 860 | (IA.41) | (II.M.4) |
| 783 | (IB.20) | (II.M.3) | 822 | (IA.3) | (II.M.4) | 861 | (IA.42) | (II.M.4) |
| 784 | (IB.21) | (II.M.3) | 823 | (IA.4) | (II.M.4) | 862 | (IA.43) | (II.M.4) |
| 785 | (IB.22) | (II.M.3) | 824 | (IA.5) | (II.M.4) | 863 | (IA.44) | (II.M.4) |
| 786 | (IB.23) | (II.M.3) | 825 | (IA.6) | (II.M.4) | 864 | (IA.45) | (II.M.4) |
| 787 | (IB.24) | (II.M.3) | 826 | (IA.7) | (II.M.4) | 865 | (IA.46) | (II.M.4) |
| 788 | (IB.25) | (II.M.3) | 827 | (IA.8) | (II.M.4) | 866 | (IA.47) | (II.M.4) |
| 789 | (IB.26) | (II.M.3) | 828 | (IA.9) | (II.M.4) | 867 | (IA.48) | (II.M.4) |
| 790 | (IB.27) | (II.M.3) | 829 | (IA.10) | (II.M.4) | 868 | (IA.49) | (II.M.4) |
| 791 | (IB.28) | (II.M.3) | 830 | (IA.11) | (II.M.4) | 869 | (IA.50) | (II.M.4) |
| 792 | (IB.29) | (II.M.3) | 831 | (IA.12) | (II.M.4) | 870 | (IA.51) | (II.M.4) |

| Mixt. | Co.1 | Co. 2 | Mixt. | Co.1 | Co. 2 | Mixt. | Co.1 | Co. 2 |
|---|---|---|---|---|---|---|---|---|
| 871 | (IA.52) | (II.M.4) | 910 | (IB.30) | (II.M.4) | 949 | (IA.13) | (II.N.1) |
| 872 | (IA.53) | (II.M.4) | 911 | (IB.31) | (II.M.4) | 950 | (IA.14) | (II.N.1) |
| 873 | (IA.54) | (II.M.4) | 912 | (IB.32) | (II.M.4) | 951 | (IA.15) | (II.N.1) |
| 874 | (IA.55) | (II.M.4) | 913 | (IB.33) | (II.M.4) | 952 | (IA.16) | (II.N.1) |
| 875 | (IA.56) | (II.M.4) | 914 | (IB.34) | (II.M.4) | 953 | (IA.17) | (II.N.1) |
| 876 | (IA.57) | (II.M.4) | 915 | (IB.35) | (II.M.4) | 954 | (IA.18) | (II.N.1) |
| 877 | (IA.58) | (II.M.4) | 916 | (IB.36) | (II.M.4) | 955 | (IA.19) | (II.N.1) |
| 878 | (IA.59) | (II.M.4) | 917 | (IB.37) | (II.M.4) | 956 | (IA.20) | (II.N.1) |
| 879 | (IA.60) | (II.M.4) | 918 | (IB.38) | (II.M.4) | 957 | (IA.21) | (II.N.1) |
| 880 | (IA.61) | (II.M.4) | 919 | (IB.39) | (II.M.4) | 958 | (IA.22) | (II.N.1) |
| 881 | (IB.1) | (II.M.4) | 920 | (IB.40) | (II.M.4) | 959 | (IA.23) | (II.N.1) |
| 882 | (IB.2) | (II.M.4) | 921 | (IB.41) | (II.M.4) | 960 | (IA.24) | (II.N.1) |
| 883 | (IB.3) | (II.M.4) | 922 | (IB.42) | (II.M.4) | 961 | (IA.25) | (II.N.1) |
| 884 | (IB.4) | (II.M.4) | 923 | (IB.43) | (II.M.4) | 962 | (IA.26) | (II.N.1) |
| 885 | (IB.5) | (II.M.4) | 924 | (IB.44) | (II.M.4) | 963 | (IA.27) | (II.N.1) |
| 886 | (IB.6) | (II.M.4) | 925 | (IB.45) | (II.M.4) | 964 | (IA.28) | (II.N.1) |
| 887 | (IB.7) | (II.M.4) | 926 | (IB.46) | (II.M.4) | 965 | (IA.29) | (II.N.1) |
| 888 | (IB.8) | (II.M.4) | 927 | (IB.47) | (II.M.4) | 966 | (IA.30) | (II.N.1) |
| 889 | (IB.9) | (II.M.4) | 928 | (IB.48) | (II.M.4) | 967 | (IA.31) | (II.N.1) |
| 890 | (IB.10) | (II.M.4) | 929 | (IB.49) | (II.M.4) | 968 | (IA.32) | (II.N.1) |
| 891 | (IB.11) | (II.M.4) | 930 | (IB.50) | (II.M.4) | 969 | (IA.33) | (II.N.1) |
| 892 | (IB.12) | (II.M.4) | 931 | (IB.51) | (II.M.4) | 970 | (IA.34) | (II.N.1) |
| 893 | (IB.13) | (II.M.4) | 932 | (IB.52) | (II.M.4) | 971 | (IA.35) | (II.N.1) |
| 894 | (IB.14) | (II.M.4) | 933 | (IB.53) | (II.M.4) | 972 | (IA.36) | (II.N.1) |
| 895 | (IB.15) | (II.M.4) | 934 | (IB.54) | (II.M.4) | 973 | (IA.37) | (II.N.1) |
| 896 | (IB.16) | (II.M.4) | 935 | (IB.55) | (II.M.4) | 974 | (IA.38) | (II.N.1) |
| 897 | (IB.17) | (II.M.4) | 936 | (IB.56) | (II.M.4) | 975 | (IA.39) | (II.N.1) |
| 898 | (IB.18) | (II.M.4) | 937 | (IA.1) | (II.N.1) | 976 | (IA.40) | (II.N.1) |
| 899 | (IB.19) | (II.M.4) | 938 | (IA.2) | (II.N.1) | 977 | (IA.41) | (II.N.1) |
| 900 | (IB.20) | (II.M.4) | 939 | (IA.3) | (II.N.1) | 978 | (IA.42) | (II.N.1) |
| 901 | (IB.21) | (II.M.4) | 940 | (IA.4) | (II.N.1) | 979 | (IA.43) | (II.N.1) |
| 902 | (IB.22) | (II.M.4) | 941 | (IA.5) | (II.N.1) | 980 | (IA.44) | (II.N.1) |
| 903 | (IB.23) | (II.M.4) | 942 | (IA.6) | (II.N.1) | 981 | (IA.45) | (II.N.1) |
| 904 | (IB.24) | (II.M.4) | 943 | (IA.7) | (II.N.1) | 982 | (IA.46) | (II.N.1) |
| 905 | (IB.25) | (II.M.4) | 944 | (IA.8) | (II.N.1) | 983 | (IA.47) | (II.N.1) |
| 906 | (IB.26) | (II.M.4) | 945 | (IA.9) | (II.N.1) | 984 | (IA.48) | (II.N.1) |
| 907 | (IB.27) | (II.M.4) | 946 | (IA.10) | (II.N.1) | 985 | (IA.49) | (II.N.1) |
| 908 | (IB.28) | (II.M.4) | 947 | (IA.11) | (II.N.1) | 986 | (IA.50) | (II.N.1) |
| 909 | (IB.29) | (II.M.4) | 948 | (IA.12) | (II.N.1) | 987 | (IA.51) | (II.N.1) |

| Mixt. | Co.1 | Co. 2 | Mixt. | Co.1 | Co. 2 | Mixt. | Co.1 | Co. 2 |
|---|---|---|---|---|---|---|---|---|
| 988 | (IA.52) | (II.N.1) | 1027 | (IB.30) | (II.N.1) | 1066 | (IA.13) | (II.N.2) |
| 989 | (IA.53) | (II.N.1) | 1028 | (IB.31) | (II.N.1) | 1067 | (IA.14) | (II.N.2) |
| 990 | (IA.54) | (II.N.1) | 1029 | (IB.32) | (II.N.1) | 1068 | (IA.15) | (II.N.2) |
| 991 | (IA.55) | (II.N.1) | 1030 | (IB.33) | (II.N.1) | 1069 | (IA.16) | (II.N.2) |
| 992 | (IA.56) | (II.N.1) | 1031 | (IB.34) | (II.N.1) | 1070 | (IA.17) | (II.N.2) |
| 993 | (IA.57) | (II.N.1) | 1032 | (IB.35) | (II.N.1) | 1071 | (IA.18) | (II.N.2) |
| 994 | (IA.58) | (II.N.1) | 1033 | (IB.36) | (II.N.1) | 1072 | (IA.19) | (II.N.2) |
| 995 | (IA.59) | (II.N.1) | 1034 | (IB.37) | (II.N.1) | 1073 | (IA.20) | (II.N.2) |
| 996 | (IA.60) | (II.N.1) | 1035 | (IB.38) | (II.N.1) | 1074 | (IA.21) | (II.N.2) |
| 997 | (IA.61) | (II.N.1) | 1036 | (IB.39) | (II.N.1) | 1075 | (IA.22) | (II.N.2) |
| 998 | (IB.1) | (II.N.1) | 1037 | (IB.40) | (II.N.1) | 1076 | (IA.23) | (II.N.2) |
| 999 | (IB.2) | (II.N.1) | 1038 | (IB.41) | (II.N.1) | 1077 | (IA.24) | (II.N.2) |
| 1000 | (IB.3) | (II.N.1) | 1039 | (IB.42) | (II.N.1) | 1078 | (IA.25) | (II.N.2) |
| 1001 | (IB.4) | (II.N.1) | 1040 | (IB.43) | (II.N.1) | 1079 | (IA.26) | (II.N.2) |
| 1002 | (IB.5) | (II.N.1) | 1041 | (IB.44) | (II.N.1) | 1080 | (IA.27) | (II.N.2) |
| 1003 | (IB.6) | (II.N.1) | 1042 | (IB.45) | (II.N.1) | 1081 | (IA.28) | (II.N.2) |
| 1004 | (IB.7) | (II.N.1) | 1043 | (IB.46) | (II.N.1) | 1082 | (IA.29) | (II.N.2) |
| 1005 | (IB.8) | (II.N.1) | 1044 | (IB.47) | (II.N.1) | 1083 | (IA.30) | (II.N.2) |
| 1006 | (IB.9) | (II.N.1) | 1045 | (IB.48) | (II.N.1) | 1084 | (IA.31) | (II.N.2) |
| 1007 | (IB.10) | (II.N.1) | 1046 | (IB.49) | (II.N.1) | 1085 | (IA.32) | (II.N.2) |
| 1008 | (IB.11) | (II.N.1) | 1047 | (IB.50) | (II.N.1) | 1086 | (IA.33) | (II.N.2) |
| 1009 | (IB.12) | (II.N.1) | 1048 | (IB.51) | (II.N.1) | 1087 | (IA.34) | (II.N.2) |
| 1010 | (IB.13) | (II.N.1) | 1049 | (IB.52) | (II.N.1) | 1088 | (IA.35) | (II.N.2) |
| 1011 | (IB.14) | (II.N.1) | 1050 | (IB.53) | (II.N.1) | 1089 | (IA.36) | (II.N.2) |
| 1012 | (IB.15) | (II.N.1) | 1051 | (IB.54) | (II.N.1) | 1090 | (IA.37) | (II.N.2) |
| 1013 | (IB.16) | (II.N.1) | 1052 | (IB.55) | (II.N.1) | 1091 | (IA.38) | (II.N.2) |
| 1014 | (IB.17) | (II.N.1) | 1053 | (IB.56) | (II.N.1) | 1092 | (IA.39) | (II.N.2) |
| 1015 | (IB.18) | (II.N.1) | 1054 | (IA.1) | (II.N.2) | 1093 | (IA.40) | (II.N.2) |
| 1016 | (IB.19) | (II.N.1) | 1055 | (IA.2) | (II.N.2) | 1094 | (IA.41) | (II.N.2) |
| 1017 | (IB.20) | (II.N.1) | 1056 | (IA.3) | (II.N.2) | 1095 | (IA.42) | (II.N.2) |
| 1018 | (IB.21) | (II.N.1) | 1057 | (IA.4) | (II.N.2) | 1096 | (IA.43) | (II.N.2) |
| 1019 | (IB.22) | (II.N.1) | 1058 | (IA.5) | (II.N.2) | 1097 | (IA.44) | (II.N.2) |
| 1020 | (IB.23) | (II.N.1) | 1059 | (IA.6) | (II.N.2) | 1098 | (IA.45) | (II.N.2) |
| 1021 | (IB.24) | (II.N.1) | 1060 | (IA.7) | (II.N.2) | 1099 | (IA.46) | (II.N.2) |
| 1022 | (IB.25) | (II.N.1) | 1061 | (IA.8) | (II.N.2) | 1100 | (IA.47) | (II.N.2) |
| 1023 | (IB.26) | (II.N.1) | 1062 | (IA.9) | (II.N.2) | 1101 | (IA.48) | (II.N.2) |
| 1024 | (IB.27) | (II.N.1) | 1063 | (IA.10) | (II.N.2) | 1102 | (IA.49) | (II.N.2) |
| 1025 | (IB.28) | (II.N.1) | 1064 | (IA.11) | (II.N.2) | 1103 | (IA.50) | (II.N.2) |
| 1026 | (IB.29) | (II.N.1) | 1065 | (IA.12) | (II.N.2) | 1104 | (IA.51) | (II.N.2) |

| Mixt. | Co.1 | Co. 2 | Mixt. | Co.1 | Co. 2 | Mixt. | Co.1 | Co. 2 |
|---|---|---|---|---|---|---|---|---|
| 1105 | (IA.52) | (II.N.2) | 1144 | (IB.30) | (II.N.2) | 1183 | (IA.13) | (II.N.3) |
| 1106 | (IA.53) | (II.N.2) | 1145 | (IB.31) | (II.N.2) | 1184 | (IA.14) | (II.N.3) |
| 1107 | (IA.54) | (II.N.2) | 1146 | (IB.32) | (II.N.2) | 1185 | (IA.15) | (II.N.3) |
| 1108 | (IA.55) | (II.N.2) | 1147 | (IB.33) | (II.N.2) | 1186 | (IA.16) | (II.N.3) |
| 1109 | (IA.56) | (II.N.2) | 1148 | (IB.34) | (II.N.2) | 1187 | (IA.17) | (II.N.3) |
| 1110 | (IA.57) | (II.N.2) | 1149 | (IB.35) | (II.N.2) | 1188 | (IA.18) | (II.N.3) |
| 1111 | (IA.58) | (II.N.2) | 1150 | (IB.36) | (II.N.2) | 1189 | (IA.19) | (II.N.3) |
| 1112 | (IA.59) | (II.N.2) | 1151 | (IB.37) | (II.N.2) | 1190 | (IA.20) | (II.N.3) |
| 1113 | (IA.60) | (II.N.2) | 1152 | (IB.38) | (II.N.2) | 1191 | (IA.21) | (II.N.3) |
| 1114 | (IA.61) | (II.N.2) | 1153 | (IB.39) | (II.N.2) | 1192 | (IA.22) | (II.N.3) |
| 1115 | (IB.1) | (II.N.2) | 1154 | (IB.40) | (II.N.2) | 1193 | (IA.23) | (II.N.3) |
| 1116 | (IB.2) | (II.N.2) | 1155 | (IB.41) | (II.N.2) | 1194 | (IA.24) | (II.N.3) |
| 1117 | (IB.3) | (II.N.2) | 1156 | (IB.42) | (II.N.2) | 1195 | (IA.25) | (II.N.3) |
| 1118 | (IB.4) | (II.N.2) | 1157 | (IB.43) | (II.N.2) | 1196 | (IA.26) | (II.N.3) |
| 1119 | (IB.5) | (II.N.2) | 1158 | (IB.44) | (II.N.2) | 1197 | (IA.27) | (II.N.3) |
| 1120 | (IB.6) | (II.N.2) | 1159 | (IB.45) | (II.N.2) | 1198 | (IA.28) | (II.N.3) |
| 1121 | (IB.7) | (II.N.2) | 1160 | (IB.46) | (II.N.2) | 1199 | (IA.29) | (II.N.3) |
| 1122 | (IB.8) | (II.N.2) | 1161 | (IB.47) | (II.N.2) | 1200 | (IA.30) | (II.N.3) |
| 1123 | (IB.9) | (II.N.2) | 1162 | (IB.48) | (II.N.2) | 1201 | (IA.31) | (II.N.3) |
| 1124 | (IB.10) | (II.N.2) | 1163 | (IB.49) | (II.N.2) | 1202 | (IA.32) | (II.N.3) |
| 1125 | (IB.11) | (II.N.2) | 1164 | (IB.50) | (II.N.2) | 1203 | (IA.33) | (II.N.3) |
| 1126 | (IB.12) | (II.N.2) | 1165 | (IB.51) | (II.N.2) | 1204 | (IA.34) | (II.N.3) |
| 1127 | (IB.13) | (II.N.2) | 1166 | (IB.52) | (II.N.2) | 1205 | (IA.35) | (II.N.3) |
| 1128 | (IB.14) | (II.N.2) | 1167 | (IB.53) | (II.N.2) | 1206 | (IA.36) | (II.N.3) |
| 1129 | (IB.15) | (II.N.2) | 1168 | (IB.54) | (II.N.2) | 1207 | (IA.37) | (II.N.3) |
| 1130 | (IB.16) | (II.N.2) | 1169 | (IB.55) | (II.N.2) | 1208 | (IA.38) | (II.N.3) |
| 1131 | (IB.17) | (II.N.2) | 1170 | (IB.56) | (II.N.2) | 1209 | (IA.39) | (II.N.3) |
| 1132 | (IB.18) | (II.N.2) | 1171 | (IA.1) | (II.N.3) | 1210 | (IA.40) | (II.N.3) |
| 1133 | (IB.19) | (II.N.2) | 1172 | (IA.2) | (II.N.3) | 1211 | (IA.41) | (II.N.3) |
| 1134 | (IB.20) | (II.N.2) | 1173 | (IA.3) | (II.N.3) | 1212 | (IA.42) | (II.N.3) |
| 1135 | (IB.21) | (II.N.2) | 1174 | (IA.4) | (II.N.3) | 1213 | (IA.43) | (II.N.3) |
| 1136 | (IB.22) | (II.N.2) | 1175 | (IA.5) | (II.N.3) | 1214 | (IA.44) | (II.N.3) |
| 1137 | (IB.23) | (II.N.2) | 1176 | (IA.6) | (II.N.3) | 1215 | (IA.45) | (II.N.3) |
| 1138 | (IB.24) | (II.N.2) | 1177 | (IA.7) | (II.N.3) | 1216 | (IA.46) | (II.N.3) |
| 1139 | (IB.25) | (II.N.2) | 1178 | (IA.8) | (II.N.3) | 1217 | (IA.47) | (II.N.3) |
| 1140 | (IB.26) | (II.N.2) | 1179 | (IA.9) | (II.N.3) | 1218 | (IA.48) | (II.N.3) |
| 1141 | (IB.27) | (II.N.2) | 1180 | (IA.10) | (II.N.3) | 1219 | (IA.49) | (II.N.3) |
| 1142 | (IB.28) | (II.N.2) | 1181 | (IA.11) | (II.N.3) | 1220 | (IA.50) | (II.N.3) |
| 1143 | (IB.29) | (II.N.2) | 1182 | (IA.12) | (II.N.3) | 1221 | (IA.51) | (II.N.3) |

| Mixt. | Co.1 | Co. 2 | Mixt. | Co.1 | Co. 2 | Mixt. | Co.1 | Co. 2 |
|---|---|---|---|---|---|---|---|---|
| 1222 | (IA.52) | (II.N.3) | 1261 | (IB.30) | (II.N.3) | 1300 | (IA.13) | (II.N.4) |
| 1223 | (IA.53) | (II.N.3) | 1262 | (IB.31) | (II.N.3) | 1301 | (IA.14) | (II.N.4) |
| 1224 | (IA.54) | (II.N.3) | 1263 | (IB.32) | (II.N.3) | 1302 | (IA.15) | (II.N.4) |
| 1225 | (IA.55) | (II.N.3) | 1264 | (IB.33) | (II.N.3) | 1303 | (IA.16) | (II.N.4) |
| 1226 | (IA.56) | (II.N.3) | 1265 | (IB.34) | (II.N.3) | 1304 | (IA.17) | (II.N.4) |
| 1227 | (IA.57) | (II.N.3) | 1266 | (IB.35) | (II.N.3) | 1305 | (IA.18) | (II.N.4) |
| 1228 | (IA.58) | (II.N.3) | 1267 | (IB.36) | (II.N.3) | 1306 | (IA.19) | (II.N.4) |
| 1229 | (IA.59) | (II.N.3) | 1268 | (IB.37) | (II.N.3) | 1307 | (IA.20) | (II.N.4) |
| 1230 | (IA.60) | (II.N.3) | 1269 | (IB.38) | (II.N.3) | 1308 | (IA.21) | (II.N.4) |
| 1231 | (IA.61) | (II.N.3) | 1270 | (IB.39) | (II.N.3) | 1309 | (IA.22) | (II.N.4) |
| 1232 | (IB.1) | (II.N.3) | 1271 | (IB.40) | (II.N.3) | 1310 | (IA.23) | (II.N.4) |
| 1233 | (IB.2) | (II.N.3) | 1272 | (IB.41) | (II.N.3) | 1311 | (IA.24) | (II.N.4) |
| 1234 | (IB.3) | (II.N.3) | 1273 | (IB.42) | (II.N.3) | 1312 | (IA.25) | (II.N.4) |
| 1235 | (IB.4) | (II.N.3) | 1274 | (IB.43) | (II.N.3) | 1313 | (IA.26) | (II.N.4) |
| 1236 | (IB.5) | (II.N.3) | 1275 | (IB.44) | (II.N.3) | 1314 | (IA.27) | (II.N.4) |
| 1237 | (IB.6) | (II.N.3) | 1276 | (IB.45) | (II.N.3) | 1315 | (IA.28) | (II.N.4) |
| 1238 | (IB.7) | (II.N.3) | 1277 | (IB.46) | (II.N.3) | 1316 | (IA.29) | (II.N.4) |
| 1239 | (IB.8) | (II.N.3) | 1278 | (IB.47) | (II.N.3) | 1317 | (IA.30) | (II.N.4) |
| 1240 | (IB.9) | (II.N.3) | 1279 | (IB.48) | (II.N.3) | 1318 | (IA.31) | (II.N.4) |
| 1241 | (IB.10) | (II.N.3) | 1280 | (IB.49) | (II.N.3) | 1319 | (IA.32) | (II.N.4) |
| 1242 | (IB.11) | (II.N.3) | 1281 | (IB.50) | (II.N.3) | 1320 | (IA.33) | (II.N.4) |
| 1243 | (IB.12) | (II.N.3) | 1282 | (IB.51) | (II.N.3) | 1321 | (IA.34) | (II.N.4) |
| 1244 | (IB.13) | (II.N.3) | 1283 | (IB.52) | (II.N.3) | 1322 | (IA.35) | (II.N.4) |
| 1245 | (IB.14) | (II.N.3) | 1284 | (IB.53) | (II.N.3) | 1323 | (IA.36) | (II.N.4) |
| 1246 | (IB.15) | (II.N.3) | 1285 | (IB.54) | (II.N.3) | 1324 | (IA.37) | (II.N.4) |
| 1247 | (IB.16) | (II.N.3) | 1286 | (IB.55) | (II.N.3) | 1325 | (IA.38) | (II.N.4) |
| 1248 | (IB.17) | (II.N.3) | 1287 | (IB.56) | (II.N.3) | 1326 | (IA.39) | (II.N.4) |
| 1249 | (IB.18) | (II.N.3) | 1288 | (IA.1) | (II.N.4) | 1327 | (IA.40) | (II.N.4) |
| 1250 | (IB.19) | (II.N.3) | 1289 | (IA.2) | (II.N.4) | 1328 | (IA.41) | (II.N.4) |
| 1251 | (IB.20) | (II.N.3) | 1290 | (IA.3) | (II.N.4) | 1329 | (IA.42) | (II.N.4) |
| 1252 | (IB.21) | (II.N.3) | 1291 | (IA.4) | (II.N.4) | 1330 | (IA.43) | (II.N.4) |
| 1253 | (IB.22) | (II.N.3) | 1292 | (IA.5) | (II.N.4) | 1331 | (IA.44) | (II.N.4) |
| 1254 | (IB.23) | (II.N.3) | 1293 | (IA.6) | (II.N.4) | 1332 | (IA.45) | (II.N.4) |
| 1255 | (IB.24) | (II.N.3) | 1294 | (IA.7) | (II.N.4) | 1333 | (IA.46) | (II.N.4) |
| 1256 | (IB.25) | (II.N.3) | 1295 | (IA.8) | (II.N.4) | 1334 | (IA.47) | (II.N.4) |
| 1257 | (IB.26) | (II.N.3) | 1296 | (IA.9) | (II.N.4) | 1335 | (IA.48) | (II.N.4) |
| 1258 | (IB.27) | (II.N.3) | 1297 | (IA.10) | (II.N.4) | 1336 | (IA.49) | (II.N.4) |
| 1259 | (IB.28) | (II.N.3) | 1298 | (IA.11) | (II.N.4) | 1337 | (IA.50) | (II.N.4) |
| 1260 | (IB.29) | (II.N.3) | 1299 | (IA.12) | (II.N.4) | 1338 | (IA.51) | (II.N.4) |

| Mixt. | Co.1 | Co. 2 | Mixt. | Co.1 | Co. 2 | Mixt. | Co.1 | Co. 2 |
|-------|------|-------|-------|------|-------|-------|------|-------|
| 1339 | (IA.52) | (II.N.4) | 1378 | (IB.30) | (II.N.4) | 1417 | (IA.13) | (II.N.5) |
| 1340 | (IA.53) | (II.N.4) | 1379 | (IB.31) | (II.N.4) | 1418 | (IA.14) | (II.N.5) |
| 1341 | (IA.54) | (II.N.4) | 1380 | (IB.32) | (II.N.4) | 1419 | (IA.15) | (II.N.5) |
| 1342 | (IA.55) | (II.N.4) | 1381 | (IB.33) | (II.N.4) | 1420 | (IA.16) | (II.N.5) |
| 1343 | (IA.56) | (II.N.4) | 1382 | (IB.34) | (II.N.4) | 1421 | (IA.17) | (II.N.5) |
| 1344 | (IA.57) | (II.N.4) | 1383 | (IB.35) | (II.N.4) | 1422 | (IA.18) | (II.N.5) |
| 1345 | (IA.58) | (II.N.4) | 1384 | (IB.36) | (II.N.4) | 1423 | (IA.19) | (II.N.5) |
| 1346 | (IA.59) | (II.N.4) | 1385 | (IB.37) | (II.N.4) | 1424 | (IA.20) | (II.N.5) |
| 1347 | (IA.60) | (II.N.4) | 1386 | (IB.38) | (II.N.4) | 1425 | (IA.21) | (II.N.5) |
| 1348 | (IA.61) | (II.N.4) | 1387 | (IB.39) | (II.N.4) | 1426 | (IA.22) | (II.N.5) |
| 1349 | (IB.1) | (II.N.4) | 1388 | (IB.40) | (II.N.4) | 1427 | (IA.23) | (II.N.5) |
| 1350 | (IB.2) | (II.N.4) | 1389 | (IB.41) | (II.N.4) | 1428 | (IA.24) | (II.N.5) |
| 1351 | (IB.3) | (II.N.4) | 1390 | (IB.42) | (II.N.4) | 1429 | (IA.25) | (II.N.5) |
| 1352 | (IB.4) | (II.N.4) | 1391 | (IB.43) | (II.N.4) | 1430 | (IA.26) | (II.N.5) |
| 1353 | (IB.5) | (II.N.4) | 1392 | (IB.44) | (II.N.4) | 1431 | (IA.27) | (II.N.5) |
| 1354 | (IB.6) | (II.N.4) | 1393 | (IB.45) | (II.N.4) | 1432 | (IA.28) | (II.N.5) |
| 1355 | (IB.7) | (II.N.4) | 1394 | (IB.46) | (II.N.4) | 1433 | (IA.29) | (II.N.5) |
| 1356 | (IB.8) | (II.N.4) | 1395 | (IB.47) | (II.N.4) | 1434 | (IA.30) | (II.N.5) |
| 1357 | (IB.9) | (II.N.4) | 1396 | (IB.48) | (II.N.4) | 1435 | (IA.31) | (II.N.5) |
| 1358 | (IB.10) | (II.N.4) | 1397 | (IB.49) | (II.N.4) | 1436 | (IA.32) | (II.N.5) |
| 1359 | (IB.11) | (II.N.4) | 1398 | (IB.50) | (II.N.4) | 1437 | (IA.33) | (II.N.5) |
| 1360 | (IB.12) | (II.N.4) | 1399 | (IB.51) | (II.N.4) | 1438 | (IA.34) | (II.N.5) |
| 1361 | (IB.13) | (II.N.4) | 1400 | (IB.52) | (II.N.4) | 1439 | (IA.35) | (II.N.5) |
| 1362 | (IB.14) | (II.N.4) | 1401 | (IB.53) | (II.N.4) | 1440 | (IA.36) | (II.N.5) |
| 1363 | (IB.15) | (II.N.4) | 1402 | (IB.54) | (II.N.4) | 1441 | (IA.37) | (II.N.5) |
| 1364 | (IB.16) | (II.N.4) | 1403 | (IB.55) | (II.N.4) | 1442 | (IA.38) | (II.N.5) |
| 1365 | (IB.17) | (II.N.4) | 1404 | (IB.56) | (II.N.4) | 1443 | (IA.39) | (II.N.5) |
| 1366 | (IB.18) | (II.N.4) | 1405 | (IA.1) | (II.N.5) | 1444 | (IA.40) | (II.N.5) |
| 1367 | (IB.19) | (II.N.4) | 1406 | (IA.2) | (II.N.5) | 1445 | (IA.41) | (II.N.5) |
| 1368 | (IB.20) | (II.N.4) | 1407 | (IA.3) | (II.N.5) | 1446 | (IA.42) | (II.N.5) |
| 1369 | (IB.21) | (II.N.4) | 1408 | (IA.4) | (II.N.5) | 1447 | (IA.43) | (II.N.5) |
| 1370 | (IB.22) | (II.N.4) | 1409 | (IA.5) | (II.N.5) | 1448 | (IA.44) | (II.N.5) |
| 1371 | (IB.23) | (II.N.4) | 1410 | (IA.6) | (II.N.5) | 1449 | (IA.45) | (II.N.5) |
| 1372 | (IB.24) | (II.N.4) | 1411 | (IA.7) | (II.N.5) | 1450 | (IA.46) | (II.N.5) |
| 1373 | (IB.25) | (II.N.4) | 1412 | (IA.8) | (II.N.5) | 1451 | (IA.47) | (II.N.5) |
| 1374 | (IB.26) | (II.N.4) | 1413 | (IA.9) | (II.N.5) | 1452 | (IA.48) | (II.N.5) |
| 1375 | (IB.27) | (II.N.4) | 1414 | (IA.10) | (II.N.5) | 1453 | (IA.49) | (II.N.5) |
| 1376 | (IB.28) | (II.N.4) | 1415 | (IA.11) | (II.N.5) | 1454 | (IA.50) | (II.N.5) |
| 1377 | (IB.29) | (II.N.4) | 1416 | (IA.12) | (II.N.5) | 1455 | (IA.51) | (II.N.5) |

| Mixt. | Co.1 | Co. 2 | Mixt. | Co.1 | Co. 2 | Mixt. | Co.1 | Co. 2 |
|---|---|---|---|---|---|---|---|---|
| 1456 | (IA.52) | (II.N.5) | 1495 | (IB.30) | (II.N.5) | 1534 | (IA.13) | (II.N.6) |
| 1457 | (IA.53) | (II.N.5) | 1496 | (IB.31) | (II.N.5) | 1535 | (IA.14) | (II.N.6) |
| 1458 | (IA.54) | (II.N.5) | 1497 | (IB.32) | (II.N.5) | 1536 | (IA.15) | (II.N.6) |
| 1459 | (IA.55) | (II.N.5) | 1498 | (IB.33) | (II.N.5) | 1537 | (IA.16) | (II.N.6) |
| 1460 | (IA.56) | (II.N.5) | 1499 | (IB.34) | (II.N.5) | 1538 | (IA.17) | (II.N.6) |
| 1461 | (IA.57) | (II.N.5) | 1500 | (IB.35) | (II.N.5) | 1539 | (IA.18) | (II.N.6) |
| 1462 | (IA.58) | (II.N.5) | 1501 | (IB.36) | (II.N.5) | 1540 | (IA.19) | (II.N.6) |
| 1463 | (IA.59) | (II.N.5) | 1502 | (IB.37) | (II.N.5) | 1541 | (IA.20) | (II.N.6) |
| 1464 | (IA.60) | (II.N.5) | 1503 | (IB.38) | (II.N.5) | 1542 | (IA.21) | (II.N.6) |
| 1465 | (IA.61) | (II.N.5) | 1504 | (IB.39) | (II.N.5) | 1543 | (IA.22) | (II.N.6) |
| 1466 | (IB.1) | (II.N.5) | 1505 | (IB.40) | (II.N.5) | 1544 | (IA.23) | (II.N.6) |
| 1467 | (IB.2) | (II.N.5) | 1506 | (IB.41) | (II.N.5) | 1545 | (IA.24) | (II.N.6) |
| 1468 | (IB.3) | (II.N.5) | 1507 | (IB.42) | (II.N.5) | 1546 | (IA.25) | (II.N.6) |
| 1469 | (IB.4) | (II.N.5) | 1508 | (IB.43) | (II.N.5) | 1547 | (IA.26) | (II.N.6) |
| 1470 | (IB.5) | (II.N.5) | 1509 | (IB.44) | (II.N.5) | 1548 | (IA.27) | (II.N.6) |
| 1471 | (IB.6) | (II.N.5) | 1510 | (IB.45) | (II.N.5) | 1549 | (IA.28) | (II.N.6) |
| 1472 | (IB.7) | (II.N.5) | 1511 | (IB.46) | (II.N.5) | 1550 | (IA.29) | (II.N.6) |
| 1473 | (IB.8) | (II.N.5) | 1512 | (IB.47) | (II.N.5) | 1551 | (IA.30) | (II.N.6) |
| 1474 | (IB.9) | (II.N.5) | 1513 | (IB.48) | (II.N.5) | 1552 | (IA.31) | (II.N.6) |
| 1475 | (IB.10) | (II.N.5) | 1514 | (IB.49) | (II.N.5) | 1553 | (IA.32) | (II.N.6) |
| 1476 | (IB.11) | (II.N.5) | 1515 | (IB.50) | (II.N.5) | 1554 | (IA.33) | (II.N.6) |
| 1477 | (IB.12) | (II.N.5) | 1516 | (IB.51) | (II.N.5) | 1555 | (IA.34) | (II.N.6) |
| 1478 | (IB.13) | (II.N.5) | 1517 | (IB.52) | (II.N.5) | 1556 | (IA.35) | (II.N.6) |
| 1479 | (IB.14) | (II.N.5) | 1518 | (IB.53) | (II.N.5) | 1557 | (IA.36) | (II.N.6) |
| 1480 | (IB.15) | (II.N.5) | 1519 | (IB.54) | (II.N.5) | 1558 | (IA.37) | (II.N.6) |
| 1481 | (IB.16) | (II.N.5) | 1520 | (IB.55) | (II.N.5) | 1559 | (IA.38) | (II.N.6) |
| 1482 | (IB.17) | (II.N.5) | 1521 | (IB.56) | (II.N.5) | 1560 | (IA.39) | (II.N.6) |
| 1483 | (IB.18) | (II.N.5) | 1522 | (IA.1) | (II.N.6) | 1561 | (IA.40) | (II.N.6) |
| 1484 | (IB.19) | (II.N.5) | 1523 | (IA.2) | (II.N.6) | 1562 | (IA.41) | (II.N.6) |
| 1485 | (IB.20) | (II.N.5) | 1524 | (IA.3) | (II.N.6) | 1563 | (IA.42) | (II.N.6) |
| 1486 | (IB.21) | (II.N.5) | 1525 | (IA.4) | (II.N.6) | 1564 | (IA.43) | (II.N.6) |
| 1487 | (IB.22) | (II.N.5) | 1526 | (IA.5) | (II.N.6) | 1565 | (IA.44) | (II.N.6) |
| 1488 | (IB.23) | (II.N.5) | 1527 | (IA.6) | (II.N.6) | 1566 | (IA.45) | (II.N.6) |
| 1489 | (IB.24) | (II.N.5) | 1528 | (IA.7) | (II.N.6) | 1567 | (IA.46) | (II.N.6) |
| 1490 | (IB.25) | (II.N.5) | 1529 | (IA.8) | (II.N.6) | 1568 | (IA.47) | (II.N.6) |
| 1491 | (IB.26) | (II.N.5) | 1530 | (IA.9) | (II.N.6) | 1569 | (IA.48) | (II.N.6) |
| 1492 | (IB.27) | (II.N.5) | 1531 | (IA.10) | (II.N.6) | 1570 | (IA.49) | (II.N.6) |
| 1493 | (IB.28) | (II.N.5) | 1532 | (IA.11) | (II.N.6) | 1571 | (IA.50) | (II.N.6) |
| 1494 | (IB.29) | (II.N.5) | 1533 | (IA.12) | (II.N.6) | 1572 | (IA.51) | (II.N.6) |

| Mixt. | Co.1 | Co. 2 | Mixt. | Co.1 | Co. 2 | Mixt. | Co.1 | Co. 2 |
|---|---|---|---|---|---|---|---|---|
| 1573 | (IA.52) | (II.N.6) | 1612 | (IB.30) | (II.N.6) | 1651 | (IA.13) | (II.N.7) |
| 1574 | (IA.53) | (II.N.6) | 1613 | (IB.31) | (II.N.6) | 1652 | (IA.14) | (II.N.7) |
| 1575 | (IA.54) | (II.N.6) | 1614 | (IB.32) | (II.N.6) | 1653 | (IA.15) | (II.N.7) |
| 1576 | (IA.55) | (II.N.6) | 1615 | (IB.33) | (II.N.6) | 1654 | (IA.16) | (II.N.7) |
| 1577 | (IA.56) | (II.N.6) | 1616 | (IB.34) | (II.N.6) | 1655 | (IA.17) | (II.N.7) |
| 1578 | (IA.57) | (II.N.6) | 1617 | (IB.35) | (II.N.6) | 1656 | (IA.18) | (II.N.7) |
| 1579 | (IA.58) | (II.N.6) | 1618 | (IB.36) | (II.N.6) | 1657 | (IA.19) | (II.N.7) |
| 1580 | (IA.59) | (II.N.6) | 1619 | (IB.37) | (II.N.6) | 1658 | (IA.20) | (II.N.7) |
| 1581 | (IA.60) | (II.N.6) | 1620 | (IB.38) | (II.N.6) | 1659 | (IA.21) | (II.N.7) |
| 1582 | (IA.61) | (II.N.6) | 1621 | (IB.39) | (II.N.6) | 1660 | (IA.22) | (II.N.7) |
| 1583 | (IB.1) | (II.N.6) | 1622 | (IB.40) | (II.N.6) | 1661 | (IA.23) | (II.N.7) |
| 1584 | (IB.2) | (II.N.6) | 1623 | (IB.41) | (II.N.6) | 1662 | (IA.24) | (II.N.7) |
| 1585 | (IB.3) | (II.N.6) | 1624 | (IB.42) | (II.N.6) | 1663 | (IA.25) | (II.N.7) |
| 1586 | (IB.4) | (II.N.6) | 1625 | (IB.43) | (II.N.6) | 1664 | (IA.26) | (II.N.7) |
| 1587 | (IB.5) | (II.N.6) | 1626 | (IB.44) | (II.N.6) | 1665 | (IA.27) | (II.N.7) |
| 1588 | (IB.6) | (II.N.6) | 1627 | (IB.45) | (II.N.6) | 1666 | (IA.28) | (II.N.7) |
| 1589 | (IB.7) | (II.N.6) | 1628 | (IB.46) | (II.N.6) | 1667 | (IA.29) | (II.N.7) |
| 1590 | (IB.8) | (II.N.6) | 1629 | (IB.47) | (II.N.6) | 1668 | (IA.30) | (II.N.7) |
| 1591 | (IB.9) | (II.N.6) | 1630 | (IB.48) | (II.N.6) | 1669 | (IA.31) | (II.N.7) |
| 1592 | (IB.10) | (II.N.6) | 1631 | (IB.49) | (II.N.6) | 1670 | (IA.32) | (II.N.7) |
| 1593 | (IB.11) | (II.N.6) | 1632 | (IB.50) | (II.N.6) | 1671 | (IA.33) | (II.N.7) |
| 1594 | (IB.12) | (II.N.6) | 1633 | (IB.51) | (II.N.6) | 1672 | (IA.34) | (II.N.7) |
| 1595 | (IB.13) | (II.N.6) | 1634 | (IB.52) | (II.N.6) | 1673 | (IA.35) | (II.N.7) |
| 1596 | (IB.14) | (II.N.6) | 1635 | (IB.53) | (II.N.6) | 1674 | (IA.36) | (II.N.7) |
| 1597 | (IB.15) | (II.N.6) | 1636 | (IB.54) | (II.N.6) | 1675 | (IA.37) | (II.N.7) |
| 1598 | (IB.16) | (II.N.6) | 1637 | (IB.55) | (II.N.6) | 1676 | (IA.38) | (II.N.7) |
| 1599 | (IB.17) | (II.N.6) | 1638 | (IB.56) | (II.N.6) | 1677 | (IA.39) | (II.N.7) |
| 1600 | (IB.18) | (II.N.6) | 1639 | (IA.1) | (II.N.7) | 1678 | (IA.40) | (II.N.7) |
| 1601 | (IB.19) | (II.N.6) | 1640 | (IA.2) | (II.N.7) | 1679 | (IA.41) | (II.N.7) |
| 1602 | (IB.20) | (II.N.6) | 1641 | (IA.3) | (II.N.7) | 1680 | (IA.42) | (II.N.7) |
| 1603 | (IB.21) | (II.N.6) | 1642 | (IA.4) | (II.N.7) | 1681 | (IA.43) | (II.N.7) |
| 1604 | (IB.22) | (II.N.6) | 1643 | (IA.5) | (II.N.7) | 1682 | (IA.44) | (II.N.7) |
| 1605 | (IB.23) | (II.N.6) | 1644 | (IA.6) | (II.N.7) | 1683 | (IA.45) | (II.N.7) |
| 1606 | (IB.24) | (II.N.6) | 1645 | (IA.7) | (II.N.7) | 1684 | (IA.46) | (II.N.7) |
| 1607 | (IB.25) | (II.N.6) | 1646 | (IA.8) | (II.N.7) | 1685 | (IA.47) | (II.N.7) |
| 1608 | (IB.26) | (II.N.6) | 1647 | (IA.9) | (II.N.7) | 1686 | (IA.48) | (II.N.7) |
| 1609 | (IB.27) | (II.N.6) | 1648 | (IA.10) | (II.N.7) | 1687 | (IA.49) | (II.N.7) |
| 1610 | (IB.28) | (II.N.6) | 1649 | (IA.11) | (II.N.7) | 1688 | (IA.50) | (II.N.7) |
| 1611 | (IB.29) | (II.N.6) | 1650 | (IA.12) | (II.N.7) | 1689 | (IA.51) | (II.N.7) |

| Mixt. | Co.1 | Co. 2 | Mixt. | Co.1 | Co. 2 | Mixt. | Co.1 | Co. 2 |
|---|---|---|---|---|---|---|---|---|
| 1690 | (IA.52) | (II.N.7) | 1729 | (IB.30) | (II.N.7) | 1768 | (IA.13) | (II.N.8) |
| 1691 | (IA.53) | (II.N.7) | 1730 | (IB.31) | (II.N.7) | 1769 | (IA.14) | (II.N.8) |
| 1692 | (IA.54) | (II.N.7) | 1731 | (IB.32) | (II.N.7) | 1770 | (IA.15) | (II.N.8) |
| 1693 | (IA.55) | (II.N.7) | 1732 | (IB.33) | (II.N.7) | 1771 | (IA.16) | (II.N.8) |
| 1694 | (IA.56) | (II.N.7) | 1733 | (IB.34) | (II.N.7) | 1772 | (IA.17) | (II.N.8) |
| 1695 | (IA.57) | (II.N.7) | 1734 | (IB.35) | (II.N.7) | 1773 | (IA.18) | (II.N.8) |
| 1696 | (IA.58) | (II.N.7) | 1735 | (IB.36) | (II.N.7) | 1774 | (IA.19) | (II.N.8) |
| 1697 | (IA.59) | (II.N.7) | 1736 | (IB.37) | (II.N.7) | 1775 | (IA.20) | (II.N.8) |
| 1698 | (IA.60) | (II.N.7) | 1737 | (IB.38) | (II.N.7) | 1776 | (IA.21) | (II.N.8) |
| 1699 | (IA.61) | (II.N.7) | 1738 | (IB.39) | (II.N.7) | 1777 | (IA.22) | (II.N.8) |
| 1700 | (IB.1) | (II.N.7) | 1739 | (IB.40) | (II.N.7) | 1778 | (IA.23) | (II.N.8) |
| 1701 | (IB.2) | (II.N.7) | 1740 | (IB.41) | (II.N.7) | 1779 | (IA.24) | (II.N.8) |
| 1702 | (IB.3) | (II.N.7) | 1741 | (IB.42) | (II.N.7) | 1780 | (IA.25) | (II.N.8) |
| 1703 | (IB.4) | (II.N.7) | 1742 | (IB.43) | (II.N.7) | 1781 | (IA.26) | (II.N.8) |
| 1704 | (IB.5) | (II.N.7) | 1743 | (IB.44) | (II.N.7) | 1782 | (IA.27) | (II.N.8) |
| 1705 | (IB.6) | (II.N.7) | 1744 | (IB.45) | (II.N.7) | 1783 | (IA.28) | (II.N.8) |
| 1706 | (IB.7) | (II.N.7) | 1745 | (IB.46) | (II.N.7) | 1784 | (IA.29) | (II.N.8) |
| 1707 | (IB.8) | (II.N.7) | 1746 | (IB.47) | (II.N.7) | 1785 | (IA.30) | (II.N.8) |
| 1708 | (IB.9) | (II.N.7) | 1747 | (IB.48) | (II.N.7) | 1786 | (IA.31) | (II.N.8) |
| 1709 | (IB.10) | (II.N.7) | 1748 | (IB.49) | (II.N.7) | 1787 | (IA.32) | (II.N.8) |
| 1710 | (IB.11) | (II.N.7) | 1749 | (IB.50) | (II.N.7) | 1788 | (IA.33) | (II.N.8) |
| 1711 | (IB.12) | (II.N.7) | 1750 | (IB.51) | (II.N.7) | 1789 | (IA.34) | (II.N.8) |
| 1712 | (IB.13) | (II.N.7) | 1751 | (IB.52) | (II.N.7) | 1790 | (IA.35) | (II.N.8) |
| 1713 | (IB.14) | (II.N.7) | 1752 | (IB.53) | (II.N.7) | 1791 | (IA.36) | (II.N.8) |
| 1714 | (IB.15) | (II.N.7) | 1753 | (IB.54) | (II.N.7) | 1792 | (IA.37) | (II.N.8) |
| 1715 | (IB.16) | (II.N.7) | 1754 | (IB.55) | (II.N.7) | 1793 | (IA.38) | (II.N.8) |
| 1716 | (IB.17) | (II.N.7) | 1755 | (IB.56) | (II.N.7) | 1794 | (IA.39) | (II.N.8) |
| 1717 | (IB.18) | (II.N.7) | 1756 | (IA.1) | (II.N.8) | 1795 | (IA.40) | (II.N.8) |
| 1718 | (IB.19) | (II.N.7) | 1757 | (IA.2) | (II.N.8) | 1796 | (IA.41) | (II.N.8) |
| 1719 | (IB.20) | (II.N.7) | 1758 | (IA.3) | (II.N.8) | 1797 | (IA.42) | (II.N.8) |
| 1720 | (IB.21) | (II.N.7) | 1759 | (IA.4) | (II.N.8) | 1798 | (IA.43) | (II.N.8) |
| 1721 | (IB.22) | (II.N.7) | 1760 | (IA.5) | (II.N.8) | 1799 | (IA.44) | (II.N.8) |
| 1722 | (IB.23) | (II.N.7) | 1761 | (IA.6) | (II.N.8) | 1800 | (IA.45) | (II.N.8) |
| 1723 | (IB.24) | (II.N.7) | 1762 | (IA.7) | (II.N.8) | 1801 | (IA.46) | (II.N.8) |
| 1724 | (IB.25) | (II.N.7) | 1763 | (IA.8) | (II.N.8) | 1802 | (IA.47) | (II.N.8) |
| 1725 | (IB.26) | (II.N.7) | 1764 | (IA.9) | (II.N.8) | 1803 | (IA.48) | (II.N.8) |
| 1726 | (IB.27) | (II.N.7) | 1765 | (IA.10) | (II.N.8) | 1804 | (IA.49) | (II.N.8) |
| 1727 | (IB.28) | (II.N.7) | 1766 | (IA.11) | (II.N.8) | 1805 | (IA.50) | (II.N.8) |
| 1728 | (IB.29) | (II.N.7) | 1767 | (IA.12) | (II.N.8) | 1806 | (IA.51) | (II.N.8) |

| Mixt. | Co.1 | Co. 2 | Mixt. | Co.1 | Co. 2 | Mixt. | Co.1 | Co. 2 |
|---|---|---|---|---|---|---|---|---|
| 1807 | (IA.52) | (II.N.8) | 1846 | (IB.30) | (II.N.8) | 1885 | (IA.13) | (II.O.1) |
| 1808 | (IA.53) | (II.N.8) | 1847 | (IB.31) | (II.N.8) | 1886 | (IA.14) | (II.O.1) |
| 1809 | (IA.54) | (II.N.8) | 1848 | (IB.32) | (II.N.8) | 1887 | (IA.15) | (II.O.1) |
| 1810 | (IA.55) | (II.N.8) | 1849 | (IB.33) | (II.N.8) | 1888 | (IA.16) | (II.O.1) |
| 1811 | (IA.56) | (II.N.8) | 1850 | (IB.34) | (II.N.8) | 1889 | (IA.17) | (II.O.1) |
| 1812 | (IA.57) | (II.N.8) | 1851 | (IB.35) | (II.N.8) | 1890 | (IA.18) | (II.O.1) |
| 1813 | (IA.58) | (II.N.8) | 1852 | (IB.36) | (II.N.8) | 1891 | (IA.19) | (II.O.1) |
| 1814 | (IA.59) | (II.N.8) | 1853 | (IB.37) | (II.N.8) | 1892 | (IA.20) | (II.O.1) |
| 1815 | (IA.60) | (II.N.8) | 1854 | (IB.38) | (II.N.8) | 1893 | (IA.21) | (II.O.1) |
| 1816 | (IA.61) | (II.N.8) | 1855 | (IB.39) | (II.N.8) | 1894 | (IA.22) | (II.O.1) |
| 1817 | (IB.1) | (II.N.8) | 1856 | (IB.40) | (II.N.8) | 1895 | (IA.23) | (II.O.1) |
| 1818 | (IB.2) | (II.N.8) | 1857 | (IB.41) | (II.N.8) | 1896 | (IA.24) | (II.O.1) |
| 1819 | (IB.3) | (II.N.8) | 1858 | (IB.42) | (II.N.8) | 1897 | (IA.25) | (II.O.1) |
| 1820 | (IB.4) | (II.N.8) | 1859 | (IB.43) | (II.N.8) | 1898 | (IA.26) | (II.O.1) |
| 1821 | (IB.5) | (II.N.8) | 1860 | (IB.44) | (II.N.8) | 1899 | (IA.27) | (II.O.1) |
| 1822 | (IB.6) | (II.N.8) | 1861 | (IB.45) | (II.N.8) | 1900 | (IA.28) | (II.O.1) |
| 1823 | (IB.7) | (II.N.8) | 1862 | (IB.46) | (II.N.8) | 1901 | (IA.29) | (II.O.1) |
| 1824 | (IB.8) | (II.N.8) | 1863 | (IB.47) | (II.N.8) | 1902 | (IA.30) | (II.O.1) |
| 1825 | (IB.9) | (II.N.8) | 1864 | (IB.48) | (II.N.8) | 1903 | (IA.31) | (II.O.1) |
| 1826 | (IB.10) | (II.N.8) | 1865 | (IB.49) | (II.N.8) | 1904 | (IA.32) | (II.O.1) |
| 1827 | (IB.11) | (II.N.8) | 1866 | (IB.50) | (II.N.8) | 1905 | (IA.33) | (II.O.1) |
| 1828 | (IB.12) | (II.N.8) | 1867 | (IB.51) | (II.N.8) | 1906 | (IA.34) | (II.O.1) |
| 1829 | (IB.13) | (II.N.8) | 1868 | (IB.52) | (II.N.8) | 1907 | (IA.35) | (II.O.1) |
| 1830 | (IB.14) | (II.N.8) | 1869 | (IB.53) | (II.N.8) | 1908 | (IA.36) | (II.O.1) |
| 1831 | (IB.15) | (II.N.8) | 1870 | (IB.54) | (II.N.8) | 1909 | (IA.37) | (II.O.1) |
| 1832 | (IB.16) | (II.N.8) | 1871 | (IB.55) | (II.N.8) | 1910 | (IA.38) | (II.O.1) |
| 1833 | (IB.17) | (II.N.8) | 1872 | (IB.56) | (II.N.8) | 1911 | (IA.39) | (II.O.1) |
| 1834 | (IB.18) | (II.N.8) | 1873 | (IA.1) | (II.O.1) | 1912 | (IA.40) | (II.O.1) |
| 1835 | (IB.19) | (II.N.8) | 1874 | (IA.2) | (II.O.1) | 1913 | (IA.41) | (II.O.1) |
| 1836 | (IB.20) | (II.N.8) | 1875 | (IA.3) | (II.O.1) | 1914 | (IA.42) | (II.O.1) |
| 1837 | (IB.21) | (II.N.8) | 1876 | (IA.4) | (II.O.1) | 1915 | (IA.43) | (II.O.1) |
| 1838 | (IB.22) | (II.N.8) | 1877 | (IA.5) | (II.O.1) | 1916 | (IA.44) | (II.O.1) |
| 1839 | (IB.23) | (II.N.8) | 1878 | (IA.6) | (II.O.1) | 1917 | (IA.45) | (II.O.1) |
| 1840 | (IB.24) | (II.N.8) | 1879 | (IA.7) | (II.O.1) | 1918 | (IA.46) | (II.O.1) |
| 1841 | (IB.25) | (II.N.8) | 1880 | (IA.8) | (II.O.1) | 1919 | (IA.47) | (II.O.1) |
| 1842 | (IB.26) | (II.N.8) | 1881 | (IA.9) | (II.O.1) | 1920 | (IA.48) | (II.O.1) |
| 1843 | (IB.27) | (II.N.8) | 1882 | (IA.10) | (II.O.1) | 1921 | (IA.49) | (II.O.1) |
| 1844 | (IB.28) | (II.N.8) | 1883 | (IA.11) | (II.O.1) | 1922 | (IA.50) | (II.O.1) |
| 1845 | (IB.29) | (II.N.8) | 1884 | (IA.12) | (II.O.1) | 1923 | (IA.51) | (II.O.1) |

| Mixt. | Co.1 | Co. 2 | Mixt. | Co.1 | Co. 2 | Mixt. | Co.1 | Co. 2 |
|---|---|---|---|---|---|---|---|---|
| 1924 | (IA.52) | (II.O.1) | 1963 | (IB.30) | (II.O.1) | 2002 | (IA.13) | (II.O.2) |
| 1925 | (IA.53) | (II.O.1) | 1964 | (IB.31) | (II.O.1) | 2003 | (IA.14) | (II.O.2) |
| 1926 | (IA.54) | (II.O.1) | 1965 | (IB.32) | (II.O.1) | 2004 | (IA.15) | (II.O.2) |
| 1927 | (IA.55) | (II.O.1) | 1966 | (IB.33) | (II.O.1) | 2005 | (IA.16) | (II.O.2) |
| 1928 | (IA.56) | (II.O.1) | 1967 | (IB.34) | (II.O.1) | 2006 | (IA.17) | (II.O.2) |
| 1929 | (IA.57) | (II.O.1) | 1968 | (IB.35) | (II.O.1) | 2007 | (IA.18) | (II.O.2) |
| 1930 | (IA.58) | (II.O.1) | 1969 | (IB.36) | (II.O.1) | 2008 | (IA.19) | (II.O.2) |
| 1931 | (IA.59) | (II.O.1) | 1970 | (IB.37) | (II.O.1) | 2009 | (IA.20) | (II.O.2) |
| 1932 | (IA.60) | (II.O.1) | 1971 | (IB.38) | (II.O.1) | 2010 | (IA.21) | (II.O.2) |
| 1933 | (IA.61) | (II.O.1) | 1972 | (IB.39) | (II.O.1) | 2011 | (IA.22) | (II.O.2) |
| 1934 | (IB.1) | (II.O.1) | 1973 | (IB.40) | (II.O.1) | 2012 | (IA.23) | (II.O.2) |
| 1935 | (IB.2) | (II.O.1) | 1974 | (IB.41) | (II.O.1) | 2013 | (IA.24) | (II.O.2) |
| 1936 | (IB.3) | (II.O.1) | 1975 | (IB.42) | (II.O.1) | 2014 | (IA.25) | (II.O.2) |
| 1937 | (IB.4) | (II.O.1) | 1976 | (IB.43) | (II.O.1) | 2015 | (IA.26) | (II.O.2) |
| 1938 | (IB.5) | (II.O.1) | 1977 | (IB.44) | (II.O.1) | 2016 | (IA.27) | (II.O.2) |
| 1939 | (IB.6) | (II.O.1) | 1978 | (IB.45) | (II.O.1) | 2017 | (IA.28) | (II.O.2) |
| 1940 | (IB.7) | (II.O.1) | 1979 | (IB.46) | (II.O.1) | 2018 | (IA.29) | (II.O.2) |
| 1941 | (IB.8) | (II.O.1) | 1980 | (IB.47) | (II.O.1) | 2019 | (IA.30) | (II.O.2) |
| 1942 | (IB.9) | (II.O.1) | 1981 | (IB.48) | (II.O.1) | 2020 | (IA.31) | (II.O.2) |
| 1943 | (IB.10) | (II.O.1) | 1982 | (IB.49) | (II.O.1) | 2021 | (IA.32) | (II.O.2) |
| 1944 | (IB.11) | (II.O.1) | 1983 | (IB.50) | (II.O.1) | 2022 | (IA.33) | (II.O.2) |
| 1945 | (IB.12) | (II.O.1) | 1984 | (IB.51) | (II.O.1) | 2023 | (IA.34) | (II.O.2) |
| 1946 | (IB.13) | (II.O.1) | 1985 | (IB.52) | (II.O.1) | 2024 | (IA.35) | (II.O.2) |
| 1947 | (IB.14) | (II.O.1) | 1986 | (IB.53) | (II.O.1) | 2025 | (IA.36) | (II.O.2) |
| 1948 | (IB.15) | (II.O.1) | 1987 | (IB.54) | (II.O.1) | 2026 | (IA.37) | (II.O.2) |
| 1949 | (IB.16) | (II.O.1) | 1988 | (IB.55) | (II.O.1) | 2027 | (IA.38) | (II.O.2) |
| 1950 | (IB.17) | (II.O.1) | 1989 | (IB.56) | (II.O.1) | 2028 | (IA.39) | (II.O.2) |
| 1951 | (IB.18) | (II.O.1) | 1990 | (IA.1) | (II.O.2) | 2029 | (IA.40) | (II.O.2) |
| 1952 | (IB.19) | (II.O.1) | 1991 | (IA.2) | (II.O.2) | 2030 | (IA.41) | (II.O.2) |
| 1953 | (IB.20) | (II.O.1) | 1992 | (IA.3) | (II.O.2) | 2031 | (IA.42) | (II.O.2) |
| 1954 | (IB.21) | (II.O.1) | 1993 | (IA.4) | (II.O.2) | 2032 | (IA.43) | (II.O.2) |
| 1955 | (IB.22) | (II.O.1) | 1994 | (IA.5) | (II.O.2) | 2033 | (IA.44) | (II.O.2) |
| 1956 | (IB.23) | (II.O.1) | 1995 | (IA.6) | (II.O.2) | 2034 | (IA.45) | (II.O.2) |
| 1957 | (IB.24) | (II.O.1) | 1996 | (IA.7) | (II.O.2) | 2035 | (IA.46) | (II.O.2) |
| 1958 | (IB.25) | (II.O.1) | 1997 | (IA.8) | (II.O.2) | 2036 | (IA.47) | (II.O.2) |
| 1959 | (IB.26) | (II.O.1) | 1998 | (IA.9) | (II.O.2) | 2037 | (IA.48) | (II.O.2) |
| 1960 | (IB.27) | (II.O.1) | 1999 | (IA.10) | (II.O.2) | 2038 | (IA.49) | (II.O.2) |
| 1961 | (IB.28) | (II.O.1) | 2000 | (IA.11) | (II.O.2) | 2039 | (IA.50) | (II.O.2) |
| 1962 | (IB.29) | (II.O.1) | 2001 | (IA.12) | (II.O.2) | 2040 | (IA.51) | (II.O.2) |

| Mixt. | Co.1 | Co. 2 | | Mixt. | Co.1 | Co. 2 | | Mixt. | Co.1 | Co. 2 |
|---|---|---|---|---|---|---|---|---|---|---|
| 2041 | (IA.52) | (II.O.2) | | 2080 | (IB.30) | (II.O.2) | | 2119 | (IA.13) | (II.O.3) |
| 2042 | (IA.53) | (II.O.2) | | 2081 | (IB.31) | (II.O.2) | | 2120 | (IA.14) | (II.O.3) |
| 2043 | (IA.54) | (II.O.2) | | 2082 | (IB.32) | (II.O.2) | | 2121 | (IA.15) | (II.O.3) |
| 2044 | (IA.55) | (II.O.2) | | 2083 | (IB.33) | (II.O.2) | | 2122 | (IA.16) | (II.O.3) |
| 2045 | (IA.56) | (II.O.2) | | 2084 | (IB.34) | (II.O.2) | | 2123 | (IA.17) | (II.O.3) |
| 2046 | (IA.57) | (II.O.2) | | 2085 | (IB.35) | (II.O.2) | | 2124 | (IA.18) | (II.O.3) |
| 2047 | (IA.58) | (II.O.2) | | 2086 | (IB.36) | (II.O.2) | | 2125 | (IA.19) | (II.O.3) |
| 2048 | (IA.59) | (II.O.2) | | 2087 | (IB.37) | (II.O.2) | | 2126 | (IA.20) | (II.O.3) |
| 2049 | (IA.60) | (II.O.2) | | 2088 | (IB.38) | (II.O.2) | | 2127 | (IA.21) | (II.O.3) |
| 2050 | (IA.61) | (II.O.2) | | 2089 | (IB.39) | (II.O.2) | | 2128 | (IA.22) | (II.O.3) |
| 2051 | (IB.1) | (II.O.2) | | 2090 | (IB.40) | (II.O.2) | | 2129 | (IA.23) | (II.O.3) |
| 2052 | (IB.2) | (II.O.2) | | 2091 | (IB.41) | (II.O.2) | | 2130 | (IA.24) | (II.O.3) |
| 2053 | (IB.3) | (II.O.2) | | 2092 | (IB.42) | (II.O.2) | | 2131 | (IA.25) | (II.O.3) |
| 2054 | (IB.4) | (II.O.2) | | 2093 | (IB.43) | (II.O.2) | | 2132 | (IA.26) | (II.O.3) |
| 2055 | (IB.5) | (II.O.2) | | 2094 | (IB.44) | (II.O.2) | | 2133 | (IA.27) | (II.O.3) |
| 2056 | (IB.6) | (II.O.2) | | 2095 | (IB.45) | (II.O.2) | | 2134 | (IA.28) | (II.O.3) |
| 2057 | (IB.7) | (II.O.2) | | 2096 | (IB.46) | (II.O.2) | | 2135 | (IA.29) | (II.O.3) |
| 2058 | (IB.8) | (II.O.2) | | 2097 | (IB.47) | (II.O.2) | | 2136 | (IA.30) | (II.O.3) |
| 2059 | (IB.9) | (II.O.2) | | 2098 | (IB.48) | (II.O.2) | | 2137 | (IA.31) | (II.O.3) |
| 2060 | (IB.10) | (II.O.2) | | 2099 | (IB.49) | (II.O.2) | | 2138 | (IA.32) | (II.O.3) |
| 2061 | (IB.11) | (II.O.2) | | 2100 | (IB.50) | (II.O.2) | | 2139 | (IA.33) | (II.O.3) |
| 2062 | (IB.12) | (II.O.2) | | 2101 | (IB.51) | (II.O.2) | | 2140 | (IA.34) | (II.O.3) |
| 2063 | (IB.13) | (II.O.2) | | 2102 | (IB.52) | (II.O.2) | | 2141 | (IA.35) | (II.O.3) |
| 2064 | (IB.14) | (II.O.2) | | 2103 | (IB.53) | (II.O.2) | | 2142 | (IA.36) | (II.O.3) |
| 2065 | (IB.15) | (II.O.2) | | 2104 | (IB.54) | (II.O.2) | | 2143 | (IA.37) | (II.O.3) |
| 2066 | (IB.16) | (II.O.2) | | 2105 | (IB.55) | (II.O.2) | | 2144 | (IA.38) | (II.O.3) |
| 2067 | (IB.17) | (II.O.2) | | 2106 | (IB.56) | (II.O.2) | | 2145 | (IA.39) | (II.O.3) |
| 2068 | (IB.18) | (II.O.2) | | 2107 | (IA.1) | (II.O.3) | | 2146 | (IA.40) | (II.O.3) |
| 2069 | (IB.19) | (II.O.2) | | 2108 | (IA.2) | (II.O.3) | | 2147 | (IA.41) | (II.O.3) |
| 2070 | (IB.20) | (II.O.2) | | 2109 | (IA.3) | (II.O.3) | | 2148 | (IA.42) | (II.O.3) |
| 2071 | (IB.21) | (II.O.2) | | 2110 | (IA.4) | (II.O.3) | | 2149 | (IA.43) | (II.O.3) |
| 2072 | (IB.22) | (II.O.2) | | 2111 | (IA.5) | (II.O.3) | | 2150 | (IA.44) | (II.O.3) |
| 2073 | (IB.23) | (II.O.2) | | 2112 | (IA.6) | (II.O.3) | | 2151 | (IA.45) | (II.O.3) |
| 2074 | (IB.24) | (II.O.2) | | 2113 | (IA.7) | (II.O.3) | | 2152 | (IA.46) | (II.O.3) |
| 2075 | (IB.25) | (II.O.2) | | 2114 | (IA.8) | (II.O.3) | | 2153 | (IA.47) | (II.O.3) |
| 2076 | (IB.26) | (II.O.2) | | 2115 | (IA.9) | (II.O.3) | | 2154 | (IA.48) | (II.O.3) |
| 2077 | (IB.27) | (II.O.2) | | 2116 | (IA.10) | (II.O.3) | | 2155 | (IA.49) | (II.O.3) |
| 2078 | (IB.28) | (II.O.2) | | 2117 | (IA.11) | (II.O.3) | | 2156 | (IA.50) | (II.O.3) |
| 2079 | (IB.29) | (II.O.2) | | 2118 | (IA.12) | (II.O.3) | | 2157 | (IA.51) | (II.O.3) |

| Mixt. | Co.1 | Co. 2 | Mixt. | Co.1 | Co. 2 | Mixt. | Co.1 | Co. 2 |
|---|---|---|---|---|---|---|---|---|
| 2158 | (IA.52) | (II.O.3) | 2197 | (IB.30) | (II.O.3) | 2236 | (IA.13) | (II.O.4) |
| 2159 | (IA.53) | (II.O.3) | 2198 | (IB.31) | (II.O.3) | 2237 | (IA.14) | (II.O.4) |
| 2160 | (IA.54) | (II.O.3) | 2199 | (IB.32) | (II.O.3) | 2238 | (IA.15) | (II.O.4) |
| 2161 | (IA.55) | (II.O.3) | 2200 | (IB.33) | (II.O.3) | 2239 | (IA.16) | (II.O.4) |
| 2162 | (IA.56) | (II.O.3) | 2201 | (IB.34) | (II.O.3) | 2240 | (IA.17) | (II.O.4) |
| 2163 | (IA.57) | (II.O.3) | 2202 | (IB.35) | (II.O.3) | 2241 | (IA.18) | (II.O.4) |
| 2164 | (IA.58) | (II.O.3) | 2203 | (IB.36) | (II.O.3) | 2242 | (IA.19) | (II.O.4) |
| 2165 | (IA.59) | (II.O.3) | 2204 | (IB.37) | (II.O.3) | 2243 | (IA.20) | (II.O.4) |
| 2166 | (IA.60) | (II.O.3) | 2205 | (IB.38) | (II.O.3) | 2244 | (IA.21) | (II.O.4) |
| 2167 | (IA.61) | (II.O.3) | 2206 | (IB.39) | (II.O.3) | 2245 | (IA.22) | (II.O.4) |
| 2168 | (IB.1) | (II.O.3) | 2207 | (IB.40) | (II.O.3) | 2246 | (IA.23) | (II.O.4) |
| 2169 | (IB.2) | (II.O.3) | 2208 | (IB.41) | (II.O.3) | 2247 | (IA.24) | (II.O.4) |
| 2170 | (IB.3) | (II.O.3) | 2209 | (IB.42) | (II.O.3) | 2248 | (IA.25) | (II.O.4) |
| 2171 | (IB.4) | (II.O.3) | 2210 | (IB.43) | (II.O.3) | 2249 | (IA.26) | (II.O.4) |
| 2172 | (IB.5) | (II.O.3) | 2211 | (IB.44) | (II.O.3) | 2250 | (IA.27) | (II.O.4) |
| 2173 | (IB.6) | (II.O.3) | 2212 | (IB.45) | (II.O.3) | 2251 | (IA.28) | (II.O.4) |
| 2174 | (IB.7) | (II.O.3) | 2213 | (IB.46) | (II.O.3) | 2252 | (IA.29) | (II.O.4) |
| 2175 | (IB.8) | (II.O.3) | 2214 | (IB.47) | (II.O.3) | 2253 | (IA.30) | (II.O.4) |
| 2176 | (IB.9) | (II.O.3) | 2215 | (IB.48) | (II.O.3) | 2254 | (IA.31) | (II.O.4) |
| 2177 | (IB.10) | (II.O.3) | 2216 | (IB.49) | (II.O.3) | 2255 | (IA.32) | (II.O.4) |
| 2178 | (IB.11) | (II.O.3) | 2217 | (IB.50) | (II.O.3) | 2256 | (IA.33) | (II.O.4) |
| 2179 | (IB.12) | (II.O.3) | 2218 | (IB.51) | (II.O.3) | 2257 | (IA.34) | (II.O.4) |
| 2180 | (IB.13) | (II.O.3) | 2219 | (IB.52) | (II.O.3) | 2258 | (IA.35) | (II.O.4) |
| 2181 | (IB.14) | (II.O.3) | 2220 | (IB.53) | (II.O.3) | 2259 | (IA.36) | (II.O.4) |
| 2182 | (IB.15) | (II.O.3) | 2221 | (IB.54) | (II.O.3) | 2260 | (IA.37) | (II.O.4) |
| 2183 | (IB.16) | (II.O.3) | 2222 | (IB.55) | (II.O.3) | 2261 | (IA.38) | (II.O.4) |
| 2184 | (IB.17) | (II.O.3) | 2223 | (IB.56) | (II.O.3) | 2262 | (IA.39) | (II.O.4) |
| 2185 | (IB.18) | (II.O.3) | 2224 | (IA.1) | (II.O.4) | 2263 | (IA.40) | (II.O.4) |
| 2186 | (IB.19) | (II.O.3) | 2225 | (IA.2) | (II.O.4) | 2264 | (IA.41) | (II.O.4) |
| 2187 | (IB.20) | (II.O.3) | 2226 | (IA.3) | (II.O.4) | 2265 | (IA.42) | (II.O.4) |
| 2188 | (IB.21) | (II.O.3) | 2227 | (IA.4) | (II.O.4) | 2266 | (IA.43) | (II.O.4) |
| 2189 | (IB.22) | (II.O.3) | 2228 | (IA.5) | (II.O.4) | 2267 | (IA.44) | (II.O.4) |
| 2190 | (IB.23) | (II.O.3) | 2229 | (IA.6) | (II.O.4) | 2268 | (IA.45) | (II.O.4) |
| 2191 | (IB.24) | (II.O.3) | 2230 | (IA.7) | (II.O.4) | 2269 | (IA.46) | (II.O.4) |
| 2192 | (IB.25) | (II.O.3) | 2231 | (IA.8) | (II.O.4) | 2270 | (IA.47) | (II.O.4) |
| 2193 | (IB.26) | (II.O.3) | 2232 | (IA.9) | (II.O.4) | 2271 | (IA.48) | (II.O.4) |
| 2194 | (IB.27) | (II.O.3) | 2233 | (IA.10) | (II.O.4) | 2272 | (IA.49) | (II.O.4) |
| 2195 | (IB.28) | (II.O.3) | 2234 | (IA.11) | (II.O.4) | 2273 | (IA.50) | (II.O.4) |
| 2196 | (IB.29) | (II.O.3) | 2235 | (IA.12) | (II.O.4) | 2274 | (IA.51) | (II.O.4) |

| Mixt. | Co.1 | Co. 2 | Mixt. | Co.1 | Co. 2 | Mixt. | Co.1 | Co. 2 |
|---|---|---|---|---|---|---|---|---|
| 2275 | (IA.52) | (II.O.4) | 2314 | (IB.30) | (II.O.4) | 2353 | (IA.13) | (II.O.5) |
| 2276 | (IA.53) | (II.O.4) | 2315 | (IB.31) | (II.O.4) | 2354 | (IA.14) | (II.O.5) |
| 2277 | (IA.54) | (II.O.4) | 2316 | (IB.32) | (II.O.4) | 2355 | (IA.15) | (II.O.5) |
| 2278 | (IA.55) | (II.O.4) | 2317 | (IB.33) | (II.O.4) | 2356 | (IA.16) | (II.O.5) |
| 2279 | (IA.56) | (II.O.4) | 2318 | (IB.34) | (II.O.4) | 2357 | (IA.17) | (II.O.5) |
| 2280 | (IA.57) | (II.O.4) | 2319 | (IB.35) | (II.O.4) | 2358 | (IA.18) | (II.O.5) |
| 2281 | (IA.58) | (II.O.4) | 2320 | (IB.36) | (II.O.4) | 2359 | (IA.19) | (II.O.5) |
| 2282 | (IA.59) | (II.O.4) | 2321 | (IB.37) | (II.O.4) | 2360 | (IA.20) | (II.O.5) |
| 2283 | (IA.60) | (II.O.4) | 2322 | (IB.38) | (II.O.4) | 2361 | (IA.21) | (II.O.5) |
| 2284 | (IA.61) | (II.O.4) | 2323 | (IB.39) | (II.O.4) | 2362 | (IA.22) | (II.O.5) |
| 2285 | (IB.1) | (II.O.4) | 2324 | (IB.40) | (II.O.4) | 2363 | (IA.23) | (II.O.5) |
| 2286 | (IB.2) | (II.O.4) | 2325 | (IB.41) | (II.O.4) | 2364 | (IA.24) | (II.O.5) |
| 2287 | (IB.3) | (II.O.4) | 2326 | (IB.42) | (II.O.4) | 2365 | (IA.25) | (II.O.5) |
| 2288 | (IB.4) | (II.O.4) | 2327 | (IB.43) | (II.O.4) | 2366 | (IA.26) | (II.O.5) |
| 2289 | (IB.5) | (II.O.4) | 2328 | (IB.44) | (II.O.4) | 2367 | (IA.27) | (II.O.5) |
| 2290 | (IB.6) | (II.O.4) | 2329 | (IB.45) | (II.O.4) | 2368 | (IA.28) | (II.O.5) |
| 2291 | (IB.7) | (II.O.4) | 2330 | (IB.46) | (II.O.4) | 2369 | (IA.29) | (II.O.5) |
| 2292 | (IB.8) | (II.O.4) | 2331 | (IB.47) | (II.O.4) | 2370 | (IA.30) | (II.O.5) |
| 2293 | (IB.9) | (II.O.4) | 2332 | (IB.48) | (II.O.4) | 2371 | (IA.31) | (II.O.5) |
| 2294 | (IB.10) | (II.O.4) | 2333 | (IB.49) | (II.O.4) | 2372 | (IA.32) | (II.O.5) |
| 2295 | (IB.11) | (II.O.4) | 2334 | (IB.50) | (II.O.4) | 2373 | (IA.33) | (II.O.5) |
| 2296 | (IB.12) | (II.O.4) | 2335 | (IB.51) | (II.O.4) | 2374 | (IA.34) | (II.O.5) |
| 2297 | (IB.13) | (II.O.4) | 2336 | (IB.52) | (II.O.4) | 2375 | (IA.35) | (II.O.5) |
| 2298 | (IB.14) | (II.O.4) | 2337 | (IB.53) | (II.O.4) | 2376 | (IA.36) | (II.O.5) |
| 2299 | (IB.15) | (II.O.4) | 2338 | (IB.54) | (II.O.4) | 2377 | (IA.37) | (II.O.5) |
| 2300 | (IB.16) | (II.O.4) | 2339 | (IB.55) | (II.O.4) | 2378 | (IA.38) | (II.O.5) |
| 2301 | (IB.17) | (II.O.4) | 2340 | (IB.56) | (II.O.4) | 2379 | (IA.39) | (II.O.5) |
| 2302 | (IB.18) | (II.O.4) | 2341 | (IA.1) | (II.O.5) | 2380 | (IA.40) | (II.O.5) |
| 2303 | (IB.19) | (II.O.4) | 2342 | (IA.2) | (II.O.5) | 2381 | (IA.41) | (II.O.5) |
| 2304 | (IB.20) | (II.O.4) | 2343 | (IA.3) | (II.O.5) | 2382 | (IA.42) | (II.O.5) |
| 2305 | (IB.21) | (II.O.4) | 2344 | (IA.4) | (II.O.5) | 2383 | (IA.43) | (II.O.5) |
| 2306 | (IB.22) | (II.O.4) | 2345 | (IA.5) | (II.O.5) | 2384 | (IA.44) | (II.O.5) |
| 2307 | (IB.23) | (II.O.4) | 2346 | (IA.6) | (II.O.5) | 2385 | (IA.45) | (II.O.5) |
| 2308 | (IB.24) | (II.O.4) | 2347 | (IA.7) | (II.O.5) | 2386 | (IA.46) | (II.O.5) |
| 2309 | (IB.25) | (II.O.4) | 2348 | (IA.8) | (II.O.5) | 2387 | (IA.47) | (II.O.5) |
| 2310 | (IB.26) | (II.O.4) | 2349 | (IA.9) | (II.O.5) | 2388 | (IA.48) | (II.O.5) |
| 2311 | (IB.27) | (II.O.4) | 2350 | (IA.10) | (II.O.5) | 2389 | (IA.49) | (II.O.5) |
| 2312 | (IB.28) | (II.O.4) | 2351 | (IA.11) | (II.O.5) | 2390 | (IA.50) | (II.O.5) |
| 2313 | (IB.29) | (II.O.4) | 2352 | (IA.12) | (II.O.5) | 2391 | (IA.51) | (II.O.5) |

| Mixt. | Co.1 | Co. 2 | Mixt. | Co.1 | Co. 2 | Mixt. | Co.1 | Co. 2 |
|---|---|---|---|---|---|---|---|---|
| 2392 | (IA.52) | (II.O.5) | 2431 | (IB.30) | (II.O.5) | 2470 | (IA.13) | (II.O.6) |
| 2393 | (IA.53) | (II.O.5) | 2432 | (IB.31) | (II.O.5) | 2471 | (IA.14) | (II.O.6) |
| 2394 | (IA.54) | (II.O.5) | 2433 | (IB.32) | (II.O.5) | 2472 | (IA.15) | (II.O.6) |
| 2395 | (IA.55) | (II.O.5) | 2434 | (IB.33) | (II.O.5) | 2473 | (IA.16) | (II.O.6) |
| 2396 | (IA.56) | (II.O.5) | 2435 | (IB.34) | (II.O.5) | 2474 | (IA.17) | (II.O.6) |
| 2397 | (IA.57) | (II.O.5) | 2436 | (IB.35) | (II.O.5) | 2475 | (IA.18) | (II.O.6) |
| 2398 | (IA.58) | (II.O.5) | 2437 | (IB.36) | (II.O.5) | 2476 | (IA.19) | (II.O.6) |
| 2399 | (IA.59) | (II.O.5) | 2438 | (IB.37) | (II.O.5) | 2477 | (IA.20) | (II.O.6) |
| 2400 | (IA.60) | (II.O.5) | 2439 | (IB.38) | (II.O.5) | 2478 | (IA.21) | (II.O.6) |
| 2401 | (IA.61) | (II.O.5) | 2440 | (IB.39) | (II.O.5) | 2479 | (IA.22) | (II.O.6) |
| 2402 | (IB.1) | (II.O.5) | 2441 | (IB.40) | (II.O.5) | 2480 | (IA.23) | (II.O.6) |
| 2403 | (IB.2) | (II.O.5) | 2442 | (IB.41) | (II.O.5) | 2481 | (IA.24) | (II.O.6) |
| 2404 | (IB.3) | (II.O.5) | 2443 | (IB.42) | (II.O.5) | 2482 | (IA.25) | (II.O.6) |
| 2405 | (IB.4) | (II.O.5) | 2444 | (IB.43) | (II.O.5) | 2483 | (IA.26) | (II.O.6) |
| 2406 | (IB.5) | (II.O.5) | 2445 | (IB.44) | (II.O.5) | 2484 | (IA.27) | (II.O.6) |
| 2407 | (IB.6) | (II.O.5) | 2446 | (IB.45) | (II.O.5) | 2485 | (IA.28) | (II.O.6) |
| 2408 | (IB.7) | (II.O.5) | 2447 | (IB.46) | (II.O.5) | 2486 | (IA.29) | (II.O.6) |
| 2409 | (IB.8) | (II.O.5) | 2448 | (IB.47) | (II.O.5) | 2487 | (IA.30) | (II.O.6) |
| 2410 | (IB.9) | (II.O.5) | 2449 | (IB.48) | (II.O.5) | 2488 | (IA.31) | (II.O.6) |
| 2411 | (IB.10) | (II.O.5) | 2450 | (IB.49) | (II.O.5) | 2489 | (IA.32) | (II.O.6) |
| 2412 | (IB.11) | (II.O.5) | 2451 | (IB.50) | (II.O.5) | 2490 | (IA.33) | (II.O.6) |
| 2413 | (IB.12) | (II.O.5) | 2452 | (IB.51) | (II.O.5) | 2491 | (IA.34) | (II.O.6) |
| 2414 | (IB.13) | (II.O.5) | 2453 | (IB.52) | (II.O.5) | 2492 | (IA.35) | (II.O.6) |
| 2415 | (IB.14) | (II.O.5) | 2454 | (IB.53) | (II.O.5) | 2493 | (IA.36) | (II.O.6) |
| 2416 | (IB.15) | (II.O.5) | 2455 | (IB.54) | (II.O.5) | 2494 | (IA.37) | (II.O.6) |
| 2417 | (IB.16) | (II.O.5) | 2456 | (IB.55) | (II.O.5) | 2495 | (IA.38) | (II.O.6) |
| 2418 | (IB.17) | (II.O.5) | 2457 | (IB.56) | (II.O.5) | 2496 | (IA.39) | (II.O.6) |
| 2419 | (IB.18) | (II.O.5) | 2458 | (IA.1) | (II.O.6) | 2497 | (IA.40) | (II.O.6) |
| 2420 | (IB.19) | (II.O.5) | 2459 | (IA.2) | (II.O.6) | 2498 | (IA.41) | (II.O.6) |
| 2421 | (IB.20) | (II.O.5) | 2460 | (IA.3) | (II.O.6) | 2499 | (IA.42) | (II.O.6) |
| 2422 | (IB.21) | (II.O.5) | 2461 | (IA.4) | (II.O.6) | 2500 | (IA.43) | (II.O.6) |
| 2423 | (IB.22) | (II.O.5) | 2462 | (IA.5) | (II.O.6) | 2501 | (IA.44) | (II.O.6) |
| 2424 | (IB.23) | (II.O.5) | 2463 | (IA.6) | (II.O.6) | 2502 | (IA.45) | (II.O.6) |
| 2425 | (IB.24) | (II.O.5) | 2464 | (IA.7) | (II.O.6) | 2503 | (IA.46) | (II.O.6) |
| 2426 | (IB.25) | (II.O.5) | 2465 | (IA.8) | (II.O.6) | 2504 | (IA.47) | (II.O.6) |
| 2427 | (IB.26) | (II.O.5) | 2466 | (IA.9) | (II.O.6) | 2505 | (IA.48) | (II.O.6) |
| 2428 | (IB.27) | (II.O.5) | 2467 | (IA.10) | (II.O.6) | 2506 | (IA.49) | (II.O.6) |
| 2429 | (IB.28) | (II.O.5) | 2468 | (IA.11) | (II.O.6) | 2507 | (IA.50) | (II.O.6) |
| 2430 | (IB.29) | (II.O.5) | 2469 | (IA.12) | (II.O.6) | 2508 | (IA.51) | (II.O.6) |

| Mixt. | Co.1 | Co. 2 | Mixt. | Co.1 | Co. 2 | Mixt. | Co.1 | Co. 2 |
|---|---|---|---|---|---|---|---|---|
| 2509 | (IA.52) | (II.O.6) | 2531 | (IB.13) | (II.O.6) | 2553 | (IB.35) | (II.O.6) |
| 2510 | (IA.53) | (II.O.6) | 2532 | (IB.14) | (II.O.6) | 2554 | (IB.36) | (II.O.6) |
| 2511 | (IA.54) | (II.O.6) | 2533 | (IB.15) | (II.O.6) | 2555 | (IB.37) | (II.O.6) |
| 2512 | (IA.55) | (II.O.6) | 2534 | (IB.16) | (II.O.6) | 2556 | (IB.38) | (II.O.6) |
| 2513 | (IA.56) | (II.O.6) | 2535 | (IB.17) | (II.O.6) | 2557 | (IB.39) | (II.O.6) |
| 2514 | (IA.57) | (II.O.6) | 2536 | (IB.18) | (II.O.6) | 2558 | (IB.40) | (II.O.6) |
| 2515 | (IA.58) | (II.O.6) | 2537 | (IB.19) | (II.O.6) | 2559 | (IB.41) | (II.O.6) |
| 2516 | (IA.59) | (II.O.6) | 2538 | (IB.20) | (II.O.6) | 2560 | (IB.42) | (II.O.6) |
| 2517 | (IA.60) | (II.O.6) | 2539 | (IB.21) | (II.O.6) | 2561 | (IB.43) | (II.O.6) |
| 2518 | (IA.61) | (II.O.6) | 2540 | (IB.22) | (II.O.6) | 2562 | (IB.44) | (II.O.6) |
| 2519 | (IB.1) | (II.O.6) | 2541 | (IB.23) | (II.O.6) | 2563 | (IB.45) | (II.O.6) |
| 2520 | (IB.2) | (II.O.6) | 2542 | (IB.24) | (II.O.6) | 2564 | (IB.46) | (II.O.6) |
| 2521 | (IB.3) | (II.O.6) | 2543 | (IB.25) | (II.O.6) | 2565 | (IB.47) | (II.O.6) |
| 2522 | (IB.4) | (II.O.6) | 2544 | (IB.26) | (II.O.6) | 2566 | (IB.48) | (II.O.6) |
| 2523 | (IB.5) | (II.O.6) | 2545 | (IB.27) | (II.O.6) | 2567 | (IB.49) | (II.O.6) |
| 2524 | (IB.6) | (II.O.6) | 2546 | (IB.28) | (II.O.6) | 2568 | (IB.50) | (II.O.6) |
| 2525 | (IB.7) | (II.O.6) | 2547 | (IB.29) | (II.O.6) | 2569 | (IB.51) | (II.O.6) |
| 2526 | (IB.8) | (II.O.6) | 2548 | (IB.30) | (II.O.6) | 2570 | (IB.52) | (II.O.6) |
| 2527 | (IB.9) | (II.O.6) | 2549 | (IB.31) | (II.O.6) | 2571 | (IB.53) | (II.O.6) |
| 2528 | (IB.10) | (II.O.6) | 2550 | (IB.32) | (II.O.6) | 2572 | (IB.54) | (II.O.6) |
| 2529 | (IB.11) | (II.O.6) | 2551 | (IB.33) | (II.O.6) | 2573 | (IB.55) | (II.O.6) |
| 2530 | (IB.12) | (II.O.6) | 2552 | (IB.34) | (II.O.6) | 2574 | (IB.56) | (II.O.6) |

Especially preferred are compositions 1.1 to 1.2574, which differ from the corresponding compositions 1 to 2574 of Table 1 only in that they additionally comprise fipronil as component 3), with the proviso that the chemical insecticide II and chemical insecticide III are not identical. Also especially preferred are compositions 2.1 to 2.2574, which differ from the corresponding compositions 1 to 2574 of Table 1 only in that they additionally comprise chlorantraniliprole as component 3), with the proviso that the chemical insecticide II and chemical insecticide III are not identical.

Also especially preferred are compositions 3.1 to 3.2574, which differ from the corresponding compositions 1 to 2574 of Table 1 only in that they additionally comprise cyantraniliprole as component 3), with the proviso that the chemical insecticide II and chemical insecticide III are not identical.

Also especially preferred are compositions 4.1 to 4.2574, which differ from the corresponding compositions 1 to 2574 of Table 1 only in that they additionally comprise tefluthrin as component 3), with the proviso that the chemical insecticide II and chemical insecticide III are not identical.

Also especially preferred are compositions 5.1 to 5.2574, which differ from the corresponding compositions 1 to 2574 of Table 1 only in that they additionally comprise bifenthrin as component 3), with the proviso that the chemical insecticide II and chemical insecticide III are not identical.

Also especially preferred are compositions 6.1 to 6.2574, which differ from the corresponding compositions 1 to 2574 of Table 1 only in that they additionally comprise cypermethrin as component 3), with the proviso that the chemical insecticide II and chemical insecticide III are not identical.

Also especially preferred are compositions 7.1 to 7.2574, which differ from the corresponding compositions 1 to 2574 of Table 1 only in that they additionally comprise alpha-cypermethrin as component 3), with the proviso that the chemical insecticide II and chemical insecticide III are not identical.

Also especially preferred are compositions 8.1 to 8.2574, which differ from the corresponding compositions 1 to 2574 of Table 1 only in that they additionally comprise clothianidin as component 3), with the proviso that the chemical insecticide II and chemical insecticide III are not identical.

Also especially preferred are compositions 9.1 to 9.2574, which differ from the corresponding compositions 1 to 2574 of Table 1 only in that they additionally comprise imidacloprid as component 3), with the proviso that the chemical insecticide II and chemical insecticide III are not identical.

Also especially preferred are compositions 10.1 to 10.2574, which differ from the corresponding compositions 1 to 2574 of Table 1 only in that they additionally comprise thiamethoxam as component 3), with the proviso that the chemical insecticide II and chemical insecticide III are not identical.

Also especially preferred are compositions 11.1 to 11.2574, which differ from the corresponding compositions 1 to 2574 of Table 1 only in that they additionally comprise dinotefuran as component 3), with the proviso that the chemical insecticide II and chemical insecticide III are not identical.

Also especially preferred are compositions 12.1 to 12.2574, which differ from the corresponding compositions 1 to 2574 of Table 1 only in that they additionally comprise acetamiprid as component 3), with the proviso that the chemical insecticide II and chemical insecticide III are not identical.

Also especially preferred are compositions 13.1 to 13.2574, which differ from the corresponding compositions 1 to 2574 of Table 1 only in that they additionally comprise flupyradifurone as component 3), with the proviso that the chemical insecticide II and chemical insecticide III are not identical.

Also especially preferred are compositions 14.1 to 14.2574, which differ from the corresponding compositions 1 to 2574 of Table 1 only in that they additionally comprise thiacloprid as component 3), with the proviso that the chemical insecticide II and chemical insecticide III are not identical.

Also especially preferred are compositions 15.1 to 15.2574, which differ from the corresponding compositions 1 to 2574 of Table 1 only in that they additionally comprise triflumezopyrim as component 3), with the proviso that the chemical insecticide II and chemical insecticide III are not identical.

Also especially preferred are compositions 16.1 to 16.2574, which differ from the corresponding compositions 1 to 2574 of Table 1 only in that they additionally comprise sulfoxaflor as component 3), with the proviso that the chemical insecticide II and chemical insecticide III are not identical.

Also especially preferred are compositions 17.1 to 17.2574, which differ from the corresponding compositions 1 to 2574 of Table 1 only in that they additionally comprise acephate as component 3), with the proviso that the chemical insecticide II and chemical insecticide III are not identical.

Also especially preferred are compositions 19.1 to 18.2574, which differ from the corresponding compositions 1 to 2574 of Table 1 only in that they additionally comprise chlorpyrifos as component 3), with the proviso that the chemical insecticide II and chemical insecticide III are not identical.

Also especially preferred are compositions 20.1 to 20.2574, which differ from the corresponding compositions 1 to 2574 of Table 1 only in that they additionally comprise thiodicarb as component 3), with the proviso that the chemical insecticide II and chemical insecticide III are not identical.

Also especially preferred are compositions 21.1 to 21.2574, which differ from the corresponding compositions 1 to 2574 of Table 1 only in that they additionally comprise abamectin as component 3), with the proviso that the chemical insecticide II and chemical insecticide III are not identical.

Also especially preferred are compositions 22.1 to 22.4096, which differ from the corresponding compositions 1 to 4096 of Table 1 only in that they additionally comprise spinosad spinosad as component 3).

Preferably, the compositions 1.1 to 22.2574 described above comprise the active components in synergistically effective amounts. Ratios are defined below.

The abovementioned microorganisms in the group of biopesticides I may be isolated or substantially purified. The terms "isolated" or "substantially purified" refers to microorganisms that have been removed from a natural environment and have been isolated or separated, and are at least 60% free, preferably at least 75% free, and more preferably at least 90% free, even more preferably at least 95% free, and most preferably at least 100% free from other components with which they were naturally associated. An "isolated culture" or "substaintially purified culture" refers to a culture of the microbial pesticides that does not include significant amounts of other materials such as other materials which normally are found in natural habitat in which the microbial pesticides grows and/or from which the microbial pesticides normally may be obtained. An "isolated culture" may be a culture that does not include any other biological, microorganism, and/or bacterial species in quantities sufficient to interfere with the replication of the isolated culture. Isolated cultures of microbial pesticides may, however, be combined to prepare a mixed culture of microbial pesticides.

Herein, the microorganisms may be supplied in any physiological state such as active or dormant. Dormant microbial pesticides may be supplied for example frozen, dried, or lyophilized or partly desiccated (procedures to produce partly desiccated organisms are given in WO 2008/002371) or in form of spores.

The microorganisms in the groups of biopesticides I used as organism in an active state can be delivered in a growth medium without any additional additives or materials or in combination with suitable nutrient mixtures.

The microorganisms in biopesticides I are preferably delivered and formulated in a dormant stage, more preferably in form of spores.

The mixtures and compositions thereof according to the invention can, in the use form as pesticides, fungicides and/or insecticides, also be present together with further pesticides, e. g. with herbicides, insecticides, growth regulators, fungicides, biopesticides, preferably any of those mentioned in this text; or else with fertilizers, as pre-mix or, if appropriate, not until immeadiately prior to use (tank mix).

The mixtures and compositions according to the invention are suitable as fungicides. They are distinguished by an outstanding effectiveness against a broad spectrum of phytopathogenic fungi, including soil-borne fungi, which derive especially from the classes of the Plasmodiophoromycetes, Peronosporomycetes (syn. Oomycetes), Chytridiomycetes, Zygomycetes, Ascomycetes, Basidiomycetes and Deuteromycetes (syn. Fungi imperfecti). Some are systemically effective and they can be used in crop protection as foliar fungicides, fungicides for seed dressing and soil fungicides. Moreover, they are suitable for controlling harmful fungi, which inter alia occur in wood or roots of plants.

The mixtures and compositions according to the invention are particularly important in the control of a multitude of phytopathogenic fungi on various cultivated plants, such as cereals, e. g. wheat, rye, barley, triticale, oats or rice; beet, e. g. sugar beet or fodder beet; fruits, such as pomes, stone fruits or soft fruits, e. g. apples, pears, plums, peaches, almonds, cherries, strawberries, raspberries, blackberries or gooseberries; leguminous plants, such as lentils, peas, alfalfa or soybeans; oil plants, such as rape, mustard, olives, sunflowers, coconut, cocoa beans, castor oil plants, oil palms, ground nuts or soybeans; cucurbits, such as squashes, cucumber or melons; fiber plants, such as cotton, flax, hemp or jute; citrus fruit, such as oranges, lemons, grapefruits or mandarins; vegetables, such as spinach, lettuce, asparagus, cabbages, carrots, onions, tomatoes, potatoes, cucurbits or paprika; lauraceous plants, such as avocados, cinnamon or camphor; energy and raw material plants, such as corn, soybean, rape, sugar cane or oil palm; corn; tobacco; nuts; coffee; tea; bananas; vines (table grapes and grape juice grape vines); hop; turf; natural rubber plants or ornamental and forestry plants, such as flowers, shrubs, broad-leaved trees or evergreens, e. g. conifers; and on the plant propagation material, such as seeds, and the crop material of these plants.

Preferably the inventive mixtures and compositions are used for controlling a multitude of fungi on field crops, such as potatoes sugar beets, tobacco, wheat, rye, barley, oats, rice, corn, cotton, soybeans, rape, legumes, sunflowers, coffee or sugar cane; fruits; vines; ornamentals; or vegetables, such as cucumbers, tomatoes, beans or squashes.

The term "plant propagation material" is to be understood to denote all the generative parts of the plant such as seeds and vegetative plant material such as cuttings and tubers (e. g. potatoes), which can be used for the multiplication of the plant. This includes seeds, roots, fruits, tubers, bulbs, rhizomes, shoots, sprouts and other parts of plants, including seedlings and young plants, which are to be transplanted after germination or after emergence from soil. These young plants may also be protected before transplantation by a total or partial treatment by immersion or pouring.

Preferably, treatment of plant propagation materials with the inventive mixtures and compositions thereof, respectively, is used for controlling a multitude of fungi on cereals, such as wheat, rye, barley and oats; rice, corn, cotton and soybeans.

The term "cultivated plants" is to be understood as including plants which have been modified by breeding, mutagenesis or genetic engineering including but not limiting to agricultural biotech products on the market or in development (cf. http://cera-gmc.org/, see GM crop database therein). Genetically modified plants are plants, which genetic material has been so modified by the use of recombinant DNA techniques that under natural circumstances cannot readily be obtained by cross breeding, mutations or natural recombination. Typically, one or more genes have been integrated into the genetic material of a genetically modified plant in order to improve certain properties of the plant. Such genetic modifications also include but are not limited to targeted post-transtional modification of protein(s), oligo- or polypeptides e. g. by glycosylation or polymer additions such as prenylated, acetylated or farnesylated moieties or PEG moieties.

Plants that have been modified by breeding, mutagenesis or genetic engineering, e. g. have been rendered tolerant to applications of specific classes of herbicides, such as hydroxyphenyl-pyruvate dioxygenase (HPPD) inhibitors; acetolactate synthase (ALS) inhibitors, such as sulfonyl ureas (see e. g. US 6,222,100, WO 01/82685, WO 00/26390, WO 97/41218, WO 98/02526, WO 98/02527, WO 04/106529, WO 05/20673, WO 03/14357, WO 03/13225, WO 03/14356, WO 04/16073) or imidazolinones (see e. g. US 6,222,100, WO 01/82685, WO 00/026390, WO 97/41218, WO 98/002526, WO 98/02527, WO 04/106529, WO 05/20673, WO 03/014357, WO 03/13225, WO 03/14356, WO 04/16073); enolpyruvylshikimate-3-phosphate synthase (EPSPS) inhibitors, such as glyphosate (see e. g. WO 92/00377); glutamine synthetase (GS) inhibitors, such as glufosinate (see e.g. EP-A 242 236, EP-A 242 246) or oxynil herbicides (see e. g. US 5,559,024) as a result of conventional methods of breeding or genetic engineering. Several cultivated plants have been rendered tolerant to herbicides by conventional methods of breeding (mutagenesis), e. g. Clearfield® summer rape (Canola, BASF SE, Germany) being tolerant to imidazolinones, e. g. imazamox. Genetic engineering methods have been used to render cultivated plants such as soybean, cotton, corn, beets and rape, tolerant to herbicides such as glyphosate and glufosinate, some of which are commercially available under the trade names RoundupReady® (glyphosate-tolerant, Monsanto, U.S.A.) and LibertyLink® (glufosinate-tolerant, Bayer CropScience, Germany).

Furthermore, plants are also covered that are by the use of recombinant DNA techniques capable to synthesize one or more insecticidal proteins, especially those known from the bacterial genus *Bacillus,* particularly from *Bacillus thuringiensis,* such as δ-endotoxins, e. g. CryIA(b), CryIA(c), CryIF, CryIF(a2), CryIIA(b), CryIIIA, CryIIIB(b1) or Cry9c;

vegetative insecticidal proteins (VIP), e. g. VIP1, VIP2, VIP3 or VIP3A; insecticidal proteins of bacteria colonizing nematodes, e. g. *Photorhabdus* spp. or *Xenorhabdus* spp.; toxins produced by animals, such as scorpion toxins, arachnid toxins, wasp toxins, or other insect-specific neurotoxins; toxins produced by fungi, such Streptomycetes toxins, plant lectins, such as pea or barley lectins; agglutinins; proteinase inhibitors, such as trypsin inhibitors, serine protease inhibitors, patatin, cystatin or papain inhibitors; ribosome-inactivating proteins (RIP), such as ricin, maize-RIP, abrin, luffin, saporin or bryodin; steroid metabolism enzymes, such as 3-hydroxysteroid oxidase, ecdysteroid-IDP-glycosyl-transferase, cholesterol oxidases, ecdysone inhibitors or HMG-CoA-reductase; ion channel blockers, such as blockers of sodium or calcium channels; juvenile hormone esterase; diuretic hormone receptors (helicokinin receptors); stilben synthase, bibenzyl synthase, chitinases or glucanases. In the context of the present invention these insecticidal proteins or toxins are to be understood expressly also as pre-toxins, hybrid proteins, truncated or otherwise modified proteins. Hybrid proteins are characterized by a new combination of protein domains, (see, e. g. WO 02/015701). Further examples of such toxins or genetically modified plants capable of synthesizing such toxins are disclosed, e. g., in EP-A 374 753, WO 93/007278, WO 95/34656, EP-A 427 529, EP-A 451 878, WO 03/18810 und WO 03/52073. The methods for producing such genetically modified plants are generally known to the person skilled in the art and are described, e. g. in the publications mentioned above. These insecticidal proteins contained in the genetically modified plants impart to the plants producing these proteins tolerance to harmful pests from all taxonomic groups of athropods, especially to beetles (Coeloptera), two-winged insects (Diptera), and moths (Lepidoptera) and to nematodes (Nematoda). Genetically modified plants capable to synthesize one or more insecticidal proteins are, e. g., described in the publications mentioned above, and some of which are commercially available such as YieldGard® (corn cultivars producing the Cry1Ab toxin), YieldGard® Plus (corn cultivars producing Cry1Ab and Cry3Bb1 toxins), Starlink® (corn cultivars producing the Cry9c toxin), Herculex® RW (corn cultivars producing Cry34Ab1, Cry35Ab1 and the enzyme Phosphinothricin-*N*-Acetyltransferase [PAT]); NuCOTN® 33B (cotton cultivars producing the Cry1Ac toxin), Bollgard® I (cotton cultivars producing the Cry1Ac toxin), Bollgard® II (cotton cultivars producing Cry1Ac and Cry2Ab2 toxins); VIPCOT® (cotton cultivars producing a VIP-toxin); NewLeaf® (potato cultivars producing the Cry3A toxin); Bt-Xtra®, NatureGard®, KnockOut®, BiteGard®, Protecta®, Bt11 (e. g. Agrisure® CB) and Bt176 from Syngenta Seeds SAS, France, (corn cultivars producing the Cry1Ab toxin and PAT enyzme), MIR604 from Syngenta Seeds SAS, France (corn cultivars producing a modified version of the Cry3A toxin, c.f. WO 03/018810), MON 863 from Monsanto Europe S.A., Belgium (corn cultivars producing the Cry3Bb1 toxin), IPC 531 from Monsanto Europe S.A., Belgium (cotton cultivars producing a modified version of the Cry1Ac toxin) and 1507 from Pioneer Overseas Corporation, Belgium (corn cultivars producing the Cry1 F toxin and PAT enzyme).

Furthermore, plants are also covered that are by the use of recombinant DNA techniques capable to synthesize one or more proteins to increase the resistance or tolerance of those plants to bacterial, viral or fungal pathogens. Examples of such proteins are the so-called "pathogenesis-related proteins" (PR proteins, see, e. g. EP-A 392 225), plant disease resistance genes (e. g. potato cultivars, which express resistance genes acting against *Phytophthora infestans* derived from the mexican wild potato *Solanum bulbocastanum)* or T4-lysozym (e. g. potato cultivars capable of synthesizing these proteins with increased resistance against bacteria such as *Erwinia amylvora).* The methods for producing such genetically modified plants are generally known to the person skilled in the art and are described, e. g. in the publications mentioned above.

Furthermore, plants are also covered that are by the use of recombinant DNA techniques capable to synthesize one or more proteins to increase the productivity (e. g. bio mass production, grain yield, starch content, oil content or protein content), tolerance to drought, salinity or other growth-limiting environmental factors or tolerance to pests and fungal, bacterial or viral pathogens of those plants.

Furthermore, plants are also covered that contain by the use of recombinant DNA techniques a modified amount of substances of content or new substances of content, specifically to improve human or animal nutrition, e. g. oil crops that produce health-promoting long-chain omega-3 fatty acids or unsaturated omega-9 fatty acids (e. g. Nexera® rape, DOW Agro Sciences, Canada).

Furthermore, plants are also covered that contain by the use of recombinant DNA techniques a modified amount of substances of content or new substances of content, specifically to improve raw material production, e. g. potatoes that produce increased amounts of amylopectin (e. g. Amflora® potato, BASF SE, Germany).

The inventive mixtures and compositions are particularly suitable for controlling the following plant diseases:

*Albugo* spp. (white rust) on ornamentals, vegetables (e. g. A. *candida)* and sunflowers (e. g. A. *tragopogonis); Alternaria* spp. (Alternaria leaf spot) on vegetables, rape (A. *brassicola* or *brassicae),* sugar beets (A. *tenuis),* fruits, rice, soybeans, potatoes (e. g. A. *solani* or A. *alternata),* tomatoes (e. g. A. *solani* or A. *alternata)* and wheat; *Aphanomyces* spp. on sugar beets and vegetables; *Ascochyta* spp. on cereals and vegetables, e. g. A. *tritici* (anthracnose) on wheat and A. *hordei on* barley; *Bipolaris* and *Drechslera* spp. (teleomorph: *Cochliobolus* spp.) on corn (e. g. *D. maydis),* cereals (e. g. *B. sorokiniana:* spot blotch), rice (e. g. *B. oryzae)* and turfs; *Blumeria* (formerly *Erysiphe) graminis* (powdery mildew) on cereals (e. g. on wheat or barley); *Botrytis cinerea* (teleomorph: *Botryotinia fuckeliana:* grey mold) on fruits and berries (e. g. strawberries), vegetables (e. g. lettuce, carrots, celery and cabbages), rape, flowers, vines, forestry plants and wheat; *Bremia lactucae* (downy mildew) on lettuce; *Ceratocystis* (syn. *Ophiostoma*) spp. (rot or wilt) on broad-leaved trees and evergreens, e. g. *C. ulmi* (Dutch elm disease) on elms; *Cercospora* spp. (Cercospora leaf spots) on corn, rice, sugar beets (e. g. *C. beticola),* sugar cane, vegetables, coffee, soybeans (e. g. *C. sojina* or C. *kikuchii*) and rice; *Cladosporium* spp. on tomatoes (e. g. *C. fulvum:* leaf mold) and cereals, e. g. *C. herbarum* (black ear) on wheat; *Claviceps purpurea* (ergot) on cereals; *Cochliobolus* (anamorph: *Helminthosporium* of *Bipolaris*) spp. (leaf spots) on corn (C. *carbonum*), cereals (e. g. *C. sativus,* anamorph: *B. sorokiniana)* and rice (e. g. *C. miyabeanus,* anamorph: H. *oryzae*); *Colletotrichum* (teleomorph: *Glomerella*) spp. (anthracnose) on cotton (e. g. C. *gossypii),* corn (e. g. *C. graminicola),* soft fruits, potatoes (e. g. *C. coccodes:* black dot), beans (e. g. *C. lindemuthianum)* and soybeans (e. g. *C. truncatum* or *C. gloeosporioides*); *Corticium* spp., e. g. *C. sasakii* (sheath blight) on rice; *Corynespora cassiicola* (leaf spots) on soybeans and ornamentals; *Cycloconium* spp., e. g. *C. oleaginum* on olive trees; *Cylindrocarpon* spp. (e. g. fruit tree canker or young vine decline, teleomorph: *Nectria* or *Neonectria* spp.) on fruit trees, vines (e. g. *C. liriodendri,* teleomorph: *Neonectria liriodendri:* Black Foot Disease) and ornamentals; *Dematophora* (teleomorph: *Rosellinia*) necatrix (root and stem rot) on soybeans; *Diaporthe* spp., e. g. *D. phaseolorum* (damping off) on soybeans; *Drechslera* (syn. *Helminthosporium,* teleomorph: *Pyrenophora)* spp. on corn, cereals, such as barley (e. g. *D. teres,* net blotch) and wheat (e. g. *D. tritici-repentis:* tan spot), rice and turf; Esca (dieback, apoplexy) on vines, caused by *Formitiporia* (syn. *Phellinus) punctata, F. mediterranea, Phaeomoniella chlamydospora* (earlier *Phaeoacremonium chlamydosporum), Phaeoacremonium aleophilum* and/or *Botryosphaeria obtusa; Elsinoe* spp. on pome fruits (*E. pyri*), soft fruits (E. *veneta:* anthracnose) and vines *(E. ampelina:* anthracnose); *Entyloma oryzae* (leaf smut) on rice; *Epicoccum* spp. (black mold) on wheat; *Erysiphe* spp. (powdery mildew) on sugar beets *(E. betae),* vegetables (e. g. *E. pisi*), such as cucurbits (e. g. *E. cichoracearum),* cabbages, rape (e. g. *E. cruciferarum*); *Eutypa lata* (Eutypa canker or dieback, anamorph: *Cytosporina lata,* syn. *Libertella blepharis*) on fruit trees, vines and ornamental woods; *Exserohilum* (syn. *Helminthosporium*) spp. on corn (e. g. *E. turcicum); Fusarium* (teleomorph: *Gibberella*) spp. (wilt, root or stem rot) on various plants, such as *F. graminearum* or *F. culmorum* (root rot, scab or head blight) on cereals (e. g. wheat or barley), *F. oxysporum* on tomatoes, *F. solani* on soybeans and *F. verticillioides* on corn; *Gaeumannomyces graminis* (take-all) on cereals (e. g. wheat or barley) and corn; *Gibberella* spp. on cereals (e. g. *G. zeae*) and rice (e. g. *G. fujikuroi:* Bakanae disease); *Glomerella cingulata* on vines, pome fruits and other plants and *G. gossypii on* cotton; Grainstaining complex on rice; *Guignardia bidwellii* (black rot) on vines; *Gymnosporangium* spp. on rosaceous plants and junipers, e. g. *G. sabinae* (rust) on pears; *Helminthosporium* spp. (syn. *Drechslera,* teleomorph: *Cochliobolus*) on corn, cereals and rice; *Hemileia* spp., e. g. *H. vastatrix* (coffee leaf rust) on coffee; *Isariopsis clavispora* (syn. *Cladosporium vitis)* on vines; *Macrophomina phaseolina* (syn. *phaseoli*) (root and stem rot) on soybeans and cotton; *Microdochium* (syn. *Fusarium) nivale* (pink snow mold) on cereals (e. g. wheat or barley); *Microsphaera diffusa* (powdery mildew) on soybeans; *Monilinia* spp., e. g. *M. laxa, M. fructicola* and *M. fructigena* (bloom and twig blight, brown rot) on stone fruits and other rosaceous plants; *Mycosphaerella* spp. on cereals, bananas, soft fruits and ground nuts, such as e. g. *M. graminicola* (anamorph: *Septoria tritici,* Septoria blotch) on wheat; *Peronospora* spp. (downy mildew) on cabbage (e. g. *P. brassicae),* rape (e. g. P. *parasitica),* onions (e. g. *P. destructor),* tobacco (P. *tabacina)* and soybeans (e. g. P. *manshurica*); *Phakopsora pachyrhizi* and *P. meibomiae* (soybean rust) on soybeans; *Phialophora* spp. e. g. on vines (e. g. *P. tracheiphila* and *P. tetraspora)* and soybeans (e. g. P. *gregata:* stem rot); *Phoma lingam* (root and stem rot) on rape and cabbage and *P. betae* (root rot, leaf spot and damping-off) on sugar beets; *Phomopsis* spp. on sunflowers, vines (e. g. *P. viticola:* can and leaf spot) and soybeans (e. g. stem rot: *P. phaseoli,* teleomorph: *Diaporthe phaseolorum); Physoderma maydis* (brown spots) on corn; *Phytophthora* spp. (wilt, root, leaf, fruit and stem root) on various plants, such as paprika and cucurbits (e. g. *P. capsici*), soybeans (e. g. *P. megasperma,* syn. *P. sojae*), potatoes and tomatoes (e. g. *P. infestans:* late blight) and broad-leaved trees (e. g. *P. ramorum:* sudden oak death); *Plasmodiophora brassicae* (club root) on cabbage, rape, radish and other plants; *Plasmopara* spp., e. g. *P. viticola* (grapevine downy mildew) on vines and *P. halstedii* on sunflowers; *Podosphaera* spp. (powdery mildew) on rosaceous plants, hop, pome and soft fruits, e. g. *P. leucotricha* on apples; *Polymyxa* spp., e. g. on cereals, such as barley and wheat *(P. graminis)* and sugar beets *(P. betae)* and thereby transmitted viral diseases; *Pseudocercosporella herpotrichoides* (eyespot, teleomorph: *Tapesia yallundae)* on cereals, e. g. wheat or barley; *Pseudoperonospora* (downy mildew) on various plants, e. g. P. *cubensis* on cucurbits or P. *humili* on hop; *Pseudopezicula tracheiphila* (red fire disease or ,rotbrenner', anamorph: *Phialophora)* on vines; *Puccinia* spp. (rusts) on various plants, e. g. *P. triticina* (brown or leaf rust), *P. striiformis* (stripe or yellow rust), *P. hordei* (dwarf rust), *P. graminis* (stem or black rust) or P. *recondita* (brown or leaf rust) on cereals, such as e. g. wheat, barley or rye, and asparagus (e. g. *P. asparagi); Pyrenophora* (anamorph: *Drechslera) tritici-repentis* (tan spot) on wheat or P. *teres* (net blotch) on barley; *Pyricularia* spp., e. g. *P. oryzae* (teleomorph: *Magnaporthe grisea,* rice blast) on rice and *P. grisea* on turf and cereals; *Pythium* spp. (damping-off) on turf, rice, corn, wheat, cotton, rape, sunflowers, soybeans, sugar beets, vegetables and various other plants (e. g. *P. ultimum* or P. *aphani-dermatum); Ramularia* spp., e. g. *R. collo-cygni* (Ramularia leaf spots, Physiological leaf spots) on barley and *R. beticola* on sugar beets; *Rhizoctonia* spp. on cotton, rice, potatoes, turf, corn, rape, potatoes, sugar beets, vegetables and various other plants, e. g. *R. solani* (root and stem rot) on soybeans, *R. solani* (sheath blight) on rice or R. *cerealis* (Rhizoctonia spring blight) on wheat or barley; *Rhizopus stolonifer* (black mold, soft rot) on strawberries, carrots, cabbage, vines and tomatoes; *Rhynchosporium secalis* (scald) on barley, rye and triticale; *Sarocladium oryzae* and S. *attenuatum* (sheath rot) on rice; *Sclerotinia* spp. (stem rot or white mold) on vegetables and field crops, such as rape, sunflowers (e. g. S. *sclerotiorum)* and soybeans (e. g. S. *rolfsii or* S. *sclerotiorum); Septoria* spp. on various plants, e. g. S. *glycines* (brown spot) on soybeans, S. *tritici* (Septoria blotch) on wheat and S. (syn. *Stagonospora)* nodorum (Stagonospora blotch) on cereals; *Uncinula* (syn. *Erysiphe) necator* (powdery mildew, anamorph: *Oidium tuckeri)* on vines; *Setospaeria* spp. (leaf blight) on corn (e. g. S. *turcicum,* syn. *Helminthosporium turcicum)* and turf; *Sphacelotheca* spp. (smut) on corn, (e. g. S. *reiliana:* head smut), sorghum und sugar cane; *Sphaerotheca fuliginea* (powdery mildew) on cucurbits; *Spongospora subterranea* (powdery scab) on potatoes and thereby transmitted viral diseases; *Stagonospora* spp. on cereals, e. g. S. *nodorum* (Stagonospora blotch, teleomorph: *Leptosphaeria* [syn. *Phaeosphaeria] nodorum)* on wheat; *Synchytrium endobioticum* on potatoes (potato wart disease); *Taphrina* spp., e. g. *T. deformans* (leaf curl disease) on peaches and *T. pruni* (plum pocket) on plums; *Thielaviopsis* spp. (black root rot) on tobacco, pome fruits, vegetables, soybeans and cotton, e. g. *T. basicola* (syn. *Chalara elegans); Tilletia* spp. (common bunt or stinking smut) on cereals, such as e. g. *T. tritici* (syn. *T. caries,* wheat bunt) and *T. controversa* (dwarf bunt) on wheat; *Typhula incarnata* (grey snow mold) on barley or wheat; *Urocystis* spp., e. g. *U. occulta* (stem smut) on rye; *Uromyces* spp. (rust) on vegetables, such as beans (e. g. *U. appendiculatus,* syn. *U. phaseoli)* and sugar beets (e. g. *U. betae); Ustilago* spp. (loose smut) on cereals (e. g. *U. nuda* and *U. avaenae),* corn (e. g. *U. maydis:* corn smut) and sugar cane; *Venturia* spp. (scab) on apples (e. g. V. *inaequalis)* and pears; and *Verticillium* spp. (wilt) on various plants, such as fruits and ornamentals, vines, soft fruits, vegetables and field crops, e. g. V. *dahliae* on strawberries, rape, potatoes and tomatoes.

In particular, the mixtures and compositions of the present invention are effective against plant pathogens in speciality crops such as vine, fruits, hop, vegetables and tabacco.

Bacteria pathogenic for plants are responsible for devastating losses in agriculture. The use of antibiotics to control such infections is restricted in many countries due to worries over the evolution and transmission of antibiotic resistance.

The mixtures and compositions according to the invention are also suitable as bactericides. They are distinguished by an outstanding effectiveness against a broad spectrum of phytopathogenic bacteria, including soil-borne bacteria, which derive especially from the genera of Agrobacterium, Clavibacter, Corynebacterium, Erwinia, Leifsonia, Pectobacterium, Pseudomonas, Ralstonia, Xanthomonas (e.g. Xanthomonas oryzae causing bacterial blight on rice) and Xylella; preferably Erwinia; even more preferably Erwinia amylovora causing fire blight on apples, pears and other memb er of the family Rosaceae.

The mixtures according to the present invention and compositions thereof, respectively, are also suitable for controlling harmful fungi in the protection of stored products or harvest and in the protection of materials. The term "protection of materials" is to be understood to denote the protection of technical and non-living materials, such as adhesives, glues, wood, paper and paperboard, textiles, leather, paint dispersions, plastics, colling lubricants, fiber or fabrics, against the infestation and destruction by harmful microorganisms, such as fungi and bacteria. As to the protection of wood and other materials, the particular attention is paid to the following harmful fungi: Ascomycetes such as *Ophiostoma* spp., *Ceratocystis* spp., *Aureobasidium pullulans, Sclerophoma* spp., *Chaetomium* spp., *Humicola* spp., *Petriella* spp., *Trichurus* spp.; Basidiomycetes such as *Coniophora* spp., *Coriolus* spp., *Gloeophyllum* spp., *Lentinus* spp., *Pleurotus* spp., *Poria* spp., *Serpula* spp. and *Tyromyces* spp., Deuteromycetes such as *Aspergillus* spp., *Cladosporium* spp., *Penicillium* spp., *Trichorma* spp., *Alternaria* spp., *Paecilomyces* spp. and Zygomycetes such as *Mucor spp.,* and in addition in the protection of stored products and harvest the following yeast fungi are worthy of note: *Candida* spp. and *Saccharomyces cerevisae.*

The method of treatment according to the invention can also be used in the field of protecting stored products or harvest against attack of fungi and microorganisms. According to the present invention, the term "stored products" is understood to denote natural substances of plant or animal origin and their processed forms, which have been taken from the natural life cycle and for which long-term protection is desired. Stored products of crop plant origin, such as plants or parts thereof, for example stalks, leafs, tubers, seeds, fruits or grains, can be protected in the freshly harvested state or in processed form, such as pre-dried, moistened, comminuted, ground, pressed or roasted, which process is also known as post-harvest treatment. Also falling under the definition of stored products is timber, whether in the form of crude timber, such as construction timber, electricity pylons and barriers, or in the form of finished articles, such as furniture or objects made from wood. Stored products of animal origin are hides, leather, furs, hairs and the like. The combinations according the present invention can prevent disadvantageous effects such as decay, discoloration or mold. Preferably "stored products" is understood to denote natural substances of plant origin and their processed forms, more preferably fruits and their processed forms, such as pomes, stone fruits, soft fruits and citrus fruits and their processed forms.

The mixtures and compositions according to the invention are particularly important in the control of a multitude of phytopathogenic insects or other pests (e.g. lepidopterans, beetles, dipterans, thrips, heteropterans, hemiptera, homoptera, termites, orthopterans, arachnids, and nematodes) on various cultivated plants, such as cereals, e. g. wheat, rye, barley, triticale, oats or rice; beet, e. g. sugar beet or fodder beet; fruits, such as pomes, stone fruits or soft fruits, e. g. apples, pears, plums, peaches, almonds, cherries, strawberries, raspberries, blackberries or gooseberries; leguminous plants, such as lentils, peas, alfalfa or soybeans; oil plants, such as rape, mustard, olives, sunflowers, coconut, cocoa beans, castor oil plants, oil palms, ground nuts or soybeans; cucurbits, such as squashes, cucumber or melons; fiber plants, such as cotton, flax, hemp or jute; citrus fruit, such as oranges, lemons, grapefruits or mandarins; vegetables, such as spinach, lettuce, asparagus, cabbages, carrots, onions, tomatoes, potatoes, cucurbits or paprika; lauraceous plants, such as avocados, cinnamon or camphor; energy and raw material plants, such as corn, soybean, rape, sugar cane or oil palm; corn; tobacco; nuts; coffee; tea; bananas; vines (table grapes and grape juice grape vines); hop; turf; natural rubber plants or ornamental and forestry plants, such as flowers, shrubs, broad-leaved trees or evergreens, e. g. conifers; and on the plant propagation material, such as seeds, and the crop material of these plants.

Preferably the inventive mixtures and compositions are used for controlling a multitude of pests on field crops, such as potatoes sugar beets, tobacco, wheat, rye, barley, oats, rice, corn, cotton, soybeans, rape, legumes, sunflowers, coffee or sugar cane; fruits; vines; ornamentals; or vegetables, such as cucumbers, tomatoes, beans or squashes.

The inventive mixtures and the compositions thereof, respectively, are particularly suitable for controlling the following harmful insects from the order of the

lepidopterans (Lepidoptera), for example *Agrotis ypsilon, Agrotis segetum, Alabama argillacea, Anticarsia gemmatalis, Argyresthia conjugella, Autographa gamma, Bupalus piniarius, Cacoecia murinana, Capua reticulana, Cheimatobia brumata, Choristoneura fumiferana, Choristoneura occidentalis, Cirphis unipuncta, Cydia pomonella, Dendrolimus pini, Diaphania nitidalis, Diatraea grandiosella, Earias insulana, Elasmopalpus lignosellus, Eupoecilia ambiguella, Evetria bouliana, Feltia subterranea, Galleria mellonella, Grapholitha funebrana, Grapholitha molesta, Heliothis armigera, Heliothis virescens, Heliothis zea, Hellula undalis, Hibernia defoliaria, Hyphantria cunea, Hyponomeuta malinellus, Keiferia lycopersicella, Lambdina fiscellaria, Laphygma exigua, Leucoptera coffeella, Leucoptera scitella, Lithocolletis blancardella, Lobesia botrana, Loxostege sticticalis, Lymantria dispar, Lymantria monacha, Lyonetia clerkella, Malacosoma neustria, Mamestra brassicae, Orgyia pseudotsugata, Ostrinia nubilalis, Panolis flammea, Pectinophora gossypiella, Peridroma saucia, Phalera bucephala, Phthorimaea operculella, Phyllocnistis citrella, Pieris brassicae, Plathypena scabra, Plutella xylostella, Pseudoplusia includens, Rhyacionia frustrana, Scrobipalpula absoluta, Sitotroga cerealella, Sparganothis pilleriana, Spodoptera frugiperda, Spodoptera littoralis, Spodoptera litura, Thaumatopoea pityocampa, Tortrix viridana, Trichoplusia ni* and *Zeiraphera canadensis,*

beetles (Coleoptera), for example *Agrilus sinuatus, Agriotes lineatus, Agriotes obscurus, Amphimallus solstitialis, Anisandrus dispar, Anthonomus grandis, Anthonomus pomorum, Atomaria linearis, Blastophagus piniperda, Blitophaga undata, Bruchus rufimanus, Bruchus pisorum, Bruchus lentis, Byctiscus betulae, Cassida nebulosa, Cerotoma trifurcata, Ceuthorrhynchus assimilis, Ceuthorrhynchus napi, Chaetocnema tibialis, Conoderus vespertinus, Crioceris asparagi, Diabrotica longicornis, Diabrotica speciosa, Diabrotica 12-punctata, Diabrotica virgifera, Diloboderus abderus, Epilachna varivestis, Epitrix hirtipennis, Eutinobothrus brasiliensis, Hylobius abietis, Hypera brunneipennis, Hypera postica, Ips typographus, Lema bilineata, Lema melanopus, Leptinotarsa decemlineata, Limonius californicus, Lissorhoptrus oryzophilus, Melanotus communis, Meligethes aeneus, Melolontha hippocastani, Melolontha melolontha, Oulema oryzae, Ortiorrhynchus sulcatus, Oryazophagus oryzae, Otiorrhynchus ovatus, Phaedon cochleariae, Phyllotreta chrysocephala, Phyllophaga sp., Phyllophaga cuyabana, Phyllophaga triticophaga, Phyllopertha horticola, Phyllotreta nemorum, Phyllotreta striolata, Popillia japonica, Sitona lineatus* and *Sitophilus granaria,*

dipterans (Diptera), for example *Aedes aegypti, Aedes vexans, Anastrepha ludens, Anopheles maculipennis, Ceratitis capitata, Chrysomya bezziana, Chrysomya hominivorax, Chrysomya macellaria, Contarinia sorghicola, Cordylobia anthropophaga, Culex pipiens, Dacus cucurbitae, Dacus oleae, Dasineura brassicae, Fannia canicularis, Gasterophilus intestinalis, Glossina morsitans, Haematobia irritans, Haplodiplosis equestris, Hylemyia platura, Hypoderma lineata, Liriomyza sativae, Liriomyza trifolii, Lucilia caprina, Lucilia cuprina, Lucilia sericata, Lycoria pectoralis, Mayetiola destructor, Musca domestica, Muscina stabulans, Oestrus ovis, Oscinella frit, Pegomya hysocyami, Phorbia antiqua, Phorbia brassicae, Phorbia coarctata, Rhagoletis cerasi, Rhagoletis pomonella, Tabanus bovinus, Tipula oleracea* and *Tipula paludosa,*

thrips (Thysanoptera), e.g. *Frankliniella fusca, Frankliniella occidentalis, Frankliniella tritici, Scirtothrips citri, Thrips oryzae, Thrips palmi* and *Thrips tabaci,*

hymenopterans (Hymenoptera), e.g. *Acromyrmex ambuguus, Acromyrmex crassispinus, Acromyrmex heiery, Acromyrmex landolti, Acromyrmex subterraneus, Athalia rosae, Atta capiguara, Atta cephalotes, Atta laevigata, Atta robusta, Atta sexdens, Atta texana, Hoplocampa minuta, Hoplocampa testudinea, Monomorium pharaonis, Solenopsis geminata* and *Solenopsis invicta,*

heteropterans (Heteroptera), e.g. *Acrosternum hilare, Blissus leucopterus, Cyrtopeltis notatus, Dichelops furcatus, Dysdercus cingulatus, Dysdercus intermedius, Euchistos heros, Eurygaster integriceps, Euschistus impictiventris, Leptoglos-*

*sus phyllopus, Lygus lineolaris, Lygus pratensis, Nezara viridula, Piesma quadrata, Piezodorus guildini, Solubea insularis* and *Thyanta perditor,*

Hemiptera and Homoptera, e.g. *Acrosternum hilare, Blissus leucopterus, Cyrtopeltis notatus, Diaphorina citri, Dysdercus cingulatus, Dysdercus intermedius, Eurygaster integriceps, Euschistus impictiventris, Leptoglossus phyllopus, Lygus lineolaris, Lygus pratensis, Nezara viridula, Piesma quadrata, Solubea insularis , Thyanta perditor, Acyrthosiphon onobrychis, Adelges laricis, Aphidula nasturtii, Aphis fabae, Aphis forbesi, Aphis pomi, Aphis gossypii, Aphis grossulariae, Aphis schneideri, Aphis spiraecola, Aphis sambuci, Acyrthosiphon pisum, Aulacorthum solani, Brachycaudus cardui, Brachycaudus helichrysi, Brachycaudus persicae, Brachycaudus prunicola, Brevicoryne brassicae, Capitophorus horni, Cerosipha gossypii, Chaetosiphon fragaefolii, Cryptomyzus ribis, Dreyfusia nordmannianae, Dreyfusia piceae, Dysaphis radicola, Dysaulacorthum pseudosolani, Dysaphis plantaginea, Dysaphis pyri, Empoasca fabae, Hyalopterus pruni, Hyperomyzus lactucae, Macrosiphum avenae, Macrosiphum euphorbiae, Macrosiphon rosae, Megoura viciae, Melanaphis pyrarius, Metopolophium dirhodum, Myzodes persicae, Myzus ascalonicus, Myzus cerasi, Myzus varians, Nasonovia ribis-nigri, Nilaparvata lugens, Pemphigus bursarius, Perkinsiella saccharicida, Phorodon humuli, Psylla mali, Psylla piri, Rhopalomyzus ascalonicus, Rhopalosiphum maidis, Rhopalosiphum padi, Rhopalosiphum insertum, Sappaphis mala, Sappaphis mali, Schizaphis graminum, Schizoneura lanuginosa, Sitobion avenae, Trialeurodes vaporariorum, Toxoptera aurantiiand, Viteus vitifolii, Cimex lectularius, Cimex hemipterus, Reduvius senilis, Triatoma spp., and Arilus critatus,*

termites (Isoptera), *e.g. Calotermes flavicollis, Cornitermes cumulans, Heterotermes tenuis, Leucotermes flavipes, Neocapritemes opacus, Procornitermes triacifer; Reticulitermes lucifugus, Syntermes molestus, and Termes natalensis,*

orthopterans (Orthoptera), e.g. *Acheta domestica, Blatta orientalis, Blattella germanica, Forficula auricularia, Gryllotalpa gryllotalpa, Locusta migratoria, Melanoplus bivittatus, Melanoplus femur-rubrum, Melanoplus mexicanus, Melanoplus sanguinipes, Melanoplus spretus, Nomadacris septemfasciata, Periplaneta americana, Schistocerca americana, Schistocerca peregrina, Stauronotus maroccanus* and *Tachycines asynamorus,*

Arachnoidea, such as arachnids, e.g. of the families Argasidae, Ixodidae and Sarcoptidae, such as *Amblyomma americanum, Amblyomma variegatum, Argas persicus, Boophilus annulatus, Boophilus decoloratus, Boophilus microplus, Dermacentor silvarum, Hyalomma truncatum, Ixodes ricinus, Ixodes rubicundus, Ornithodorus moubata, Otobius megnini, Dermanyssus gallinae, Psoroptes ovis, Rhipicephalus appendiculatus, Rhipicephalus evertsi, Sarcoptes scabiei,* and *Eriophyidae spp.* such as *Aculus schlechtendali, Phyllocoptrata oleivora* and *Eriophyes sheldoni; Tarsonemidae spp.* such as *Phytonemus pallidus* and *Polyphagotarsonemus latus; Tenuipalpidae spp.* such as *Brevipalpus phoenicis; Tetranychidae spp.* such as *Tetranychus cinnabarinus, Tetranychus kanzawai, Tetranychus pacificus, Tetranychus telarius* and *Tetranychus urticae, Panonychus ulmi, Panonychus citri,* and *Oligonychus pratensis.*

In particular, the inventive mixtures are suitable for combating pests of the orders Coleoptera, Lepidoptera, Thysanoptera, Homoptera, Isoptera, and Orthoptera.

They are also suitable for controlling the following plant parasitic nematodes such as root-knot nematodes, *Meloidogyne arenaria, Meloidogyne chitwoodi, Meloidogyne exigua, Meloidogyne hapla, Meloidogyne incognita, Meloidogyne javanica* and other *Meloidogyne species;* cyst nematodes, *Globodera rostochiensis, Globodera pallida, Globodera tabacum* and other *Globodera species, Heterodera avenae, Heterodera glycines, Heterodera schachtii, Heterodera trifolii,* and other *Heterodera species;* seed gall nematodes, *Anguina funesta, Anguina tritici* and other *Anguina species;* stem and foliar nematodes, *Aphelenchoides besseyi, Aphelenchoides fragariae, Aphelenchoides ritzemabosi* and other *Aphelenchoides species;* sting nematodes, *Belonolaimus longicaudatus* and other *Belonolaimus species;* pine nematodes, *Bursaphelenchus xylophilus* and other *Bursaphelenchus species;* ring nematodes, *Criconema species, Criconemella species, Criconemoides species,* and *Mesocriconema species;* stem and bulb nematodes, *Ditylenchus destructor, Ditylenchus dipsaci, Ditylenchus myceliophagus* and other *Ditylenchus species;* awl nematodes, *Dolichodorus species;* spiral nematodes, *Helicotylenchus dihystera, Helicotylenchus multicinctus* and other *Helicotylenchus species, Rotylenchus robustus* and other *Rotylenchus species;* sheath nematodes, *Hemicycliophora species* and *Hemicriconemoides species; Hirshmanniella species;* lance nematodes, *Hoplolaimus columbus, Hoplolaimus galeatus* and other *Hoplolaimus species;* false root-knot nematodes, *Nacobbus aberrans* and other *Nacobbus species;* needle nematodes, *Longidorus elongates* and other *Longidorus species;* pin nematodes, *Paratylenchus species;* lesion nematodes, *Pratylenchus brachyurus, Pratylenchus coffeae, Pratylenchus curvitatus, Pratylenchus goodeyi, Pratylencus neglectus, Pratylenchus penetrans, Pratylenchus scribneri, Pratylenchus vulnus, Pratylenchus zeae* and other *Pratylenchus species; Radinaphelenchus cocophilus* and other *Radinaphelenchus species;* burrowing nematodes, *Radopholus similis* and other *Radopholus species;* reniform nematodes, *Rotylenchulus reniformis* and other *Rotylenchulus species; Scutellonema species;* stubby root nematodes, *Trichodorus primitivus* and other *Trichodorus species; Paratrichodorus minor* and *other Paratrichodorus species;* stunt nematodes, *Tylenchorhynchus claytoni, Tylenchorhynchus dubius* and other *Tylenchorhynchus species* and *Merlinius species;* citrus nematodes, *Tylenchulus semipenetrans* and other *Tylenchulus species;* dagger nematodes, *Xiphinema americanum, Xiphinema index, Xiphinema diversicaudatum* and other *Xiphinema species;* and other plant parasitic nematode species

Plant propagation materials may be treated with the mixtures and compositions of the invention prophylactically either at or before planting or transplanting.

In particular, the present invention relates to a method for protection of plant propagation material from pests, wherein the plant propagation material is treated with an effective amount of an inventive mixture.

In a preferred embodiment, the present invention relates to a method for protection of plant propagation material from animal pests (insects, acarids or nematodes), wherein the plant propagation material are treated with an effective amount of an inventive mixture.

In an equally preferred embodiment, the present invention relates to a method for protection of plant propagation material from harmful fungi, wherein the plant propagation material is treated with an effective amount of an inventive mixture.

In general, "pesticidally effective amount" means the amount of the inventive mixtures or of compositions comprising the mixtures needed to achieve an observable effect on growth, including the effects of necrosis, death, retardation, prevention, and removal, destruction, or otherwise diminishing the occurrence and activity of the target organism. The pesticidally effective amount can vary for the various mixtures / compositions used in the invention. A pesticidally effective amount of the mixtures / compositions will also vary according to the prevailing conditions such as desired pesticidal effect and duration, weather, target species, locus, mode of application, and the like.

In an equally preferred embodiment, the present invention relates to a method for improving the health of plants, wherein the plants are treated with a plant health effective amount of an inventive mixture.

The term "plant health effective amount" denotes an amount of the inventive mixtures, which is sufficient for achieving plant health effects as defined herein below. More exemplary information about amounts, ways of application and suitable ratios to be used is given below. Anyway, the skilled artisan is well aware of the fact that such an amount can vary in a broad range and is dependent on various factors, e.g. the treated cultivated plant or material and the climatic conditions.

Healthier plants are desirable since they result among others in better yields and/or a better quality of the plants or crops, specifically better quality of the harvested plant parts. Healthier plants also better resist to biotic and/or abiotic stress. A high resistance against biotic stresses in turn allows the person skilled in the art to reduce the quantity of pesticides applied and consequently to slow down the development of resistances against the respective pesticides.

It has to be emphasized that the above mentioned effects of the inventive mixtures, i.e. enhanced health of the plant, are also present when the plant is not under biotic stress and in particular when the plant is not under pest pressure.

For example, for seed treatment and soil applications, it is evident that a plant suffering from fungal or insecticidal attack shows reduced germination and emergence leading to poorer plant or crop establishment and vigor, and consequently, to a reduced yield as compared to a plant propagation material which has been subjected to curative or preventive treatment against the relevant pest and which can grow without the damage caused by the biotic stress factor. However, the methods according to the invention lead to an enhanced plant health even in the absence of any biotic stress. This means that the positive effects of the mixtures of the invention cannot be explained just by the activities of the components 1), 2) and 3) separately, but are based on further activity profiles. Accordingly, the application of the inventive mixtures can also be carried out in the absence of pest pressure.

In an equally preferred embodiment, the present invention relates to a method for improving the health of plants grown from said plant propagation material, wherein the plant propagation material is treated with an effective amount of an inventive mixture.

Each plant health indicator listed below, which is selected from the groups consisting of yield, plant vigor, quality and tolerance of the plant to abiotic and/or biotic stress, is to be understood as a preferred embodiment of the present invention either each on its own or preferably in combination with each other.

According to the present invention, "increased yield" of a plant means that the yield of a product of the respective plant is increased by a measurable amount over the yield of the same product of the plant produced under the same conditions, but without the application of the inventive mixture.

For seed treatment e.g. as inoculant and/or foliar application forms, increased yield can be characterized, among others, by the following improved properties of the plant: increased plant weight; and/or increased plant height; and/or increased biomass such as higher overall fresh weight (FW); and/or increased number of flowers per plant; and/or higher grain and/or fruit yield ; and/or more tillers or side shoots (branches); and/or larger leaves; and/or increased shoot growth; and/or increased protein content; and/or increased oil content; and/or increased starch content; and/or increased pigment content; and/or increased chlorophyll content (chlorophyll content has a positive correlation with the plant's photosynthesis rate and accordingly, the higher the chlorophyll content the higher the yield of a plant) and/or increased quality of a plant.

"Grain" and "fruit" are to be understood as any plant product which is further utilized after harvesting, e.g. fruits in the proper sense, vegetables, nuts, grains, seeds, wood (e.g. in the case of silviculture plants), flowers (e.g. in the case of gardening plants, ornamentals) etc., that is anything of economic value that is produced by the plant.

According to the present invention, the yield is increased by at least 4%. In general, the yield increase may even be higher, for example 5 to 10 %, more preferable by 10 to 20 %, or even 20 to 30 %

According to the present invention, the yield - if measured in the absence of pest pressure - is increased by at least 2 % In general, the yield increase may even be higher, for example until 4% to 5% or even more.

Another indicator for the condition of the plant is the plant vigor. The plant vigor becomes manifest in several aspects such as the general visual appearance.

For foliar applications, improved plant vigor can be characterized, among others, by the following improved properties of the plant: improved vitality of the plant; and/or improved plant growth; and/or improved plant development; and/or improved visual appearance; and/or improved plant stand (less plant verse/lodging and/or bigger leaf blade; and/or bigger size; and/or increased plant height; and/or increased tiller number; and/or increased number of side shoots; and/or increased number of flowers per plant; and/or increased shoot growth; and/or enhanced photosynthetic activity (e.g. based on increased stomatal conductance and/or increased $CO_2$ assimilation rate)); and/or earlier flowering; and/or earlier fruiting;; and/or earlier grain maturity; and/or less non-productive tillers; and/or less dead basal leaves; and/or less input needed (such as fertilizers or water); and/or greener leaves; and/or complete maturation under shortened vegetation periods; and/or easier harvesting; and/or faster and more uniform ripening; and/or longer shelf-life; and/or longer panicles; and/or delay of senescence ; and/or stronger and/or more productive tillers; and/or better extractability of ingredients; and/or improved quality of seeds (for being seeded in the following seasons for seed production); and/or reduced production of ethylene and/or the inhibition of its reception by the plant.

Another indicator for the condition of the plant is the "quality" of a plant and/or its products. According to the present invention, enhanced quality means that certain plant characteristics such as the content or composition of certain ingredients are increased or improved by a measurable or noticeable amount over the same factor of the plant produced under the same conditions, but without the application of the mixtures of the present invention. Enhanced quality can be characterized, among others, by following improved properties of the plant or its product: increased nutrient content; and/or increased protein content; and/or increased oil content; and/or increased starch content; and/or increased content of fatty acids; and/or increased metabolite content; and/or increased carotenoid content; and/or increased sugar content; and/or increased amount of essential amino acids; and/or improved nutrient composition; and/or improved protein composition; and/or improved composition of fatty acids; and/or improved metabolite composition; and/or improved carotenoid composition; and/or improved sugar composition; and/or improved amino acids composition ; and/or improved or optimal fruit color; and/or improved leaf color; and/or higher storage capacity; and/or better processability of the harvested products.

Another indicator for the condition of the plant is the plant's tolerance or resistance to biotic and/or abiotic stress factors. Biotic and abiotic stress, especially over longer terms, can have harmful effects on plants.

Biotic stress is caused by living organisms while abiotic stress is caused for example by environmental extremes. According to the present invention, "enhanced tolerance or resistance to biotic and/or abiotic stress factors" means (1.) that certain negative factors caused by biotic and/or abiotic stress are diminished in a measurable or noticeable amount as compared to plants exposed to the same conditions, but without being treated with an inventive mixture and (2.) that the negative effects are not diminished by a direct action of the inventive mixture on the stress factors, e.g. by its fungicidal or insecticidal action which directly destroys the microorganisms or pests, but rather by a stimulation of the plants' own defensive reactions against said stress factors.

Negative factors caused by biotic stress such as pathogens and pests are widely known and are caused by living organisms, such as competing plants (for example weeds), microorganisms (such as phythopathogenic fungi and/or bacteria) and/or viruses.

Negative factors caused by abiotic stress are also well-known and can often be observed as reduced plant vigor (see above), for example:

less yield and/or less vigor, for both effects examples can be burned leaves, less flowers, pre-mature ripening, later crop maturity, reduced nutritional value amongst others.

Abiotic stress can be caused for example by: extremes in temperature such as heat or cold (heat stress / cold stress); and/or strong variations in temperature; and/or temperatures unusual for the specific season; and/or drought (drought stress); and/or extreme wetness; and/or high salinity (salt stress); and/or radiation (for example by increased UV radiation due to the decreasing ozone layer); and/or increased ozone levels (ozone stress); and/or organic pollution (for example by phythotoxic amounts of pesticides); and/or inorganic pollution (for example by heavy metal contaminants).

As a result of biotic and/or abiotic stress factors, the quantity and the quality of the stressed plants decrease. As far as quality (as defined above) is concerned, reproductive development is usually severely affected with consequences on the crops which are important for fruits or seeds. Synthesis, accumulation and storage of proteins are mostly affected by temperature; growth is slowed by almost all types of stress; polysaccharide synthesis, both structural and storage is reduced or modified: these effects result in a decrease in biomass (yield) and in changes in the nutritional value of the product.

As pointed out above, the above identified indicators for the health condition of a plant may be interdependent and may result from each other. For example, an increased resistance to biotic and/or abiotic stress may lead to a better plant vigor, e.g. to better and bigger crops, and thus to an increased yield. Inversely, a more developed root system may result in an increased resistance to biotic and/or abiotic stress. However, these interdependencies and interactions are neither all known nor fully understood and therefore the different indicators are described separately.

In one embodiment the inventive mixtures effectuate an increased yield of a plant or its product. In another embodiment the inventive mixtures effectuate an increased vigor of a plant or its product. In another embodiment the inventive mixtures effectuate in an increased quality of a plant or its product. In yet another embodiment the inventive mixtures effectuate an increased tolerance and/or resistance of a plant or its product against biotic stress. In yet another embodiment the inventive mixtures effectuate an increased tolerance and/or resistance of a plant or its product against abiotic stress.

The invention also relates to agrochemical compositions comprising an auxiliary and the mixtures according to the invention and as defined above.

An agrochemical composition comprises a fungicidally or insecticidally effective amount of component 2) and component 3) and a plan growth and/or seed germination enhancing amount of component 1). Such amounts can vary in a broad range and is dependent on various factors, such as the fungal or pest species to be controlled, the treated cultivated plant or material, the climatic conditions.

In the case of mixtures comprising microorganisms, the microorganisms as used according to the invention can be cultivated continuously or discontinuously in the batch process or in the fed batch or repeated fed batch process. A review of known methods of cultivation will be found in the textbook by Chmiel (Bioprozesstechnik 1. Einführung in die Bioverfahrenstechnik (Gustav Fischer Verlag, Stuttgart, 1991)) or in the textbook by Storhas (Bioreaktoren und periphere Einrichtungen (Vieweg Verlag, Braunschweig/Wiesbaden, 1994)). The culture medium that is to be used must satisfy the requirements of the particular strains in an appropriate manner. Descriptions of culture media for various microorganisms are given in the handbook "Manual of Methods for General Bacteriology" of the American Society for Bacteriology (Washington D. C., USA, 1981). These culture media that can be used according to the invention generally comprise one or more sources of carbon, sources of nitrogen, inorganic salts, vitamins and/or trace elements. Preferred sources of carbon are sugars, such as mono-, di- or polysaccharides. Very good sources of carbon are for example glucose, fructose, mannose, galactose, ribose, sorbose, ribulose, lactose, maltose, sucrose, raffinose, starch or cellulose. Sugars can also be added to the media via complex compounds, such as molasses, or other by-products from sugar refining. It may also be advantageous to add mixtures of various sources of carbon. Other possible sources of carbon are oils and fats such as soybean oil, sunflower oil, peanut oil and coconut oil, fatty acids such as palmitic acid, stearic acid or linoleic acid, alcohols such as glycerol, methanol or ethanol and organic acids such as acetic acid or lactic acid. Sources of nitrogen are usually organic or inorganic nitrogen compounds or materials containing these compounds. Examples of sources of nitrogen include ammonia gas or ammonium salts, such as ammonium sulfate, ammonium chloride, ammonium phosphate, ammonium carbonate or ammonium nitrate, nitrates, urea, amino acids or complex sources of nitrogen, such as corn-steep liquor, soybean flour, soybean protein, yeast extract, meat extract and others. The sources of nitrogen can be used separately or as a mixture. Inorganic salt compounds that may be present in the media comprise the chloride, phosphate or sulfate salts of calcium, magnesium, sodium, cobalt, molybdenum, potassium, manganese, zinc, copper and iron. Inorganic sulfur-containing compounds, for example sulfates, sulfites, dithionites, tetrathionates, thiosulfates, sulfides, but also organic sulfur compounds, such as mercaptans and thiols, can be used as sources of sulfur. Phosphoric acid, potassium dihydrogenphosphate or dipotassium hydrogenphosphate or the corresponding sodium-containing salts can be used as sources of phosphorus. Chelating agents can be added to the medium, in order to keep the metal ions in solution. Especially suitable chelating agents comprise dihydroxyphenols, such as catechol or protocatechuate, or organic acids, such as citric acid. The culture media used may also contain other growth factors, such as vitamins or growth promoters, which include for example biotin, riboflavin, thiamine, folic acid, nicotinic acid, pantothenate and pyridoxine. Growth factors and salts often come from complex components of the media, such as yeast extract, molasses, corn-steep liquor and the like. In addition, suitable precursors can be added to the culture medium. The precise composition of the compounds in the medium is strongly dependent on the particular experiment and must be decided individually for each specific case. Information on media optimization can be found in the textbook "Applied Microbiol. Physiology, A Practical Approach" (Publ. P.M. Rhodes, P.F. Stanbury, IRL Press (1997) p. 53-73, ISBN 0 19 963577 3). Growing media can also be obtained from commercial suppliers, such as Standard 1 (Merck) or BHI (Brain heart infusion, DIFCO) etc. All components of the medium are sterilized, either by heating (20 min at 2.0 bar and 121°C) or by sterile filtration. The components can be sterilized either together, or if necessary separately. All the components of the medium can be present at the start of growing, or optionally can be added continuously or by batch feed. The temperature of the culture of the respective microorganism is normally between 15°C and 45°C, preferably 25°C to 40°C and can be kept constant or can be varied during the experiment. The pH value of the medium should be in the range from 5 to 8.5, preferably around 7.0. The pH value for growing can be controlled during growing by adding basic compounds such as sodium hydroxide, potassium hydroxide, ammonia or ammonia water or acid compounds such as phosphoric acid or sulfuric acid. Antifoaming agents, e.g. fatty acid polyglycol esters, can be used for controlling foaming. To maintain the stability of plasmids, suitable substances with selective action, e.g. antibiotics, can be added to the medium. Oxygen or oxygen-containing gas mixtures, e.g. the ambient air, are fed into the culture in order to maintain aerobic conditions. The temperature of the culture is normally from 20°C to 45°C. Culture is continued until a maximum of the desired product has formed. This is normally achieved within 10 hours to 160 hours. To obtain cell-free extracts, the cells can be disrupted optionally by high-frequency ultrasound, by high pressure, e.g. in a French pressure cell, by osmolysis, by the action of detergents, lytic enzymes or organic solvents, by means of homogenizers or by a combination of several of the methods listed. The methodology of the present invention can further include a step of recovering individual compositions such as cell-free extracts, supernatants, metabolites or alike. The term "recovering" includes extracting, harvesting, isolating or purifying of an extract, supernatant or metabolite e.g. from whole culture broth. Recovering can be performed according to any conventional isolation or purification methodology known in the art including, but not limited to, treatment with a conventional resin (e.g., anion or cation exchange resin, nonionic adsorption resin, etc.), treatment with a conventional adsorbent (e.g., activated charcoal, silicic acid, silica gel, cellulose, alumina, etc.), alteration of pH, solvent extraction (e.g., with a conventional solvent such as an alcohol, ethyl acetate, hexane and the like), distillation, dialysis, filtration, concentration, crystallization, recrystallization, pH adjustment, lyophilization and the like. For example the agent can be recovered from culture media by first removing the microorganisms. The remaining broth is then passed through or over a cation exchange resin to remove unwanted cations and then through or over an anion exchange resin to remove unwanted inorganic anions and organic acids.

According to one embodiment, individual components of the composition according to the invention such as parts of a kit or parts of a binary or ternary mixture may be mixed by the user himself in a spray tank or any other kind of vessel used for applications (e.g seed treater drums, seed pelleting machinery, knapsack sprayer) and further auxiliaries may be added, if appropriate. When living microorganisms, such as biopesticides I strains, form part of such kit, it must be taken care that choice and amounts of the other parts of the kit (e.g. chemcial pesticidal agents) and of the further auxiliaries should not influence the viability of the microbial pesticides in the composition mixed by the user. Especially for bactericides and solvents, compatibility with the respective microbial pesticide has to be taken into account.

Consequently, one embodiment of the invention is a kit for preparing a usable pesticidal composition, the kit compring a) a composition comprising component 1) as defined herein and at least one auxiliary; and b) a composition comprising component 2) as defined herein and at least one auxiliary; and c) a composition comprising at least one auxiliary and active component 3) as defined herein.

The at least one chemical insecticide II and the at least one chemical insecticide III can be converted into customary types of agrochemical compositions, e. g. solutions, emulsions, suspensions, dusts, powders, pastes, granules, pressings, capsules, and mixtures thereof. Examples for composition types are suspensions (e.g. SC, OD, FS), emulsifiable concentrates (e.g. EC), emulsions (e.g. EW, EO, ES, ME), capsules (e.g. CS, ZC), pastes, pastilles, wettable powders or dusts (e.g. WP, SP, WS, DP, DS), pressings (e.g. BR, TB, DT), granules (e.g. WG, SG, GR, FG, GG, MG), insecticidal articles (e.g. LN), as well as gel formulations for the treatment of plant propagation materials such as seeds (e.g. GF). These and further compositions types are defined in the "Catalogue of pesticide formulation types and international coding system", Technical Monograph No. 2, 6th Ed. May 2008, CropLife International.

The compositions are prepared in a known manner, such as described by Mollet and Grubemann, Formulation technology, Wiley VCH, Weinheim, 2001; or Knowles, New developments in crop protection product formulation, Agrow Reports DS243, T&F Informa, London, 2005.

Suitable auxiliaries are solvents, liquid carriers, solid carriers or fillers, surfactants, dispersants, emulsifiers, wetters, adjuvants, solubilizers, penetration enhancers, protective colloids, adhesion agents, thickeners, humectants, repellents, attractants, feeding stimulants, compatibilizers, bactericides, anti-freezing agents, anti-foaming agents, colorants, tackifiers and binders.

Suitable solvents and liquid carriers are water and organic solvents, such as mineral oil fractions of medium to high boiling point, e.g. kerosene, diesel oil; oils of vegetable or animal origin; aliphatic, cyclic and aromatic hydrocarbons, e. g. toluene, paraffin, tetrahydronaphthalene, alkylated naphthalenes; alcohols, e.g. ethanol, propanol, butanol, benzylalcohol, cyclohexanol; glycols; DMSO; ketones, e.g. cyclohexanone; esters, e.g. lactates, carbonates, fatty acid esters, gamma-butyrolactone; fatty acids; phosphonates; amines; amides, e.g. N-methylpyrrolidone, fatty acid dimethylamides; and mixtures thereof.

Suitable solid carriers or fillers are mineral earths, e.g. silicates, silica gels, talc, kaolins, limestone, lime, chalk, clays, dolomite, diatomaceous earth, bentonite, calcium sulfate, magnesium sulfate, magnesium oxide; polysaccharides, e.g. cellulose, starch; fertilizers, e.g. ammonium sulfate, ammonium phosphate, ammonium nitrate, ureas; products of vegetable origin, e.g. cereal meal, tree bark meal, wood meal, nutshell meal, and mixtures thereof.

Suitable surfactants are surface-active compounds, such as anionic, cationic, nonionic and amphoteric surfactants, block polymers, polyelectrolytes, and mixtures thereof. Such surfactants can be used as emusifier, dispersant, solubilizer, wetter, penetration enhancer, protective colloid, or adjuvant. Examples of surfactants are listed in McCutcheon's, Vol.1: Emulsifiers & Detergents, McCutcheon's Directories, Glen Rock, USA, 2008 (International Ed. or North American Ed.).

Suitable anionic surfactants are alkali, alkaline earth or ammonium salts of sulfonates, sulfates, phosphates, carboxylates, and mixtures thereof. Examples of sulfonates are alkylarylsulfonates, diphenylsulfonates, alpha-olefin sulfonates, lignine sulfonates, sulfonates of fatty acids and oils, sulfonates of ethoxylated alkylphenols, sulfonates of alkoxylated arylphenols, sulfonates of condensed naphthalenes, sulfonates of dodecyl- and tridecylbenzenes, sulfonates of naphthalenes and alkylnaphthalenes, sulfosuccinates or sulfosuccinamates. Examples of sulfates are sulfates of fatty acids and oils, of ethoxylated alkylphenols, of alcohols, of ethoxylated alcohols, or of fatty acid esters. Examples of phosphates are phosphate esters. Examples of carboxylates are alkyl carboxylates, and carboxylated alcohol or alkylphenol ethoxylates.

Suitable nonionic surfactants are alkoxylates, N-subsituted fatty acid amides, amine oxides, esters, sugar-based surfactants, polymeric surfactants, and mixtures thereof. Examples of alkoxylates are compounds such as alcohols, alkylphenols, amines, amides, arylphenols, fatty acids or fatty acid esters which have been alkoxylated with 1 to 50 equivalents. Ethylene oxide and/or propylene oxide may be employed for the alkoxylation, preferably ethylene oxide. Examples of N-subsititued fatty acid amides are fatty acid glucamides or fatty acid alkanolamides. Examples of esters are fatty acid esters, glycerol esters or monoglycerides. Examples of sugar-based surfactants are sorbitans, ethoxylated sorbitans, sucrose and glucose esters or alkylpolyglucosides. Examples of polymeric surfactants are home- or copolymers of vinylpyrrolidone, vinylalcohols, or vinylacetate.

Suitable cationic surfactants are quaternary surfactants, for example quaternary ammonium compounds with one or two hydrophobic groups, or salts of long-chain primary amines. Suitable amphoteric surfactants are alkylbetains and imidazolines. Suitable block polymers are block polymers of the A-B or A-B-A type comprising blocks of polyethylene oxide and polypropylene oxide, or of the A-B-C type comprising alkanol, polyethylene oxide and polypropylene oxide. Suitable polyelectrolytes are polyacids or polybases. Examples of polyacids are alkali salts of polyacrylic acid or polyacid comb polymers. Examples of polybases are polyvinylamines or polyethyleneamines.

Suitable adjuvants are compounds, which have a neglectable or even no pesticidal activity themselves, and which improve the biological performance of the compound I on the target. Examples are surfactants, mineral or vegetable oils, and other auxilaries. Further examples are listed by Knowles, Adjuvants and additives, Agrow Reports DS256, T&F Informa UK, 2006, chapter 5.

Suitable thickeners are polysaccharides (e.g. xanthan gum, carboxymethylcellulose), anorganic clays (organically modified or unmodified), polycarboxylates, and silicates.

Suitable bactericides are bronopol and isothiazolinone derivatives such as alkyliso-thiazolinones and benzisothiazolinones. Suitable anti-freezing agents are ethylene glycol, propylene glycol, urea and glycerin. Suitable anti-foaming agents are silicones, long chain alcohols, and salts of fatty acids. Suitable colorants (e.g. in red, blue, or green) are pigments of low water solubility and water-soluble dyes. Examples are inorganic colorants (e.g. iron oxide, titan oxide, iron hexacyanoferrate) and organic colorants (e.g. alizarin-, azo- and phthalocyanine colorants). Suitable tackifiers or binders are polyvinylpyrrolidons, polyvinylacetates, polyvinyl alcohols, polyacrylates, biological or synthetic waxes, and cellulose ethers.

When living microorganisms, such as biopesticides I, form part of the compositions, such compositions can be prepared as compositions comprising besides the active ingredients at least one auxiliary (inert ingredient) by usual means (see e.g. H.D. Burges: Formulation of Micobial Biopestcides, Springer, 1998). Suitable customary types of such compositions are suspensions, dusts, powders, pastes, granules, pressings, capsules, and mixtures thereof. Examples for composition types are suspensions (e.g. SC, OD, FS), capsules (e.g. CS, ZC), pastes, pastilles, wettable powders or dusts (e.g. WP, SP, WS, DP, DS), pressings (e.g. BR, TB, DT), granules (e.g. WG, SG, GR, FG, GG, MG), insecticidal articles (e.g. LN), as well as gel formulations for the treatment of plant propagation materials such as seeds (e.g. GF). Herein, it has to be taken into account that each formulation type or choice of auxiliary should not influence the viability of the microorganism during storage of the composition and when finally applied to the soil, plant or plant propagation material. Suitable formulations are e.g. mentioned in WO 2008/002371, US 6955,912, US 5,422,107.

Examples for suitable auxiliaries are those mentioned earlier herein, wherein it must be taken care that choice and amounts of such auxiliaries should not influence the viability of the microbial pesticides in the composition. Especially for bactericides and solvents, compatibility with the respective microorganism of the respective microbial pesticide has to be taken into account. In addition, compositions with microbial pesticides may further contain stabilizers or nutrients and UV protectants. Suitable stabilzers or nutrients are e.g. alpha-tocopherol, trehalose, glutamate, potassium sorbate, various sugars like glucose, sucrose, lactose and maltodextrine (H.D. Burges: Formulation of Micobial Biopestcides, Springer, 1998). Suitable UV protectants are e.g. inorganic compouns like titan dioxide, zinc oxide and iron oxide pigments or organic compounds like benzophenones, benzotriazoles and phenyltriazines. The compositions may in addition to auxiliaries mentioned for compositions comprising compounds I herein optionally comprise 0.1 - 80% stabilizers or nutrients and 0.1-10% UV protectants. Examples for composition types and their preparation are:

i) Water-soluble concentrates (SL, LS)

10-60 wt% of a pesticide II or the inventive mixture and 5-15 wt% wetting agent (e.g. alcohol alkoxylates) are dissolved in water and/or in a water-soluble solvent (e.g. alcohols) ad 100 wt%. The active substance dissolves upon dilution with water.

ii) Dispersible concentrates (DC)

5-25 wt% of a pesticide II or the inventive mixture and 1-10 wt% dispersant (e. g. polyvinylpyrrolidone) are dissolved in organic solvent (e.g. cyclohexanone) ad 100 wt%. Dilution with water gives a dispersion.

iii) Emulsifiable concentrates (EC)

15-70 wt% of a pesticide II or the inventive mixture and 5-10 wt% emulsifiers (e.g. calcium dodecylbenzenesulfonate and castor oil ethoxylate) are dissolved in water-insoluble organic solvent (e.g. aromatic hydrocarbon) ad 100 wt%. Dilution with water gives an emulsion. iv) Emulsions (EW, EO, ES)
5-40 wt% of a pesticide II or the inventive mixture and 1-10 wt% emulsifiers (e.g. calcium dodecylbenzenesulfonate and castor oil ethoxylate) are dissolved in 20-40 wt% water-insoluble organic solvent (e.g. aromatic hydrocarbon). This mixture is introduced into water ad 100 wt% by means of an emulsifying machine and made into a homogeneous emulsion. Dilution with water gives an emulsion.

v) Suspensions (SC, OD, FS)

In an agitated ball mill, 20-60 wt% of a pesticide II or the inventive mixture are comminuted with addition of 2-10 wt% dispersants and wetting agents (e.g. sodium lignosulfonate and alcohol ethoxylate), 0.1-2 wt% thickener (e.g. xanthan gum) and water ad 100 wt% to give a fine active substance suspension. Dilution with water gives a stable suspension of the active substance. For FS type composition up to 40 wt% binder (e.g. polyvinylalcohol) is added. vi) Water-dispersible granules and water-soluble granules (WG, SG)
50-80 wt% of a pesticide II or the inventive mixture are ground finely with addition of dispersants and wetting agents (e.g. sodium lignosulfonate and alcohol ethoxylate) ad 100 wt% and prepared as water-dispersible or water-soluble granules by means of technical appliances (e. g. extrusion, spray tower, fluidized bed). Dilution with water gives a stable dispersion or solution of the active substance.

vii) Water-dispersible powders and water-soluble powders (WP, SP, WS)

50-80 wt% of a pesticide II or the inventive mixture are ground in a rotor-stator mill with addition of 1-5 wt% dispersants (e.g. sodium lignosulfonate), 1-3 wt% wetting agents (e.g. alcohol ethoxylate) and solid carrier (e.g. silica gel) ad 100 wt%. Dilution with water gives a stable dispersion or solution of the active substance.

viii) Gel (GW, GF)

In an agitated ball mill, 5-25 wt% of a pesticide II or the inventive mixture are comminuted with addition of 3-10 wt% dispersants (e.g. sodium lignosulfonate), 1-5 wt% thickener (e.g. carboxymethylcellulose) and water ad 100 wt% to give a fine suspension of the active substance. Dilution with water gives a stable suspension of the active substance.
ix) Microemulsion (ME)
5-20 wt% of a pesticide II or the inventive mixture are added to 5-30 wt% organic solvent blend (e.g. fatty acid dimethylamide and cyclohexanone), 10-25 wt% surfactant blend (e.g. alcohol ethoxylate and arylphenol ethoxylate), and water ad 100 %. This mixture is stirred for 1 h to produce spontaneously a thermodynamically stable microemulsion.

x) Microcapsules (CS)

An oil phase comprising 5-50 wt% of a pesticide II or the inventive mixture, 0-40 wt% water insoluble organic solvent (e.g. aromatic hydrocarbon), 2-15 wt% acrylic monomers (e.g. methylmethacrylate, methacrylic acid and a di-or triacrylate) are dispersed into an aqueous solution of a protective colloid (e.g. polyvinyl alcohol). Radical polymerization initiated by a radical initiator results in the formation of poly(meth)acrylate microcapsules. Alternatively, an oil phase comprising 5-50 wt% of a pesticide II or the inventive mixture according to the invention, 0-40 wt% water insoluble organic solvent (e.g. aromatic hydrocarbon), and an isocyanate monomer (e.g. diphenylmethene-4,4'-diisocyanatae) are dispersed into an aqueous solution of a protective colloid (e.g. polyvinyl alcohol). The addition of a polyamine (e.g. hexamethylenediamine) results in the formation of polyurea microcapsules. The monomers amount to 1-10 wt%. The wt% relate to the total CS composition.

xi) Dustable powders (DP, DS)

1-10 wt% of a pesticide II or the inventive mixture are ground finely and mixed intimately with solid carrier (e.g. finely divided kaolin) ad 100 wt%.

xii) Granules (GR, FG)

0.5-30 wt% of a pesticide II or the inventive mixture is ground finely and associated with solid carrier (e.g. silicate) ad 100 wt%. Granulation is achieved by extrusion, spray-drying or fluidized bed.

xiii) Ultra-low volume liquids (UL)

1-50 wt% of a pesticide II or the inventive mixture are dissolved in organic solvent (e.g. aromatic hydrocarbon) ad 100 wt%.
The compositions types i) to xiii) may optionally comprise further auxiliaries, such as 0.1-1 wt% bactericides, 5-15 wt% anti-freezing agents, 0.1-1 wt% anti-foaming agents, and 0.1-1 wt% colorants.
The compositions types i) to vii) may optionally comprise further auxiliaries, such as 0,1-1 wt% bactericides, 5-15 wt% anti-freezing agents, 0,1-1 wt% anti-foaming agents, 0.1 - 80% stabilizers or nutrients, 0.1-10% UV protectants and 0,1-1 wt% colorants.
The compositions types i) to xi) may optionally comprise further auxiliaries, such as 0.1-1 wt% bactericides, 5-15 wt% anti-freezing agents, 0.1-1 wt% anti-foaming agents, and 0.1-1 wt% colorants.
The agrochemical compositions generally are characterized in that they contain an effective quantity of the active components as defined above. Generally, they contain between 0.01 and 95%, preferably between 0.1 and 90%, and in particular between 0.5 and 75%, by weight of active components, in particular active substances.
According to one embodiment, the compositions contain the micoorganisms in an amount from $1 \times 10^5$ to $1 \times 10^{12}$ CFU, preferably from $1 \times 10^7$ CFU to $1 \times 10^{12}$ CFU, more preferably from $1 \times 10^9$ CFU to $1 \times 10^{12}$ CFU per gram total weight of the composition. Colony forming unit is a measure of viable microbial cells, in particular bacterial and/or fungal cells or spores.
Solutions for seed treatment (LS), suspoemulsions (SE), flowable concentrates (FS), powders for dry treatment (DS), water-dispersible powders for slurry treatment (WS), water-soluble powders (SS), emulsions (ES), emulsifiable concentrates (EC) and gels (GF) are usually employed for the purposes of treatment of plant propagation materials, particularly seeds.
Preferred examples of seed treatment formulation types or soil application for pre-mix compositions are of WS, LS, ES, FS, WG or CS-type.
The compositions in question give, after two-to-tenfold dilution, active components concentrations of from 0.01 to 60% by weight, preferably from 0.1 to 40%, in the ready-to-use preparations. Application can be carried out before or during sowing. Methods for applying or treating the mixtures and compositions of the invention, respectively, on to plant propagation material, especially seeds include dressing, coating, pelleting, dusting, soaking and in-furrow application methods of the propagation material. Preferably, mixtures and compositions of the invention, respectively, are applied on to the plant propagation material by a method such that germination is not induced, e. g. by seed dressing, pelleting, coating and dusting.
Typically, a pre-mix formulation for seed treatment application comprises 0.5 to 99.9 percent, especially 1 to 95 percent, of the desired ingredients, and 99.5 to 0.1 percent, especially 99 to 5 percent, of a solid or liquid adjuvant (including, for example, a solvent such as water), where the auxiliaries can be a surfactant in an amount of 0 to 50 percent, especially 0.5 to 40 percent, based on the pre-mix formulation. Whereas commercial products will preferably be formulated as concentrates (e.g., pre- mix composition (formulation)), the end user will normally employ dilute formulations (e.g., tank mix composition).
Seed treatment methods for applying or treating inventive mixtures and compositions thereof to plant propagation material, especially seeds, are known in the art, and include dressing, coating, filmcoating, pelleting and soaking application methods of the propagation material. Such methods are also applicable to the combinations according to the invention. In a preferred embodiment, the inventive mixture is applied or treated on to the plant propagation material by a method such that the germination is not negatively impacted. Accordingly, examples of suitable methods for applying (or treating) a plant propagation material, such as a seed, is seed dressing, seed coating or seed pelleting and alike.
It is preferred that the plant propagation material is a seed, seed piece (i.e. stalk) or seed bulb, in particular a seed.
Although it is believed that the present method can be applied to a seed in any physiological state, it is preferred that the seed be in a sufficiently durable state that it incurs no damage during the treatment process. Typically, the seed would be a seed that had been harvested from the field; removed from the plant; and separated from any cob, stalk, outer husk, and surrounding pulp or other non-seed plant material. The seed would preferably also be biologically stable to the extent that the treatment would cause no biological damage to the seed. It is believed that the treatment can be applied to the seed at any time between harvest of the seed and sowing of the seed or during the sowing process (seed directed applications). The seed may also be primed either before or after the treatment.

Even distribution of the ingredients in inventive mixtures and adherence thereof to the seeds is desired during propagation material treatment. Treatment could vary from a thin film (dressing) of the formulation containing the combination, for example, a mixture of active ingredient(s), on a plant propagation material, such as a seed, where the original size and/or shape are recognizable to an intermediary state (such as a coating) and then to a thicker film (such as pelleting with many layers of different materials (such as carriers, for example, clays; different formulations, such as of other active ingredients; polymers; and colourants) where the original shape and/or size of the seed is no longer recognizable.

An aspect of the present invention includes application of the inventive mixtures onto the plant propagation material in a targeted fashion, including positioning the ingredients in the combination onto the entire plant propagation material or on only parts thereof, including on only a single side or a portion of a single side. One of ordinary skill in the art would understand these application methods from the description provided in EP 954213 B1 and WO06/112700.

The inventive mixtures can also be used in form of a "pill" or "pellet" or a suitable substrate and placing, or sowing, the treated pill, or substrate, next to a plant propagation material. Such techniques are known in the art, particularly in EP1124414, WO07/67042, and WO 07/67044. Application of the combinations described herein onto plant propagation material also includes protecting the plant propagation material treated with the combination of the present invention by placing one or more pesticide-containing particles next to a pesticide-treated seed, wherein the amount of pesticide is such that the pesticide-treated seed and the pesticide- containing particles together contain an Effective Dose of the pesticide and the pesticide dose contained in the pesticide-treated seed is less than or equal to the Maximal Non-Phytotoxic Dose of the pesticide. Such techniques are known in the art, particularly in WO 2005/120226.

Application of the combinations onto the seed also includes controlled release coatings on the seeds, wherein the ingredients of the combinations are incorporated into materials that release the ingredients over time. Examples of controlled release seed treatment technologies are generally known in the art and include polymer films, waxes, or other seed coatings, wherein the ingredients may be incorporated into the controlled release material or applied between layers of materials, or both.

Seed can be treated by applying thereto the compound s present in the inventive mixtures in any desired sequence or simultaneously.

The seed treatment occurs to an unsown seed, and the term "unsown seed" is meant to include seed at any period between the harvest of the seed and the sowing of the seed in the ground for the purpose of germination and growth of the plant.

Treatment to an unsown seed is not meant to include those practices in which the active ingredient is applied to the soil but would include any application practice that would target the seed during the planting process.

Preferably, the treatment occurs before sowing of the seed so that the sown seed has been pre-treated with the combination. In particular, seed coating or seed pelleting are preferred in the treatment of the combinations according to the invention. As a result of the treatment, the ingredients in each combination are adhered on to the seed and therefore available for pest control.

The treated seeds can be stored, handled, sowed and tilled in the same manner as any other active ingredient treated seed.

In particular, the present invention relates to a method for protection of plant propagation material from pests and/or improving the health of plants grown from said plant propagation material, wherein the soil, wherein plant propagation material is sown, is treated with an effective amount of an inventive mixture.

In particular, the present invention relates to a method for protection of plant propagation material from pests, wherein the soil, wherein plant propagation material is sown, is treated with an effective amount of an inventive mixture.

In particular, the present invention relates to a method for protection of plant propagation material from harmful fungi, wherein the soil, wherein plant propagation material is sown, is treated with an effective amount of an inventive mixture.

In particular, the present invention relates to a method for protection of plant propagation material from animal pests (insects, acarids or nematodes), wherein the soil, wherein plant propagation material is sown, is treated with an effective amount of an inventive mixture.

When employed in plant protection, the total amounts of active components applied are, depending on the kind of effect desired, from 0.001 to 10 kg per ha, preferably from 0.005 to 2 kg per ha, more preferably from 0.05 to 0.9 kg per ha, in particular from 0.1 to 0.75 kg per ha. In the case of microorganisms as biopesticides I, the application rates for foliar or soil (e. g. in furrow) application methods generally range from about $1 \times 10^6$ to $5 \times 10^{15}$ (or more) CFU/ha, preferably from about 1 x $10^8$ to about 1 x $10^{13}$ CFU/ha, and even more preferably from about 1 x $10^9$ to about 1 x $10^{12}$ CFU/ha.

When employed in plant protection by seed treatment, the amount of the inventive mixtures (based on total weight of active components) is in the range from 0.01-10 kg, preferably from 0.1-1000 g, more preferably from 1-100 g per 100 kilogram of plant propagation material (preferably seeds). In the case of the nitrogen-fixing bacteria IB and microbial pesticides IA, the application rates with respect to plant propagation material preferably range from about 1 x $10^6$ to 1 x $10^{12}$ (or more) CFU/seed. Preferably, the concentration is about 1 x $10^6$ to about 1 x $10^{11}$ CFU/seed. In the case of the nitrogen-fixing bacteria IB and microbial pesticides IA, the application rates with respect to plant propagation material also preferably range from about 1 x $10^7$ to 1 x $10^{14}$ (or more) CFU per 100 kg of seed, preferably from 1 x $10^9$ to about 1 x $10^{12}$ CFU per 100 kg of seed.

When used in the protection of materials or stored products, the amount of active components applied depends on the kind of application area and on the desired effect. Amounts customarily applied in the protection of materials are 0.001 g to 2 kg, preferably 0.005 g to 1 kg, of active components per cubic meter of treated material.

Various types of oils, wetters, adjuvants, fertilizer, or micronutrients, and further pesticides (e.g. herbicides, insecticides, fungicides, growth regulators, safeners, biopesticides) may be added to the mictures or the compositions comprising them as premix or, if appropriate not until immediately prior to use (tank mix). These agents can be admixed with the compositions according to the invention in a weight ratio of 1:100 to 100:1, preferably 1:10 to 10:1.

These further useful active compounds can be fertilizers or micronutrient donors (such as Mo, Zn and / or Co), especially when applied to plant propagation materials.

According to one embodiment, a polyether polymethylsiloxane copolymer may be added to the composition accoding to the invention, preferably in a weight ratio of 1:100 to 100:1, more preferably in a weight ratio of 1:10 to 10:1, in particular in a weight ratio of 1:5 to 5:1 based on the total weight of the component 1) and component 2).

According to a further embodiment, a mineral oil or a vegetable oil may be added to the composition according to the invention, preferably in a weight ratio of 1:100 to 100:1, more preferably in a weight ratio of 1:10 to 10:1, in particular in a weight ratio of 1:5 to 5:1 based on the total weight of component 1) and component 2).

The user applies the composition according to the invention usually from a predosage device, a knapsack sprayer, a spray tank, a spray plane, or an irrigation system. Usually, the agrochemical composition is made up with water, buffer, and/or further auxiliaries to the desired application concentration and the ready-to-use spray liquor or the agrochemical composition according to the invention is thus obtained. Usually, 20 to 2000 liters, preferably 50 to 400 liters, of the ready-to-use spray liquor are applied per hectare of agricultural useful area.

In the mixtures and compositions, the compound ratios are advantageously chosen so as to produce a synergistic effect.

The term "synergstic effect" is understood to refer in particular to that defined by Colby's formula (Colby, S. R., "Calculating synergistic and antagonistic responses of herbicide combinations", Weeds, 15, pp. 20-22, 1967).

The term "synergistic effect" is also understood to refer to that defined by application of the Tammes method, (Tammes, P. M. L., "Isoboles, a graphic representation of synergism in pesticides", Netherl. J. Plant Pathol. 70, 1964).

According to the invention, the solid material (dry matter) of the biopesticides are considered as active components (e.g. to be obtained after drying or evaporation of the extraction medium or filtration of the suspension medium in case of liquid formulations of the microbial pesticides).

The total weight ratios of compositions comprising at least one microbial pesticide in the form of viable microbial cells including dormant forms, can be determined using the amount of CFU of the respective microorganism to calculate the total weight of the respective active component using the following equation that 1 x $10^{10}$ CFU equals one gram of total weight of the respective active component.

In the mixtures and compositions according to the invention the weight ratio of the component 1) and the component 2) generally depends from the properties of the active components used, usually it is in the range of from 1:10,000 to 10,000:1, regularly in the range of from 1:100 to 10,000:1, preferably in the range of from 1:100 to 5,000:1, more preferably in the range of from 1:1 to 1,000:1, even more preferably in the range of from 1:1 to 500:1 and in particular in the range of from 10:1 to 300:1.

According to further embodiments of the mixtures and compositions, the weight ratio of the component 1) and the component 2) usually is in the range of from 20,000:1 to 1:10, often in the range of from 10,000:1 to 1:1, regularly in the range of from 5,000:1 to 5:1, preferably in the range of from 5,000:1 to 10:1, more preferably in the range of from 2,000:1 to 30:1, even more preferably in the range of from 2,000:1 to 100:1 and in particular in the range of from 1,000:1 to 100:1.

According to further embodiments of the mixtures and compositions, the weight ratio of the component 1) and the component 2) usually is in the range of from 20,000:1 to 1:1,000, often in the range of from 10,000:1 to 1:100, regularly in the range of from 5,000:1 to 1:1, preferably in the range of from 5,000:1 to 10:1, more preferably in the range of from 2,000:1 to 30:1, even more preferably in the range of from 2,000:1 to 100:1 and in particular in the range of from 1,000:1 to 100:1.

According to further embodiments of the mixtures and compositions, the weight ratio of the component 1) and the component 2) usually is in the range of from 1:1 to 1:1000, often in the range of from 1:1 to 1:100, regularly in the range of from 1:1 to 1:50, preferably in the range of from 1:1 to 1:20, more preferably in the range of from 1:1 to 1:10, even more preferably in the range of from 1:1 to 1:4 and in particular in the range of from 1:1 to 1:2.

In the mixtures and compositions according to the invention the weight ratio of the component 1) and the component 3) generally depends from the properties of the active components used, usually it is in the range of from 1:10,000 to 10,000:1, regularly in the range of from 1:100 to 10,000:1, preferably in the range of from 1:100 to 5,000:1, more preferably in the range of from 1:1 to 1,000:1, even more preferably in the range of from 1:1 to 500:1 and in particular in the range of from 10:1 to 300:1.

According to further embodiments of the mixtures and compositions, the weight ratio of the component 1) and the component 3) usually is in the range of from 20,000:1 to 1:10, often in the range of from 10,000:1 to 1:1, regularly in the range of from 5,000:1 to 5:1, preferably in the range of from 5,000:1 to 10:1, more preferably in the range of from 2,000:1 to 30:1, even more preferably in the range of from 2,000:1 to 100:1 and in particular in the range of from 1,000:1 to 100:1.

According to further embodiments of the mixtures and compositions, the weight ratio of the component 1) and the component 3) usually is in the range of from 20,000:1 to 1:1,000, often in the range of from 10,000:1 to 1:100, regularly in the range of from 5,000:1 to 1:1, preferably in the range of from 5,000:1 to 10:1, more preferably in the range of from 2,000:1 to 30:1, even more preferably in the range of from 2,000:1 to 100:1 and in particular in the range of from 1,000:1 to 100:1.

According to further embodiments of the mixtures and compositions, the weight ratio of the component 1) and the component 3) usually is in the range of from 1:1 to 1:1000, often in the range of from 1:1 to 1:100, regularly in the range of from 1:1 to 1:50, preferably in the range of from 1:1 to 1:20, more preferably in the range of from 1:1 to 1:10, even more preferably in the range of from 1:1 to 1:4 and in particular in the range of from 1:1 to 1:2.

In the mixtures and compositions according to the invention the weight ratio of the component 2) and the component 3) generally depends from the properties of the active components used, usually it is in the range of from 1:100 to 100:1, regularly in the range of from 1:50 to 50:1, preferably in the range of from 1:20 to 20:1, more preferably in the range of from 1:10 to 10:1, even more preferably in the range of from 1:4 to 4:1 and in particular in the range of from 1:2 to 2:1.

According to further embodiments of the mixtures and compositions, the weight ratio of the component 2) and the component 3) usually is in the range of from 1000:1 to 1:1, often in the range of from 100: 1 to 1:1, regularly in the range of from 50:1 to 1:1, preferably in the range of from 20:1 to 1:1, more preferably in the range of from 10:1 to 1:1, even more preferably in the range of from 4:1 to 1:1 and in particular in the range of from 2:1 to 1:1.

According to further embodiments of the mixtures and compositions, the weight ratio of the component 2) and the component 3) usually is in the range of from 1:1 to 1:1000, often in the range of from 1:1 to 1:100, regularly in the range of from 1:1 to 1:50, preferably in the range of from 1:1 to 1:20, more preferably in the range of from 1:1 to 1:10, even more preferably in the range of from 1:1 to 1:4 and in particular in the range of from 1:1 to 1:2.

In the ternary mixtures, i.e. compositions according to the invention comprising the component 1) and component 2) and component 3) as defined herein, component 1) and component 2) are present in a total weight ratio of from 10,000:1 to 1:100, component 1) and component 3) are present in a total weight ratio of from 10,000:1 to 1:100, and component 2) and component 3) are present in a total weight ratio of from 100:1 to 1:100; wherein the total weight of component 1) in case of microorganisms is calculated on the basis of of the amount of CFU of component 1), wherein $1 \times 10^{10}$ CFU equals one gram of total weight of component 1). These ratios are also suitable for inventive mixtures applied by seed treatment.

In the mixtures, i.e. compositions according to the invention comprising the component 1) and component 2) and component 3), wherein two different nitrogen-fixing bacteria of group IB) are used as component 1), the CFU ratio of both nitrogen-fixing bacteria usually is in the range of from 1:1000 to 1000:1, regularly in the range of from 1:100 to 100:1, preferably in the range of from 1:20 to 20:1, more preferably in the range of from 1:5 to 5:1 and in particular in the range of from 1:2 to 2:1.

In the mixtures, i.e. compositions according to the invention comprising the component 1) and component 2) and component 3), wherein two different microbial pesticides of group IA) are used as component 1), the CFU ratio of both microbial pesticides usually is in the range of from 1:1000 to 1000:1, regularly in the range of from 1:100 to 100:1, preferably in the range of from 1:20 to 20:1, more preferably in the range of from 1:5 to 5:1 and in particular in the range of from 1:2 to 2:1.

The fungicidal action of the mixtures according to the invention can be shown by the tests described below.

A) Microtiter plate tests

The chemical insecticides II and chemical insecticide III were formulated separately as a stock solution having a concentration of 10000 ppm in dimethyl sulfoxide.

The stock solutions of the chemical pesticides were mixed according to the ratio, diluted to the stated concentrations and pipetted onto a filter micro titer plate (MTP). A spore suspension of the pathogen (e.g. *Botrytis cinerea, Septoria tritici,* etc.) in e.g. aqueous biomalt solution was added as well as different concentrations of spores or cells of the biopesticides I.

The measured parameters were compared to the growth of the active compound-free control variant (100%) and the fungus-free and active compound-free blank value to determine the relative growth in % of the pathogens in the respective active compounds.

The expected efficacies of active compound combinations were determined using Colby's formula (Colby, S.R., Calculating synergistic and antagonistic responses of herbicide combinations, Weeds, 15, pp. 20-22, 1967) and compared with the observed efficacies.

$$\text{Colby's formula:} \qquad E = x + y - x \cdot y/100$$

E    expected efficacy, expressed in % of the untreated control, when using the mixture of the active components A and B at the concentrations a and b

x    efficacy, expressed in % of the untreated control, when using the active component A at the concentration a

y    efficacy, expressed in % of the untreated control, when using the active component B at the concentration b.

The insecticidal action of the mixtures according to the invention can be shown by the tests described below.

The microbial pesticide suspensions and chemical insecticide formulations can be prepared as described above. The expected efficacies of the mixtures are determined using Colby's formula as described above and compared with the observed efficacies. Efficacy is determined as insect mortality (number of dead insects vs. number of insects tested in the experiment) and/or % feeding damage.

Use example I-1: Curative action against stink bugs (*Nezara viridula)* in the field

Soybean plants are grown in the field allowing natural infestation with stinkbugs. Plants were sprayed with the respective treatments. Efficacy was determined at 3, 7 and 14 days after treatment.

Use example I-2: Curative action against whiteflies *(Bemisia tabaci)* in the field

Tomato plants were grown in the field allowing natural infestation with whiteflies. Plants were sprayed with the respective treatments. Efficacy on adults was determined at 3, 7, 14 and 21 days after treatment, on larvae at 21 days after treatment.

**Claims**

1.  A mixture comprising, as active components:

    1) at least one biopesticide I from groups IA) and IB) selected from:

        IA) other microbial and biochemical pesticides selected from: *Bacillus amyloliquefaciens, B. amyloliquefaciens* ssp. *plantarum, B. firmus, B. pumilus, B. subtilis, B. simplex, B. megaterium, B. altitudinis, B. mojavensis, B. mycoides, B. solisalsi, Burkholderia* spp., *Coniothyrium minitans, Paecilomyces lilacinus, Paenibacillus al-vei, Pasteuria nishizawa, Pasteuria usage, Penicillium bilaiae, Pseudomonas fluorescens, Pseudomonas putida;* abscisic acid, jasmonic acid, its salts and derivatives thereof, cis-jasmone, methyl jasmonate; harpin protein;
        IB) Nitrogen-fixing bacteria selected from: *Bradyrhizobium japonicum, B. elkanii, Bradyrhizobium* spp., *Bradyrhizobium* sp. (Arachis), *Bradyrhizobium* sp. (Vigna), *B. liaoningense, B. lupine; Azospirillum brasilense, A. amazonense,* A. *lipoferum,* A. *irakense,* A. *halopraeferens; Delftia acidovorans, Glomus intraradices; Mesorhizobium* spp., *Mesorhizobium ciceri, M. huakii, M. loti; Rhizobium leguminosarum* bv. *phaseoli, R. leguminosarum* bv. *trifolii, R. leguminosarum* bv. *viciae, R. tropici, Sinorhizobium meliloti;*
        and

2) at least one chemical insecticide II from groups J) to O) selected from:

J) GABA antagonist compounds selected from: fipronil, ethiprole, vaniliprole, pyrafluprole, pyriprole, 5-amino-1-(2,6-dichloro-4-methyl-phenyl)-4-sulfinamoyl-1 H-pyrazole-3-carbothioic acid amide;

K) lepidopteran-specific ryanodine receptor inhibitors selected from: chlorantraniliprole and flubendiamide;

L) cross-spectrum ryanodine receptor inhibitor: cyantraniliprole;

M) pyrethroid sodium channel modulators selected from: tefluthrin, bifenthrin, cypermethrin, alpha-cypermethrin, cyfluthrin, beta-cyfluthrin, lambda-cyhalothrin, del-tamethrin, esfenvalerate, etofenprox, fenvalerate, flucythrinate, permethrin;

N) systemically-active neonicotinoid compounds: clothianidin, imidacloprid, thiamethoxam, dinotefuran, acetamiprid, flupyradifurone, thiacloprid, triflumezopyrim, nitenpyram;

O) Acetylcholinesterase inhibitors, chloride channel activators and sulfoximines: sulfoxaflor, acephate, chlorpyrifos, thiodicarb, abamectin, spinosad.

and

3) at least one chemical insecticide III from the groups J') to O') selected from:

J') GABA antagonist compounds selected from: fipronil, ethiprole, vaniliprole, pyrafluprole, pyriprole, 5-amino-1-(2,6-dichloro-4-methyl-phenyl)-4-sulfinamoyl-1 H-pyrazole-3-carbothioic acid amide;

K') lepidopteran-specific ryanodine receptor inhibitors selected from: chlorantraniliprole and flubendiamide;

L') cross-spectrum ryanodine receptor inhibitor: cyantraniliprole;

M') pyrethroid sodium channel modulators selected from: tefluthrin, bifenthrin, cyper-methrin, alpha-cypermethrin, cyfluthrin, beta-cyfluthrin, lambda-cyhalothrin, del-tamethrin, esfenvalerate, etofenprox, fenvalerate, flucythrinate, permethrin;

N') systemically-active neonicotinoid compounds: clothianidin, imidacloprid, thiamethoxam, dinotefuran, acetamiprid, flupyradifurone, thiacloprid, triflumezopyrim, nitenpyram;

O') Acetylcholinesterase inhibitors, chloride channel activators and sulfoximines: sulfoxaflor, acephate, chlorpyrifos, thiodicarb, abamectin, spinosad;

with the proviso that the chemical insecticide II and chemical insecticide III are not identical.

**2.** The mixture according to claim 1, wherein component 1) and component 2) and component 3) are present in a synergistically effective amount.

**3.** The mixture according to any of the claims 1 to 2, wherein component 1) and component 2) are present in a total weight ratio of from 10,000:1 to 1:100, component 1) and component 3) are present in a total weight ratio of from 10,000:1 to 1:100, and component 2) and component 3) are present in a total weight ratio of from 100:1 to 1:100; wherein the total weight of component 1) in case of microorganisms is calculated on the basis of of the amount of CFU of component 1), wherein $1 \times 10^{10}$ CFU equals one gram of total weight of component 1).

**4.** The mixture according to any of the claims 1 to 3, wherein component 1) is at least one biopesticide I from group IA) selected from *Bacillus amyloliquefaciens* ssp. *plantarum* MBI600, *B. amyloliquefaciens* ssp. *plantarum* D747, *B. amyloliquefaciens* ssp. *plantarum* FZB24, *B. amyloliquefaciens* ssp. *plantarum* FZB42, *B. amyloliquefaciens* ssp. *plantarum* GB03, *B. amyloliquefaciens* ssp. *plantarum* QST-713, *B. amyloliquefaciens* ssp. *plantarum* TJ1000, *B. amyloliquefaciens* AP-136, *B. amyloliquefaciens* AP-188, *B. amyloliquefaciens* AP-218, *B. amyloliquefaciens* AP-219, *B. amyloliquefaciens* AP-295, *B. altitudinis* 41KF2b, *B. firmus* CNCM I-1582, *B. megaterium* H491, *B. megaterium* J142, *B. megaterium* M018, *B. mojavensis* AP-209, *B. mojavensis* SR11, *B. mycoides* AQ726, *B. mycoides* J, *B. pumilus* GB34, *B. pumilus* GHA 180, B. pumilus INR-7, *B. pumilus* KFP9F, *B. pumilus* QST 2808, *B. simplex ABU* 288, *B. subtilis* CX-9060, *B. subtilis* FB17, *B. subtilis* GB07, *Burkholderia* sp. A396, *Coniothyrium minitans* CON/M/91-08, *Paecilomyces lilacinus* 251, *Paecilomyces lilacinus* BCP2, *Paenibacillus alvei* NAS6G6, *Paenibacillus polymyxa* PKB1, *Paenibacilllus popilliae* 14F-D80, *P. popilliae* KLN 3, *Pasteuria nishizawae* Pn1, *Pasteuria* sp, Ph3, *Pasteuria* sp. Pr3, *Pasteuria* sp. ATCC PTA-9643, *Pasteuria usgae* BL1, *Penicillium bilaiae* NRRL 50162, *P. bilaiae* NRRL 50169, *P. bilaiae* ATCC 18309, *P. bilaiae* ATCC 20851, *P. bilaiae* ATCC 22348, *Pseudomonas fluorescens* A506, *P. fluorescens* ATCC 13525, *P. fluorescens* CHA0, *P. fluorescens* CL 145A, *P. fluorescens* NCIB 12089, *P. fluorescens* Pf-5, *P. fluorescens* WCS374, *P. fluorescens* and P. *putida* ATCC 202153; cis-jasmone, methyl jasmonate and harpin protein;

or wherein component 1) is at least one biopesticide I from group IB) selected from *Bradyrhizobium elkanii* SEMIA 5019, *B. elkanii* SEMIA 587, *B. elkanii* U-1301, *B. elkanii* U-1302, *B. elkanii* USDA 3254, *B. elkanii* USDA 76, *B.*

*elkanii* USDA 94, *B. japonicum* 532c, *B. japonicum* E-109, *B. japonicum* G49, *B. japonicum* SEMIA 5079, *B. japonicum* SEMIA 5080, *B. japonicum* SEMIA 566, *B. japonicum* SEMIA 586, *B. japonicum* TA-11, *B. japonicum* USDA 110, *B. japonicum* USDA 121, *B. japonicum* USDA 3, *B. japonicum* USDA 31, *B. japonicum* USDA 76, *Bradyrhizobium* sp. (Arachis) CB1015, *Bradyrhizobium* sp. (Arachis) SEMIA 6144, *Bradyrhizobium* sp. (Arachis) SEMIA 6462, *Bradyrhizobium* sp. (Arachis) SEMIA 6464, *Azospirillum amazonense* SpY2, A. *brasilense* AZ39, A. *brasilense* Cd, *A. brasilense* Sp 245, A. *brasilense* Ab-V5, A. *brasilense* Ab-V6, *Azospirillum brasilense* XOH, *Azospirillum lipoferum* Sp31, *Bradyrhizobium* sp. (Vigna) PNL1, *Mesorhizobium* sp. WSM1497, *Rhizobium leguminosarum* bv. *phaseoli* RG-B10, *R. leguminosarum* bv. *phaseoli*, *R. leguminosarum* bv. *trifolii* 095, *R. leguminosarum* bv. *trifolii* CB782, *R. leguminosarum* bv. *trifolii* CC1099, *R. leguminosarum* bv. *trifolii* CC275e, *R. leguminosarum* bv. *trifolii* CC283b, *R. leguminosarum* bv. *trifolii* RP113-7, *R. leguminosarum* bv. *trifolii* TA1, *R. leguminosarum* bv. trifolii WSM1325, *R. leguminosarum* bv. *trifolii* WSM2304, *R. leguminosarum* bv. *viciae* P1 NP3Cst, *R. leguminosarum* bv. viciae RG-P2, *R. leguminosarum* bv. viciae SU303, *R. leguminosarum* bv. *viciae* WSM1455, *R. tropici* CC511, R. *tropici* CIAT 899, *R. tropici* H12, *R. tropici* PRF 81, *Sinorhizobium meliloti* NRG185, S. *meliloti* RCR2011 and S. *meliloti* RRI128.

5. The mixture according to any of the claims 1 to 3, wherein component 1) i is at least one biopesticide I from group IA) selected from *Bacillus amyloliquefaciens* ssp. *plantarum, B. amyloliquefaciens, B. firmus, B. pumilus, B. subtilis, B. simplex, B. megaterium; Burkholderia* spp., *Coniothyrium minitans, Paecilomyces lilacinus, Paenibacillus alvei, Penicillium bilaiae, Pasteuria nishizawa;* cis-jasmone, methyl jasmonate, harpin protein; or wherein component 1) is at least one biopesticide I from group IB) selected from *Bradyrhizobium japonicum, Bradyrhizobium elkanii* and *Azospirillum brasilense.*

6. The mixture according to claim 5, wherein component 1) is at least one biopesticide I from group IA) selected from *Bacillus amyloliquefaciens* ssp. *plantarum* MBI600, *B. amyloliquefaciens* ssp. *plantarum* FZB24, *B. amyloliquefaciens* ssp. *plantarum* FZB42, *B. amyloliquefaciens* ssp. *plantarum* D747, *B. amyloliquefaciens* ssp. *plantarum* QST-713, *B. amyloliquefaciens* ssp. *plantarum* TJ1000, *B. firmus* CNCM I-1582, *B. pumilus* GHA 180, B. pumilus INR-7, *B. pumilus* QST 2808, *B. simplex* ABU 288, *B. subtilis* FB17, *Burkholderia* sp. A396, *Coniothyrium minitans* CON/M/91-08, *Paecilomyces lilacinus* 251, *Paenibacillus alvei* NAS6G6, *Pasteuria nishizawae* Pn1, *P. bilaiae* ATCC 18309, *P. bilaiae* ATCC 20851, *P. bilaiae* ATCC 22348; cis-jasmone, methyl jasmonate and harpin protein; or wherein component 1) is at least one biopesticide I from group IB) selected from *Bradyrhizobium elkanii* SEMIA 5019, *B. elkanii* SEMIA 587, *B. japonicum* 532c, *B. japonicum* E-109, *B. japonicum* SEMIA 5079 and *B. japonicum* SEMIA 5080, *Azospirillum brasilense* Sp 245 and *A. brasilense* Ab-V5, and A. *brasilense* Ab-V6 (1.6).

7. The mixture according to any of the claims 1 to 6, wherein component 2) is at least one chemical insecticide II from the groups J) to O) selected from:

   J) GABA antagonist compound: fipronil;
   K) lepidopteran-specific ryanodine receptor inhibitor: chlorantraniliprole;
   L) cross-spectrum ryanodine receptor inhibitor: cyantraniliprole;
   M) pyrethroid sodium channel modulators selected from: tefluthrin, bifenthrin, cypermethrin, alpha-cypermethrin;
   N) systemically-active neonicotinoid compounds: clothianidin, imidacloprid, thiamethoxam, dinotefuran, acetamiprid, flupyradifurone, thiacloprid, triflumezopyrim;
   O) Acetylcholinesterase inhibitors, chloride channel activators and sulfoximines: sulfoxaflor, acephate, chlorpyrifos, thiodicarb, abamectin, and spinosad.

8. The mixture according to claim 7, wherein component 2) is at least one chemical insecticide II from the groups J), K) and L) selected from:

   J) GABA antagonist compound: fipronil;
   K) lepidopteran-specific ryanodine receptor inhibitor: chlorantraniliprole; and
   L) cross-spectrum ryanodine receptor inhibitor: cyantraniliprole.

9. The mixture according to any of the claims 1 to 8, wherein component 3) is at least one chemical insecticide III from the groups J') to O') selected from:

   J') GABA antagonist compound: fipronil;
   K') lepidopteran-specific ryanodine receptor inhibitor: chlorantraniliprole;
   L') cross-spectrum ryanodine receptor inhibitor: cyantraniliprole;
   M') pyrethroid sodium channel modulators selected from: tefluthrin, bifenthrin, cypermethrin, alpha-cypermeth-

54

rin;

N') systemically-active neonicotinoid compounds: clothianidin, imidacloprid, thiamethoxam, dinotefuran, acetamiprid, flupyradifurone, thiacloprid, triflumezopyrim;

O') Acetylcholinesterase inhibitors, chloride channel activators and sulfoximines: sulfoxaflor, acephate, chlorpyrifos, thiodicarb, abamectin, and spinosad.

10. The mixture according to claim 9, wherein component 3) is at least one chemical insecticide III from the groups L') and N') selected from:

L') cross-spectrum ryanodine receptor inhibitor: cyantraniliprole;
N') systemically-active neonicotinoid compounds: clothianidin, imidacloprid, thiamethoxam and triflumezopyrim.

11. The mixture according to claim 10, wherein component 3) is at least one chemical insecticide III selected from cyantraniliprole, clothianidin and thiamethoxam.

12. An agrochemical composition, comprising an auxiliary and a mixture as defined in any one of claims 1 to 11.

13. The agrochemical composition according to claim 12, further comprising as active component 4) a further pesticide.

14. A kit for preparing a usable agrochemical composition, the kit compring

a) a composition comprising component 1) as defined in any of the claims 1 to 6 and at least one auxiliary; and
b) a composition comprising component 2) as defined in any of the claims 1, 2, 3, 7 and 8 and at least one auxiliary; and
c) a composition comprising component 3) as defined in any of the claims 1, 2, 3, 9, 10 and 11 and at least one auxiliary.

15. A method for controlling phytopathogenic fungi, insects or other pests and/or improving the health of plants and/or regulating plant growth, comprising treating the plants, the plant propagation material or the soil with an effective amount of the mixture as defined in any one of claims 1 to 11 or of the composition as defined in any of the claims 12 to 13 or of the kit as defined in claim 14.

16. A plant propagation material, comprising the mixture as defined in any one of claims 1 to 11 or the composition as defined in any of the claims 12 to 13 or the kit as defined in claim 14 in an amount of from 0.01 g to 10000 g per 100 kg of plant propagation material.

**EUROPEAN SEARCH REPORT**

Europäisches Patentamt
European Patent Office
Office européen des brevets

Application Number

EP 14 17 5140

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2014/086753 A2 (BAYER CROPSCIENCE AG) 12 June 2014 (2014-06-12) | 1,2,4,6, 12-16 | INV. A01N63/00 |
| Y | * page 35; claims 1-3, 6, 9, 10 * | 1-16 | A01N63/02 A01P3/00 |
| X | WO 2014/086856 A1 (BASF AGRO B.V.) 12 June 2014 (2014-06-12) | 1,2, 12-16 | A01P7/04 A01N25/00 |
| Y | * claims 1, 2, 8, 18, 19, 21 * | 1-16 | |
| Y | WO 2014/053398 A1 (BASF SE) 10 April 2014 (2014-04-10) * the whole document * | 1-16 | |
| Y | WO 2014/086750 A2 (BAYER CROPSCIENCE AG) 12 June 2014 (2014-06-12) * claims 1, 6, 8, 10, 15 * | 1-16 | |

TECHNICAL FIELDS
SEARCHED        (IPC)

A01N

The present search report has been drawn up for all claims

| Place of search | Date of completion of the search | Examiner |
|---|---|---|
| Munich | 10 December 2014 | Breimaier, Waltraud |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 14 17 5140

This annex lists the patent family members relating to the patent documents cited in  the above-mentioned European search report.
The members are as contained in the European Patent Office EDP file on
The European Patent Office is in no way liable for these particulars which are merely given for the purpose of information.

10-12-2014

| Patent document cited in search report | | Publication date | Patent family member(s) | Publication date |
|---|---|---|---|---|
| WO 2014086753 | A2 | 12-06-2014 | NONE | |
| WO 2014086856 | A1 | 12-06-2014 | NONE | |
| WO 2014053398 | A1 | 10-04-2014 | NONE | |
| WO 2014086750 | A2 | 12-06-2014 | NONE | |

EPO FORM P0459

For more details about this annex : see Official Journal of the European Patent Office, No. 12/82

EP 2 962 567 A1

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8445255 B
- US 20130236522 A1
- US 20120149571 A1
- CA 2471555 A1
- US 6406690 B
- US 5733544 A
- WO 2009126473 A
- WO 2009124707 A
- US 20140051571 A1
- US 5906818 A
- WO 2014029697 A
- US 20100260735 A
- WO 2011109395 A
- US 5021076 A
- US 7262151 B
- WO 2013032693 A
- WO 1996021358 A
- WO 200357861 A
- WO 199102051 A
- WO 2010085795 A
- WO 2012064527 A
- WO 201080619 A
- US 5248500 A
- WO 2010080619 A
- US 5026417 A
- WO 1995017806 A
- WO 2010037228 A
- EP 0210734 A1
- WO 2004024865 A
- WO 2008002371 A
- US 6222100 B
- WO 0182685 A
- WO 0026390 A
- WO 9741218 A
- WO 9802526 A
- WO 9802527 A
- WO 04106529 A
- WO 0520673 A
- WO 0314357 A
- WO 0313225 A
- WO 0314356 A
- WO 0416073 A
- WO 00026390 A
- WO 98002526 A
- WO 03014357 A
- WO 9200377 A
- EP 242236 A
- EP 242246 A
- US 5559024 A
- WO 02015701 A
- EP 374753 A
- WO 93007278 A
- WO 9534656 A
- EP 427529 A
- EP 451878 A
- WO 0318810 A
- WO 0352073 A
- WO 03018810 A
- EP 392225 A
- US 6955912 B
- US 5422107 A
- EP 954213 B1
- WO 06112700 A
- EP 1124414 A
- WO 0767042 A
- WO 0767044 A
- WO 2005120226 A

**Non-patent literature cited in the description**

- *Proc. 9th Int. and 1st Latin American PGPR meeting,* 2012, ISBN 978-958-46-0908-3, 60
- *Eur. J. Soil Biol,* 2009, vol. 45 (1), 28-35
- *Plant Soil,* 2010, vol. 331, 413-425
- *Proc. 9th Int. and 1st Latin American PGPR meeting,* 2012, 60
- *Int. J. Syst. Evol. Microbiol.,* 2006, vol. 56 (7), 1465-1473
- *J. Microbiol. Biotechnol.,* 2007, vol. 17 (2), 280-286
- *J. Plant Dis. Prot.,* 1998, vol. 105, 181-197
- *Phytopathol.,* 1996, vol. 86 (11), 36
- *Int. J. Microbiol. Res.,* 2011, vol. 3 (2), 120-130
- *Federal Register,* vol. 77 (7), 1633-1637
- *System. Appl. Microbiol,* 2004, vol. 27, 372-379
- *FEMS Microbiol. Letters,* 2010, vol. 303 (2), 123-131
- *Revista Brasileira de Ciencia do Solo,* 2011, vol. 35 (3), ISSN 0100-0683, 739-742
- *Appl. Environ. Microbiol.,* 2007, vol. 73 (8), 2635

- *Can. J. Plant. Sci.,* 1990, vol. 70, 661-666
- *Eur. J. Soil Biol.,* vol. 45, 28-35
- *Biol. Fertil. Soils,* vol. 47, 81-89
- *C. R. Acad. Agric. Fr.,* 1987, vol. 73, 163-171
- *Appl. Environ. Microbiol.,* 1990, vol. 56, 2399-2403
- *Appl. Environ. Microbiol.,* 1994, vol. 60, 940-94
- *Crop Science,* 1986, vol. 26 (5), 911-916
- *Appl. Environ. Microbiol.,* 2005, vol. 71, 7041-7052
- *Australian J. Exp. Agricult.,* 1996, vol. 36 (1), 63-70
- *Science,* 1992, vol. 257, 85-88
- *Can. J. Microbiol.,* 2002, vol. 48, 279-284
- *World J. Microbiol. Biotechn.,* 2007, vol. 23 (6), ISSN 0959-3993, 845-851
- *Crop Protection,* 2008, vol. 27, 352-361
- *Acta agriculturae Slovenica,* 2013, vol. 101 (2), 263-275
- *Federal Register,* 02 February 2011, vol. 76 (22), 5808
- *J. Nematol.,* 2010, vol. 42 (2), 87-90
- *J. NEMATOL,* 2011, vol. 43 (2), 101-109
- *Fertilizer Res.,* 1994, vol. 39, 97-103
- *Can. J. Plant Sci.,* 1998, vol. 78 (1), 91-102
- *Phytopathol,* 2007, vol. 97 (2), 244-249
- *Mol. Plant Microbe Interact.,* 1992, vol. 5 (1), 4-13
- *J. Invertebr. Pathol.,* 2013, vol. 113 (1), 104-14
- *Biol. Control,* 1995, vol. 85 (10), 1301-1305
- *Int. J. Syst. Bacteriol.,* 1996, vol. 46 (1), 240-244
- *Int. J. Syst. Evol. Microbiol.,* 2000, vol. 50, 159-170
- *Proc. New Zealand Grassland Assoc.,* 1994, vol. 56, 101-105
- *Microbiol.,* 2007, vol. 153, 3184-3195
- *Appl. Environ. Microbiol.,* 1982, vol. 44 (5), 1096-1101
- *Appl. Environ. Microbiol.,* 1985, vol. 49 (1), 127-131
- *Stand. Genomic Sci.,* 2010, vol. 2 (3), 347-356
- Inoculating Legumes: A Practical Guide. 2012
- **URUGUAY.** *Stand. Genomic Sci.,* 1998, vol. 2 (1), 66-76
- *New Phytol.,* 2007, vol. 176, 680-690
- *NEW PHYTOL,* 2008, vol. 179 (1), 224-235
- *Agronomy, N.Z.,* 2006, vol. 36, 4-35
- *Rev. Ciênc. Agron.,* October 2013, vol. 44 (4
- *Appl. Microbiol. Biotechnol.,* 2012, vol. 93 (5), 2035-49
- *Soil Biology & Biochemistry,* 2007, vol. 39, 867-876
- *BMC Microbiol.,* 2012, vol. 12, 84
- *Mol. Gen. Genomics,* 2004, vol. 272, 1-17
- **CHMIEL.** Bioprozesstechnik 1. Einführung in die Bioverfahrenstechnik. Gustav Fischer Verlag, 1991
- **STORHAS.** Bioreaktoren und periphere Einrichtungen. Vieweg Verlag, 1994
- Manual of Methods for General Bacteriology. American Society for Bacteriology, 1981
- **P.M. RHODES ; P.F. STANBURY.** Applied Microbiol. Physiology, A Practical Approach. IRL Press, 1997, 53-73
- Catalogue of pesticide formulation types and international coding system. Technical Monograph No. 2. CropLife International, May 2008
- **MOLLET ; GRUBEMANN.** Formulation technology. Wiley VCH, 2001
- New developments in crop protection product formulation. **KNOWLES.** Agrow Reports DS243. T&F Informa, 2005
- McCutcheon's, Vol.1: Emulsifiers & Detergents. McCutcheon's Directories, 2008
- Adjuvants and additives. **KNOWLES.** Agrow Reports DS256. T&F Informa, 2006
- **H.D. BURGES.** Formulation of Micobial Biopesticides. Springer, 1998
- **COLBY, S. R.** Calculating synergistic and antagonistic responses of herbicide combinations. *Weeds,* 1967, vol. 15, 20-22
- **TAMMES, P. M. L.** Isoboles, a graphic representation of synergism in pesticides. *Netherl. J. Plant Pathol.,* 1964, 70
- **COLBY, S.R.** Calculating synergistic and antagonistic responses of herbicide combinations. *Weeds,* 1967, vol. 15, 20-22